(19) Europäisches Patentamt
European Patent Office
Office européen des brevets

(11) EP 3 423 545 B1

(12) **EUROPEAN PATENT SPECIFICATION**

(45) Date of publication and mention of the grant of the patent:
**09.09.2020 Bulletin 2020/37**

(21) Application number: **17704665.3**

(22) Date of filing: **07.02.2017**

(51) Int Cl.:
***G02F 1/1333*** *(2006.01)* ***C09K 19/04*** *(2006.01)*
***C09K 19/52*** *(2006.01)*

(86) International application number:
**PCT/EP2017/000170**

(87) International publication number:
**WO 2017/148567 (08.09.2017 Gazette 2017/36)**

(54) **POLYMERISABLE LIQUID CRYSTAL MATERIAL AND POLYMERISED LIQUID CRYSTAL FILM**

POLYMERISIERBARES FLÜSSIGKRISTALLMATERIAL UND POLYMERISIERTER FLÜSSIGKRISTALLFILM

MATÉRIAU POLYMÉRISABLE À CRISTAUX LIQUIDES ET FILM POLYMÉRISÉ À CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.03.2016 EP 16158120**

(43) Date of publication of application:
**09.01.2019 Bulletin 2019/02**

(73) Proprietor: **Merck Patent GmbH**
**64293 Darmstadt (DE)**

(72) Inventors:
- **MULCAHY, Stephen**
  **Southampton S015 2LD (GB)**
- **GARDINER, Iain**
  **Chandlers Ford S053 1SE (GB)**
- **BRADFORD, Jack**
  **Southampton SO15 2TF (GB)**

(56) References cited:
**WO-A1-2009/086911 JP-A- 2007 321 033**
**JP-A- 2008 044 989**

EP 3 423 545 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of Invention

The invention relates to a polymerisable LC material comprising at least one monoreactive mesogenic compound, at least one di- or multireactive mesogenic compound and pentaerythritol tetrakis(3,5-di-tert-butyl-4-hydroxyhydrocinnamate). Furthermore, the present invention relates also to a method for its preparation, a polymer film with improved thermal durability obtainable from the corresponding polymerisable LC material, to a method of preparation of such polymer film, and to the use of such polymer film and said polymerisable LC material for optical, electrooptical, decorative or security devices.

### Background and Prior Art

Polymerisable liquid crystal (LC) materials are commonly used for the preparation of optical films in liquid crystal displays, such as for example described in EP 0 940 707 B1, EP 0 888 565 B1 and GB 2 329 393 B1. These materials usually contain a certain amount of compounds with two or more polymerisable groups (di- or multi-functional), which are crosslinked to give a hard film.

Polymerisable liquid crystal (LC) materials, while stable at room temperature, can degrade when subjected to increased temperatures. For example when heated for a period of time the retardance decreases and as such, the performance of the optical film degrades over time. This can be attributed to polymer shrinkage, which is a decrease in thickness of the optical film, and which reduces the retardance of the passing light in accordance to $R = d\Delta n$, wherein d is the thickness of the birefringent film, and $\Delta n$ is the birefringence. The polymer shrinkage can be reduced by utilizing polymerisable compounds having more than one polymerizable group and therefore capable of forming a more crosslinked and more rigid polymer. However, the desired properties of an optical retardation film, like e.g. uniform alignment of the mesogenic compounds, film structure, temperature stability and optical performance, are highly dependent from the composition of the polymerisable liquid crystal material. For example, one possible way to adjust the alignment profile in the direction perpendicular to the film plane is the appropriate selection of the ratio of monoreactive mesogenic compounds, i.e. compounds with one polymerizable group, and direactive mesogenic compounds, i.e. compounds with two polymerizable groups.

Another possible mechanism for degradation of the polymerised film is the thermo-oxidative degradation. This is the breakdown of a polymer network catalysed by oxidation at high temperatures.

As commonly known, antioxidant additives, or short antioxidants, can be used to reduce the thermo-oxidative degradation of polymers when subjected to increased temperatures. This is especially important when optical films are utilized for an in-cell application due to the high temperatures. In particular, the optical film has to endure when annealing the polyimide layer in the LC cell.

In this regards, the documents WO 2009/86911 A1 and JP 5354238 B1 describe polymerisable liquid crystal (LC) materials comprising the commercially available antioxidant Irganox®1076.

Further, JP 2008-044989 A2 describes a polymerizable liquid crystal material, which comprises a phosphorus-based antioxidant. Explicitly, only a mixture consisting of two types of direactive mesogenic compounds is disclosed in combination with the antioxidant additives Irganox®1010 (pentaerythritol tetrakis(3,5-di-tert-butyl-4-hydroxyhydrocinnamate)) and the phosphorus-based antioxidant Irgafos®168.

All of the above-described materials have the distinct disadvantage that the thermal durability of the resulting polymer films is not high enough, especially in view of modern applications and/or their utilization for in-cell applications, or their application bandwidth is limited, due to the utilized LC material.

Therefore, there is still a need for new and preferably improved, polymerisable liquid crystal materials or mixtures, which do not exhibit the drawbacks of prior art materials or if so, do only exhibit them to a less extent.

Advantageously, the polymerisable LC material, should be utilized for the preparation of different, uniform aligned polymer films, and should, in particular at the same time,

- show favourable adhesion to a substrate,
- be highly transparent to VIS-light,
- exhibit an reduced yellow colouration over time (yellowing) and
- show a favourable high temperature stability, and in addition,
- the uniform aligned polymer films should be produced by compatible, commonly known methods for the mass production.

Other aims of the present invention are immediately evident to the person skilled in the art from the following detailed description.

Surprisingly, the inventors of the present invention have found that the above aims can be achieved and the mentioned drawbacks of prior art polymerisable LC materials can be overcome by using a polymerisable LC material according to claim 1.

## Summary of the invention

Thus the invention relates to a polymerisable LC material comprising at least one monoreactive mesogenic compound selected from compounds of formula MRM as given below, at least one di- or multireactive mesogenic compound selected from compounds of formula DRM as given below and pentaerythritol tetrakis(3,5-di-tert-butyl-4-hydroxyhydrocinnamate).

Further, the invention also relates to a corresponding a method of production of the polymerisable LC material.

The invention further relates to a polymer film obtainable, preferably obtained, from the polymerisable LC material, as described above and below and to a method of production of a polymer film, as described above and below.

The invention further relates to a method of increasing the durability of a polymer film, obtainable, preferably obtained, from a polymerisable LC material as described above and below, by adding pentaerythritol tetrakis(3,5-di-tert-butyl-4-hydroxyhydrocinnamate) to the LC material before polymerisation.

The invention further relates to the use of a polymer film or polymerisable LC material, as described above and below, in optical, electrooptical, information storage, decorative and security applications, like liquid crystal displays, projection systems, polarisers, compensators, alignment layers, circular polarisers, colour filters, decorative images, liquid crystal pigments, reflective films with spatially varying reflection colours, multicolour images, non-forgeable documents like identity or credit cards or banknotes.

The invention further relates to a optical component or device, polariser, patterned retarder, compensator, alignment layer, circular polariser, colour filter, decorative image, liquid crystal lens, liquid crystal pigment, reflective film with spatially varying reflection colours, multicolour image for decorative or information storage, comprising at least one a polymer film or polymerisable LC material, as described above and below

The invention further relates to a liquid crystal display comprising at least one polymer film or polymerisable LC material or an optical component, as described above and below.

The invention further relates to authentification, verification or security marking, coloured or multicolour image for security use, non-forgeable object or document of value like an identity or credit card or a banknote, comprising at least one polymer film or polymerisable LC material or a optical component as described above and below.

## Terms and definitions

As used herein, the term "polymer" will be understood to mean a molecule that encompasses a backbone of one or more distinct types of repeating units (the smallest constitutional unit of the molecule) and is inclusive of the commonly known terms "oligomer", "copolymer", "homopolymer" and the like. Further, it will be understood that the term polymer is inclusive of, in addition to the polymer itself, residues from initiators, catalysts, and other elements attendant to the synthesis of such a polymer, where such residues are understood as not being covalently incorporated thereto. Further, such residues and other elements, while normally removed during post polymerisation purification processes, are typically mixed or co-mingled with the polymer such that they generally remain with the polymer when it is transferred between vessels or between solvents or dispersion media.

The term "(meth)acrylic polymer" as used in the present invention includes a polymer obtained from acrylic monomers, a polymer obtainable from methacrylic monomers, and a corresponding co-polymer obtainable from mixtures of such monomers.

The term "polymerisation" means the chemical process to form a polymer by bonding together multiple polymerisable groups or polymer precursors (polymerisable compounds) containing such polymerisable groups.

The terms "film" and "layer" include rigid or flexible, self-supporting or freestanding films with mechanical stability, as well as coatings or layers on a supporting substrate or between two substrates.

The term "liquid crystal" or "LC" relates to materials having liquid-crystalline mesophases in some temperature ranges (thermotropic LCs) or in some concentration ranges in solutions (lyotropic LCs). They obligatorily contain mesogenic compounds.

The terms "mesogenic compound" and "liquid crystal compound" mean a compound comprising one or more calamitic (rod- or board/lath-shaped) or discotic (disk-shaped) mesogenic groups. The term "mesogenic group" means a group with the ability to induce liquid-crystalline phase (or mesophase) behaviour. The compounds comprising mesogenic groups do not necessarily have to exhibit a liquid-crystalline mesophase themselves. It is also possible that they show liquid-crystalline mesophases only in mixtures with other compounds, or when the mesogenic compounds or materials, or the mixtures thereof, are polymerised. This includes low-molecular-weight non-reactive liquid-crystalline compounds, reactive or polymerisable liquid-crystalline compounds, and liquid-crystalline polymers.

A calamitic mesogenic group is usually comprising a mesogenic core consisting of one or more aromatic or non-aromatic cyclic groups connected to each other directly or via linkage groups, optionally comprising terminal groups attached to the ends of the mesogenic core, and optionally comprising one or more lateral groups attached to the long side of the mesogenic core, wherein these terminal and lateral groups are usually selected e.g. from carbyl or hydrocarbyl groups, polar groups like halogen, nitro, hydroxy, etc., or polymerisable groups.

The term "reactive mesogen" means a polymerisable mesogenic or liquid crystal compound, preferably a monomeric compound. These compounds can be used as pure compounds or as mixtures of reactive mesogens with other compounds functioning as photoinitiators, inhibitors, surfactants, stabilizers, chain transfer agents, non-polymerisable compounds, etc.

Polymerisable compounds with one polymerisable group are also referred to as "monoreactive" compounds, compounds with two polymerisable groups as "direactive" compounds, and compounds with more than two polymerisable groups as "multireactive" compounds. Compounds without a polymerisable group are also referred to as "non-reactive or non-polymerisable "compounds.

The term "non-mesogenic compound or material" means a compound or material that does not contain a mesogenic group as defined above.

Visible light is electromagnetic radiation that has wavelength in a range from about 400 nm to about 740 nm. Ultraviolet (UV) light is electromagnetic radiation with a wavelength in a range from about 200 nm to about 450 nm.

The Irradiance ($E_e$) or radiation power is defined as the power of electromagnetic radiation (d$\theta$) per unit area (dA) incident on a surface:

$$E_e = d\theta/dA.$$

The radiant exposure or radiation dose ($H_e$), is as the irradiance or radiation power ($E_e$) per time (t):

$$H_e = E_e \cdot t.$$

All temperatures, such as, for example, the melting point T(C,N) or T(C,S), the transition from the smectic (S) to the nematic (N) phase T(S,N) and the clearing point T(N,I) of the liquid crystals, are quoted in degrees Celsius. All temperature differences are quoted in differential degrees.

The term "clearing point" means the temperature at which the transition between the mesophase with the highest temperature range and the isotropic phase occurs.

The term "director" is known in prior art and means the preferred orientation direction of the long molecular axes (in case of calamitic compounds) or short molecular axes (in case of discotic compounds) of the liquid-crystalline or RM molecules. In case of uniaxial ordering of such anisotropic molecules, the director is the axis of anisotropy.

The term "alignment" or "orientation" relates to alignment (orientational ordering) of anisotropic units of material such as small molecules or fragments of big molecules in a common direction named "alignment direction". In an aligned layer of liquid-crystalline or RM material the liquid-crystalline director coincides with the alignment direction so that the alignment direction corresponds to the direction of the anisotropy axis of the material.

The terms "uniform orientation" or "uniform alignment" of an liquid-crystalline or RM material, for example in a layer of the material, mean that the long molecular axes (in case of calamitic compounds) or the short molecular axes (in case of discotic compounds) of the liquid-crystalline or RM molecules are oriented substantially in the same direction. In other words, the lines of liquid-crystalline director are parallel.

The term "homeotropic structure" or "homeotropic orientation" refers to a film wherein the optical axis is substantially perpendicular to the film plane.

The birefringence $\Delta n$ is defined as follows

$$\Delta n = n_e - n_o$$

wherein $n_e$ is the extraordinary refractive index and $n_o$ is the ordinary refractive index, and the average refractive index $n_{av.}$ is given by the following equation:

$$n_{av.} = ((2n_o^2 + n_e^2)/3)^{½}$$

The average refractive index $n_{av.}$ and the ordinary refractive index $n_o$ can be measured using an Abbe refractometer. Δn can then be calculated from the above equations.

In case of doubt the definitions as given in C. Tschierske, G. Pelzl and S. Diele, Angew. Chem. 2004, 116, 6340-6368 shall apply.

Unless explicitly stated otherwise the following terms have the following meanings:
"Carbyl group" denotes a mono- or polyvalent organic group containing at least one carbon atom which either contains no further atoms (such as, for example, -C≡C-) or optionally contains one or more further atoms, such as, for example, N, O, S, P, Si, Se, As, Te or Ge (for example carbonyl, etc.). "Hydrocarbyl group" denotes a carbyl group, which additionally contains one or more H atoms and optionally one or more heteroatoms, such as, for example, N, O, S, P, Si, Se, As, Te or Ge.

A carbyl or hydrocarbyl group can be a saturated or unsaturated group. Unsaturated groups are, for example, aryl, alkenyl, or alkinyl groups. A carbyl or hydrocarbyl group having more than 3 C atoms can be straight chain, branched and/or cyclic and may contain spiro links or condensed rings.

Preferred carbyl and hydrocarbyl groups are optionally substituted alkyl, alkenyl, alkinyl, alkoxy, alkylcarbonyl, alkoxycarbonyl, alkylcarbonyloxy and alkoxycarbonyloxy having 1 to 40, preferably 1 to 25, particularly preferably 1 to 18 C atoms, optionally substituted aryl or aryloxy having 6 to 40, preferably 6 to 25 C atoms, or optionally substituted alkylaryl, arylalkyl, alkylaryloxy, arylalkyloxy, arylcarbonyl, aryloxycarbonyl, arylcarbonyloxy and aryloxycarbonyloxy having 6 to 40, preferably 6 to 25 C atoms.
Further preferred carbyl and hydrocarbyl groups are $C_1$-$C_{40}$ alkyl, $C_2$-$C_{40}$ alkenyl, $C_2$-$C_{40}$ alkinyl, $C_3$-$C_{40}$ allyl, $C_4$-$C_{40}$ alkyldienyl, $C_4$-$C_{40}$ polyenyl, $C_6$-$C_{40}$ aryl, $C_6$-$C_{40}$ alkylaryl, $C_6$-$C_{40}$ arylalkyl, $C_6$-$C_{40}$ alkylaryloxy, $C_6$-$C_{40}$ arylalkyloxy, $C_2$-$C_{40}$ heteroaryl, $C_4$-$C_{40}$ cycloalkyl, $C_4$-$C_{40}$ cycloalkenyl, etc. Particular preference is given to $C_1$-$C_{22}$ alkyl, $C_2$-$C_{22}$ alkenyl, $C_2$-$C_{22}$ alkinyl, $C_3$-$C_{22}$ allyl, $C_4$-$C_{22}$ alkyldienyl, $C_6$-$C_{12}$ aryl, $C_6$-$C_{20}$ arylalkyl, and $C_2$-$C_{20}$ heteroaryl.

Further preferred carbyl and hydrocarbyl groups are straight-chain, branched or cyclic alkyl radicals having 1 to 40, preferably 1 to 25 C atoms, more preferably 1 to 12 C atoms, which are unsubstituted or mono- or polysubstituted by F, Cl, Br, I or CN and in which one or more non-adjacent $CH_2$ groups may each be replaced, independently of one another, by -C($R^x$)=C($R^x$)-, -C≡C-, -N($R^x$)-, -O-, -S-, -CO-, -CO-O-, -O-CO-, -O-CO-O- in such a way that O and/or S atoms are not linked directly to one another.

$R^x$ preferably denotes H, halogen, a straight-chain, branched or cyclic alkyl chain having 1 to 25 C atoms, in which, in addition, one or more non-adjacent C atoms may be replaced by -O-, -S-, -CO-, -CO-O-, -O-CO-, -O-CO-O-, and in which one or more H atoms may be replaced by fluorine, an optionally substituted aryl or aryloxy group having 6 to 40 C atoms or an optionally substituted heteroaryl or heteroaryloxy group having 2 to 40 C atoms.

Preferred alkyl groups are, for example, methyl, ethyl, n-propyl, isopropyl, n-butyl, isobutyl, s-butyl, t-butyl, 2-methylbutyl, n-pentyl, s-pentyl, cyclopentyl, n-hexyl, cyclohexyl, 2-ethylhexyl, n-heptyl, cycloheptyl, n-octyl, cyclooctyl, n-nonyl, n-decyl, n-undecyl, n-dodecyl, dodecanyl, trifluoromethyl, perfluoro-n-butyl, 2,2,2-trifluoroethyl, perfluorooctyl, perfluorohexyl, etc.

Preferred alkenyl groups are, for example, ethenyl, propenyl, butenyl, pentenyl, cyclopentenyl, hexenyl, cyclohexenyl, heptenyl, cycloheptenyl, octenyl, cyclooctenyl, etc.

Preferred alkinyl groups are, for example, ethynyl, propynyl, butynyl, pentynyl, hexynyl, octynyl, etc.

Preferred alkoxy groups are, for example, methoxy, ethoxy, 2-methoxy-ethoxy, n-propoxy, i-propoxy, n-butoxy, i-butoxy, s-butoxy, t-butoxy, 2-methylbutoxy, n-pentoxy, n-hexoxy, n-heptyloxy, n-octyloxy, n-nonyloxy, n-decyloxy, n-undecyloxy, n-dodecyloxy, etc.

Preferred amino groups are, for example, dimethylamino, methylamino, methylphenylamino, phenylamino, etc.

Aryl and heteroaryl groups can be monocyclic or polycyclic, i.e. they can have one ring (such as, for example, phenyl) or two or more rings, which may also be fused (such as, for example, naphthyl) or covalently linked (such as, for example, biphenyl), or contain a combination of fused and linked rings. Heteroaryl groups contain one or more heteroatoms, preferably selected from O, N, S, and Se.

Particular preference is given to mono-, bi-, or tricyclic aryl groups having 6 to 25 C atoms and mono-, bi- or tricyclic heteroaryl groups having 2 to 25 C atoms, which optionally contain fused rings and which are optionally substituted. Preference is furthermore given to 5-, 6-, or 7-membered aryl and heteroaryl groups, in which, in addition, one or more CH groups may be replaced by N, S, or O in such a way that O atoms and/or S atoms are not linked directly to one another.

Preferred aryl groups are, for example, phenyl, biphenyl, terphenyl, [1,1':3',1"]terphenyl-2'-yl, naphthyl, anthracene, binaphthyl, phenanthrene, pyrene, dihydropyrene, chrysene, perylene, tetracene, pentacene, benzopyrene, fluorene, indene, indenofluorene, spirobifluorene, etc.

Preferred heteroaryl groups are, for example, 5-membered rings, such as pyrrole, pyrazole, imidazole, 1,2,3-triazole, 1,2,4-triazole, tetrazole, furan, thiophene, selenophene, oxazole, isoxazole, 1,2-thiazole, 1,3-thiazole, 1,2,3-oxadiazole, 1,2,4-oxadiazole, 1,2,5-oxadiazole, 1,3,4-oxadiazole, 1,2,3-thiadiazole, 1,2,4-thiadiazole, 1,2,5-thiadiazole, 1,3,4-thiadiazole, 6-membered rings, such as pyridine, pyridazine, pyrimidine, pyrazine, 1,3,5-triazine, 1,2,4-triazine, 1,2,3-triazine, 1,2,4,5-tetrazine, 1,2,3,4-tetrazine, 1,2,3,5-tetrazine, or condensed groups, such as indole, isoindole,

indolizine, indazole, benzimidazole, benzotriazole, purine, naphthimidazole, phenanthrimidazole, pyridimidazole, pyrazinimidazole, quinoxalinimidazole, benzoxazole, naphthoxazole, anthroxazole, phenanthroxazole, isoxazole, benzothiazole, benzofuran, isobenzofuran, dibenzofuran, quinoline, isoquinoline, pteridine, benzo-5,6-quinoline, benzo-6,7-quinoline, benzo-7,8-quinoline, benzoisoquinoline, acridine, phenothiazine, phenoxazine, benzopyridazine, benzopyrimidine, quinoxaline, phenazine, naphthyridine, azacarbazole, benzocarboline, phenanthridine, phenanthroline, thieno[2,3b]thiophene, thieno[3,2b]thiophene, dithienothiophene, isobenzothiophene, dibenzothiophene, benzothiadiazothiophene, or combinations of these groups. The heteroaryl groups may also be substituted by alkyl, alkoxy, thioalkyl, fluorine, fluoroalkyl or further aryl or heteroaryl groups.

The (non-aromatic) alicyclic and heterocyclic groups encompass both saturated rings, i.e. those that contain exclusively single bonds, and partially unsaturated rings, i.e. those that may also contain multiple bonds. Heterocyclic rings contain one or more heteroatoms, preferably selected from Si, O, N, S, and Se.

The (non-aromatic) alicyclic and heterocyclic groups can be monocyclic, i.e. contain only one ring (such as, for example, cyclohexane), or polycyclic, i.e. contain a plurality of rings (such as, for example, decahydronaphthalene or bicyclooctane). Particular preference is given to saturated groups. Preference is furthermore given to mono-, bi-, or tricyclic groups having 3 to 25 C atoms, which optionally contain fused rings and which are optionally substituted. Preference is furthermore given to 5-, 6-, 7- or 8-membered carbocyclic groups in which, in addition, one or more C atoms may be replaced by Si and/or one or more CH groups may be replaced by N and/or one or more non-adjacent $CH_2$ groups may be replaced by -O- and/or -S-.

Preferred alicyclic and heterocyclic groups are, for example, 5-membered groups, such as cyclopentane, tetrahydrofuran, tetrahydrothiofuran, pyrrolidine, 6-membered groups, such as cyclohexane, silinane, cyclohexene, tetrahydropyran, tetrahydrothiopyran, 1,3-dioxane, 1,3-dithiane, piperidine, 7-membered groups, such as cycloheptane, and fused groups, such as tetrahydronaphthalene, decahydronaphthalene, indane, bicyclo[1.1.1]pentane-1,3-diyl, bicyclo[2.2.2]octane-1,4-diyl, spiro[3.3]heptane-2,6-diyl, octahydro-4,7-methanoindane-2,5-diyl.

The aryl, heteroaryl, carbyl, and hydrocarbyl radicals optionally have one or more substituents, which are preferably selected from the group comprising silyl, sulfo, sulfonyl, formyl, amine, imine, nitrile, mercapto, nitro, halogen, $C_{1-12}$ alkyl, $C_{6-12}$ aryl, $C_{1-12}$ alkoxy, hydroxyl, or combinations of these groups.

Preferred substituents are, for example, solubility-promoting groups, such as alkyl or alkoxy, electron-withdrawing groups, such as fluorine, nitro or nitrile, or substituents for increasing the glass transition temperature (Tg) in the polymer, in particular bulky groups, such as, for example, t-butyl or optionally substituted aryl groups.

Preferred substituents, also referred to as "L" below, are,
for example, F, Cl, Br, I, -OH, -CN, $-NO_2$, -NCO, -NCS, -OCN, -SCN, $-C(=O)N(R^x)_2$, $-C(=O)Y^1$, $-C(=O)R^x$, $-C(=O)OR^x$, $-N(R^x)_2$, in which $R^x$ has the above-mentioned meaning, and $Y^1$ denotes halogen, optionally substituted silyl, optionally substituted aryl or heteroaryl having 4 to 40, preferably 4 to 20 ring atoms, and straight-chain or branched alkyl, alkenyl, alkinyl, alkoxy, alkylcarbonyl, alkoxycarbonyl, alkylcarbonyloxy or alkoxycarbonyloxy having 1 to 25 C atoms, in which one or more H atoms may optionally be replaced by F or Cl.

"Substituted silyl or aryl" preferably means substituted by halogen, -CN, $R^0$, $-OR^0$, $-CO-R^0$, $-CO-O-R^0$, $-O-CO-R^0$ or $-O-CO-O-R^0$, in which $R^0$ has the above-mentioned meaning.

Particularly preferred substituents L are, for example, F, Cl, CN, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$, furthermore phenyl.

In the formula shown above and below, a substituted phenylene ring

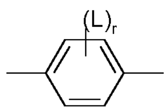

is preferably

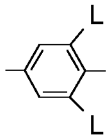 , 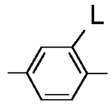 , 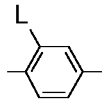 ,

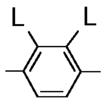, 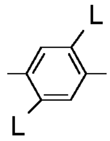 or 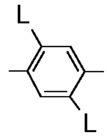,

in which L has, on each occurrence identically or differently, one of the meanings given above and below, and is preferably F, Cl, CN, $NO_2$, $CH_3$, $C_2H_5$, $C(CH_3)_3$, $CH(CH_3)_2$, $CH_2CH(CH_3)C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$ or P-Sp-, very preferably F, Cl, CN, $CH_3$, $C_2H_5$, $OCH_3$, $COCH_3$, $OCF_3$ or P-Sp-, most preferably F, Cl, $CH_3$, $OCH_3$, $COCH_3$ or $OCF_3$.

"Halogen" denotes F, Cl, Br or I, preferably F.

Polymerisable groups P are preferably selected from groups containing a C=C double bond or C≡C triple bond, and groups which are suitable for polymerisation with ring opening, such as, for example, oxetane or epoxide groups.

Very preferably polymerisable groups (P) are selected from the group consisting of $CH_2=CW^1\text{-COO-}$, $CH_2=CW^1\text{-CO-}$,

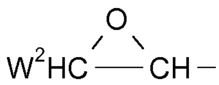,

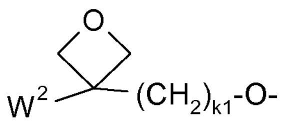, 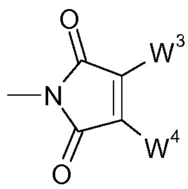, 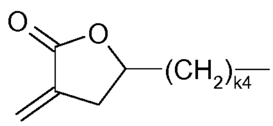,

$CH_2=CW^2\text{-(O)}_{k3}\text{-}$, $CW^1\text{=CH-CO-(O)}_{k3}\text{-}$, $CW^1\text{=CH-CO-NH-}$, $CH_2=CW^1\text{-CO-NH-}$, $CH_3\text{-CH=CHO-}$, $(CH_2=CH)_2CH\text{-OCO-}$, $(CH_2=CH\text{-}CH_2)_2CH\text{-OCO-}$, $(CH_2=CH)_2CH\text{-O-}$, $(CH_2=CH\text{-}CH_2)_2N\text{-}$, $(CH_2=CH\text{-}CH_2)_2N\text{-CO-}$, $CH_2=CW^1\text{-CO-NH-}$, $CH_2=CH\text{-(COO)}_{k1}\text{-Phe-(O)}_{k2}\text{-}$, $CH_2=CH\text{-(CO)}_{k1}\text{-Phe-(O)}_{k2}\text{-}$, Phe-CH=CH-,
in which

$W^1$ denotes H, F, Cl, CN, CF3, phenyl or alkyl having 1 to 5 C atoms, in particular H, F, Cl or $CH_3$,

$W^2$ denotes H or alkyl having 1 to 5 C atoms, in particular H, methyl, ethyl or n-propyl,

$W^3$ and $W^4$ each, independently of one another, denote H, Cl or alkyl having 1 to 5 C atoms, Phe denotes 1,4-phenylene, which is optionally substituted by one or more radicals L as being defined above but being different from P-Sp, and

$k_1$, $k_2$ and k3 each, independently of one another, denote 0 or 1, k3 preferably denotes 1, and k4 is an integer from 1 to 10.

Particularly preferred groups P are $CH_2=CH\text{-COO-}$, $CH_2=C(CH_3)\text{-COO-}$, $CH_2=CF\text{-COO-}$, $CH_2=CH\text{-}$, $CH_2=CH\text{-O-}$, $(CH_2=CH)_2CH\text{-OCO-}$, $(CH_2=CH)_2CH\text{-O-}$,

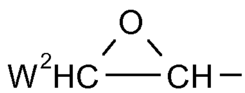

and

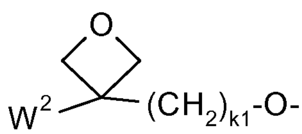,

in which $W^2$ denotes H or alkyl having 1 to 5 C atoms, in particular H, methyl, ethyl or n-propyl,

Further preferred groups P are vinyloxy, acrylate, methacrylate, fluoroacrylate, chloroacrylate, oxetane and epoxide, most preferably acrylate or methacrylate.

Preferably, all polymerisable compounds and sub-formulae thereof contain instead of one or more radicals P-Sp-, one or more branched radicals containing two or more polymerisable groups P (multireactive polymerisable radicals).

Suitable radicals of this type, and polymerisable compounds containing them, are described, for example, in US 7,060,200 B1 or US 2006/0172090 A1.

Particular preference is given to multireactive polymerisable radicals selected from the following formulae:

$-X\text{-alkyl-}CHP^1\text{-}CH_2\text{-}CH_2P^2$ I*a

$-X\text{-alkyl-}C(CH_2P^1)(CH_2P^2)\text{-}CH_2P^3$ I*b

$-X\text{-alkyl-}CHP^1CHP^2\text{-}CH_2P^3$ I*c

$-X\text{-alkyl-}C(CH_2P^1)(CH_2P^2)\text{-}C_{aa}H_{2aa+1}$ I*d

$-X\text{-alkyl-}CHP^1\text{-}CH_2P^2$ I*e

$-X\text{-alkyl-}CHP^1P^2$ I*f

$-X\text{-alkyl-}CP^1P^2\text{-}C_{aa}H_{2aa+1}$ I*g

$-X\text{-alkyl-}C(CH_2P^1)(CH_2P^2)\text{-}CH_2OCH_2\text{-}C(CH_2P^3)(CH_2P^4)CH_2P^5$ I*h

$-X\text{-alkyl-}CH((CH_2)_{aa}P^1)((CH_2)_{bb}P^2)$ I*i

$-X\text{-alkyl-}CHP^1CHP^2\text{-}C_{aa}H_{2aa+1}$ I*k

in which

alkyl denotes a single bond or straight-chain or branched alkylene having 1 to 12 C atoms, in which one or more non-adjacent $CH_2$ groups may each be replaced, independently of one another, by $-C(R^x)=C(R^x)-$, -C≡C-, $-N(R^x)-$, -O-, -S-, -CO-, -CO-O-, -O-CO-, -O-CO-O- in such a way that O and/or S atoms are not linked directly to one another, and in which, in addition, one or more H atoms may be replaced by F, Cl or CN, where $R^x$ has the above-mentioned meaning and preferably denotes $R^0$ as defined above,

aa and bb each, independently of one another, denote 0, 1, 2, 3, 4, 5 or 6,

X has one of the meanings indicated for X', and

$P^{1-5}$ each, independently of one another, have one of the meanings indicated above for P.

Preferred spacer groups Sp are selected from the formula Sp'-X', so that the radical "P-Sp-" conforms to the formula "P-Sp'-X'-", where

Sp' denotes alkylene having 1 to 20, preferably 1 to 12 C atoms, which is optionally mono- or polysubstituted by F, Cl, Br, I or CN and in which, in addition, one or more non-adjacent $CH_2$ groups may each be replaced, independently of one another, by -O-, -S-, -NH-, $-NR^{01}-$, $-SiR^{01}R^{02}-$, -CO-, -COO-, -OCO-, -OCO-O-, -S-CO-, -CO-S-, $-NR^{01}-CO-O-$, $-O-CO-NR^{01}-$, $-NR^{01}-CO-NR^{01}-$, -CH=CH- or -C≡C- in such a way that O and/or S atoms are not linked directly to one another,

X' denotes -O-, -S-, -CO-, -COO-, -OCO-, -O-COO-, $-CO-NR^{01}-$, $-NR^{01}-CO-$, $-NR^{01}-CO-NR^{01}-$, $-OCH_2-$, $-CH_2O-$, $-SCH_2-$, $-CH_2S-$, $-CF_2O-$, $-OCF_2-$, $-CF_2S-$, $-SCF_2-$, $-CF_2CH_2-$, $-CH_2CF_2-$, $-CF_2CF_2-$, -CH=N-, -N=CH-, -N=N-, $-CH=CR^{01}-$, $-CY^{01}=CY^{02}-$, -C≡C-, -CH=CH-COO-, -OCO-CH=CH- or a single bond,

$R^{01}$ and $R^{02}$ each, independently of one another, denote H or alkyl having 1 to 12 C atoms, and

$Y^{01}$ and $Y^{02}$ each, independently of one another, denote H, F, Cl or CN.

X' is preferably -O-, -S- -CO-, -COO-, -OCO-, -O-COO-, -CO-$NR^0$-, -$NR^{01}$-CO-, -$NR^{01}$-CO-$NR^{01}$- or a single bond.

Typical spacer groups Sp' are, for example, $-(CH_2)_{p1}-$, $-(CH_2CH_2O)_{q1}-CH_2CH_2-$, $-CH_2CH_2-S-CH_2CH_2-$, $-CH_2CH_2-NH-CH_2CH_2-$ or $-(SiR^{01}R^{02}-O)_{p1}-$, in which p1 is an integer from 1 to 12, q1 is an integer from 1 to 3, and $R^{01}$ and $R^{02}$ have the above-mentioned meanings.

Particularly preferred groups -X'-Sp'- are $-(CH_2)_{p1}-$, $-O-(CH_2)_{p1}-$, $-OCO-(CH_2)_{p1}-$, $-OCOO-(CH_2)_{p1}-$.

Particularly preferred groups Sp' are, for example, in each case straight-chain ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methyliminoethylene, 1-methylalkylene, ethenylene, propenylene and butenylene.

For the present invention,

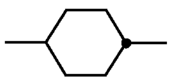 , 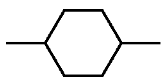 , 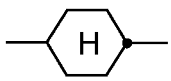 and 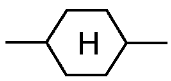

denote trans-1,4-cyclohexylene, and

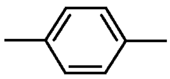 and 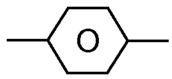

denote 1,4-phenylene.

A "polymer network" is a network in which all polymer chains are interconnected to form a single macroscopic entity by many crosslinks. The polymer network can occur in the following types:

- A graft polymer molecule is a branched polymer molecule in which one or more the side chains are different, structurally or configurationally, from the main chain.
- A star polymer molecule is a branched polymer molecule in which a single branch point gives rise to multiple linear chains or arms. If the arms are identical, the star polymer molecule is said to be regular. If adjacent arms are composed of different repeating subunits, the star polymer molecule is said to be variegated.
- A comb polymer molecule consists of a main chain with two or more three-way branch points and linear side chains. If the arms are identical the comb polymer molecule is said to be regular.
- A brush polymer molecule consists of a main chain with linear, unbranched side chains and where one or more of the branch points has four-way functionality or larger.

Throughout the description and claims of this specification, the words "comprise" and "contain" and variations of the words, for example "comprising" and "comprises", mean "including but not limited to", and are not intended to (and do not) exclude other components. On the other hand, the word "comprise" also encompasses the term "consisting of" but is not limited to it.

All concentrations are quoted in percent by weight and relate to the respective mixture as a whole, all temperatures are quoted in degrees Celsius and all temperature differences are quoted in differential degrees.

## Detailed Description

Preferably the minimum amount of pentaerythritol tetrakis(3,5-di-tert-butyl-4-hydroxyhydrocinnamate) in the polymerisable LC material as a whole is more than 0.1 %, in particular more than 0.3 %, most preferably more than 0.5 % by weight. The maximum amount of pentaerythritol tetrakis(3,5-di-tert-butyl-4-hydroxyhydro-cinnamate) is preferably less than 5 %, very preferably less than 3 % , in particular less than 1 % by weight of the whole polymerisable LC material.

Preferred polymerisable mono-, di-, or multireactive liquid-crystalline or mesogenic compounds are disclosed for example in WO 93/22397, EP 0 261 712, DE 195 04 224, WO 95/22586, WO 97/00600, US 5,518,652, US 5,750,051, US 5,770,107 and US 6,514,578.

At least one di- or multireactive mesogenic compound is selected of formula DRM

$P^1$-$Sp^1$-MG-$Sp^2$-$P^2$ DRM

wherein

$P^1$ and $P^2$ independently of each other denote a polymerisable group,

$Sp^1$ and $Sp^2$ independently of each other are a spacer group or a single bond,and

MG is a rod-shaped mesogenic group, which is preferably selected of formula MG

$-(A^1-Z^1)_n-A^2-$ MG

wherein

$A^1$ and $A^2$ denote, in case of multiple occurrence independently of one another, an aromatic or alicyclic group, which optionally contains one or more heteroatoms selected from N, O and S, and is optionally mono- or polysubstituted by $L^1$,

$L^1$ is P-Sp-, F, Cl, Br, I, -CN, $-NO_2$, -NCO, -NCS, -OCN, -SCN, $-C(=O)NR^{00}R^{000}$, $-C(=O)OR^{00}$, $-C(=O)R^{00}$, $-NR^{00}R^{000}$, -OH,-SF5, optionally substituted silyl, aryl or heteroaryl with 1 to 12, preferably 1 to 6 C atoms, and straight chain or branched alkyl, alkoxy, alkylcarbonyl, alkoxycarbonyl, alkylcarbonyloxy or alkoxycarbonyloxy with 1 to 12, preferably 1 to 6 C atoms, wherein one or more H atoms are optionally replaced by F or Cl,

$R^{00}$ and $R^{000}$ independently of each other denote H or alkyl with 1 to 12 C-atoms,

$Z^1$ denotes, in case of multiple occurrence independently of one another, -O-, -S-, -CO-, -COO-, -OCO-, -S-CO-, -CO-S-, -O-COO-, $-CO-NR^{00}-$, $-NR^{00}-CO-$, $-NR^{00}-CO-NR^{000}$, $-NR^{00}-CO-O-$, $-O-CO-NR^{00}-$, $-OCH_2-$, $-CH_2O-$, $-SCH_2-$, $-CH_2S-$, $-CF_2O-$,$-OCF_2-$, $-CF_2S-$, $-SCF_2-$, $-CH_2CH_2-$, $-(CH_2)_{n1}$, $-CF_2CH_2-$,$-CH_2CF_2-$, $-CF_2CF_2-$, -CH=N-, -N=CH-, -N=N-, $-CH=CR^{00}-$,$-CY^1=CY^2-$, -C≡C-, -CH=CH-COO-, -OCO-CH=CH- or a single bond,

$Y^1$ and $Y^2$ independently of each other denote H, F, Cl or CN,

n is 1, 2, 3 or 4, preferably 1 or 2, most preferably 2,

n1 is an integer from 1 to 10, preferably 1, 2, 3 or 4.

Preferred groups $A^1$ and $A^2$ include, without limitation, furan, pyrrol, thiophene, oxazole, thiazole, thiadiazole, imidazole, phenylene, cyclohexylene, bicyclooctylene, cyclohexenylene, pyridine, pyrimidine, pyrazine, azulene, indane, fluorene, naphthalene, tetrahydronaphthalene, anthracene, phenanthrene and dithienothiophene, all of which are unsubstituted or substituted by 1, 2, 3 or 4 groups L as defined above.

Particular preferred groups $A^1$ and $A^2$ are selected from 1,4-phenylene, pyridine-2,5-diyl, pyrimidine-2,5-diyl, thiophene-2,5-diyl, naphthalene-2,6-diyl, 1,2,3,4-tetrahydro-naphthalene-2,6-diyl, indane-2,5-diyl, bicyclooctylene or 1,4-cyclohexylene wherein one or two non-adjacent CH2 groups are optionally replaced by O and/or S, wherein these groups are unsubstituted or substituted by 1, 2, 3 or 4 groups L as defined above.

Particular preferred groups $Z^1$ are in each occurrence independently from another preferably selected from -COO-, -OCO-, $-CH_2CH_2-$, $-CF_2O-$, - OCF2-, -C≡C-, -CH=CH-,-OCO-CH=CH-, -CH=CH-COO-, or a single bond,

Very preferred direactive mesogenic compounds of formula DRM are selected from the following formulae:

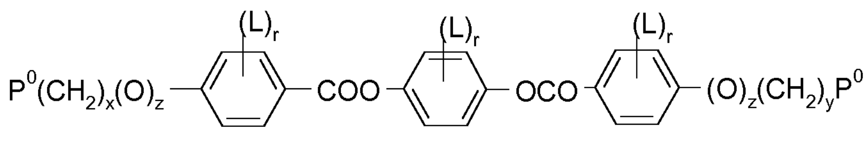

DRMa1

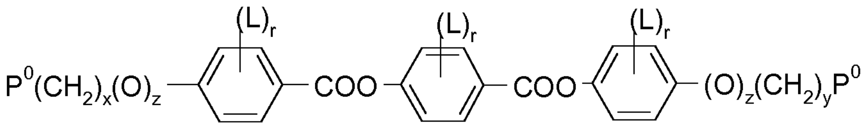
DRMa2

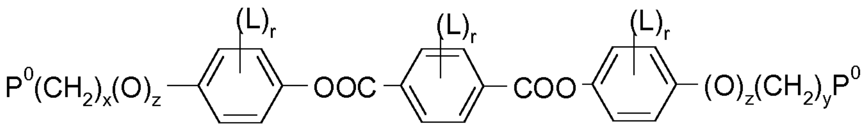
DRMa3

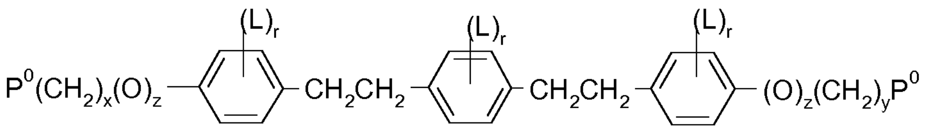
DRMa4

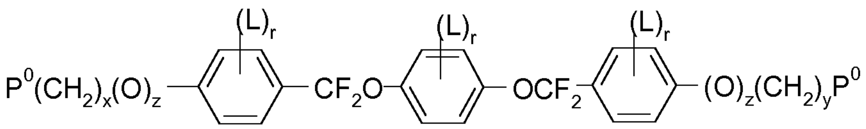
DRMa5

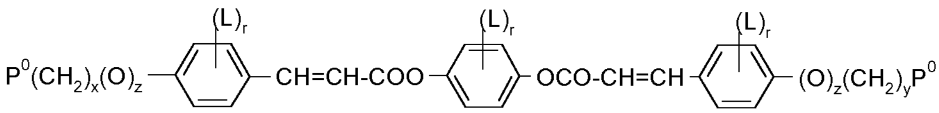
DRMa6

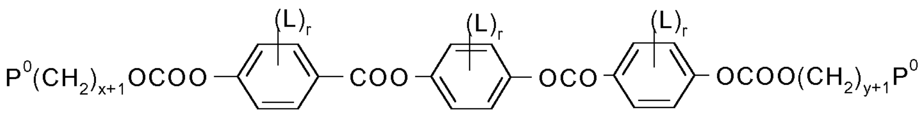
DRMa7

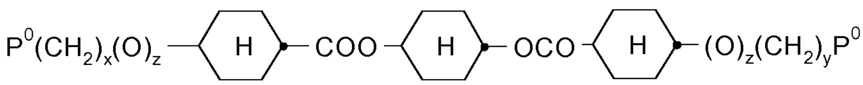
DRMb

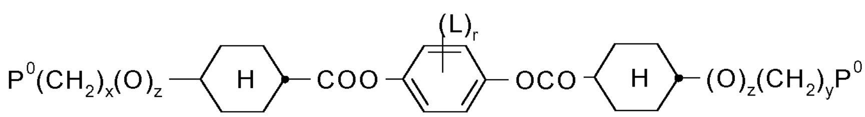
DRMc

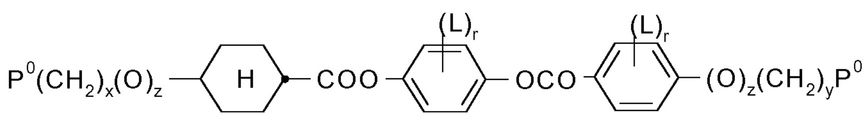
DRMd

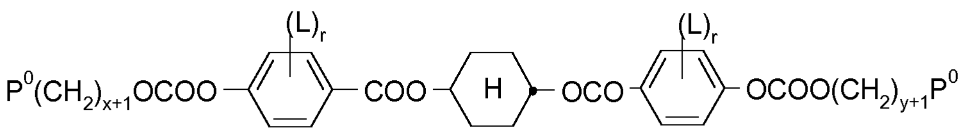
DRMe

wherein

$P^0$ is, in case of multiple occurrence independently of one another, a polymerisable group, preferably an acryl, methacryl, oxetane, epoxy, vinyl, heptadiene, vinyloxy, propenyl ether or styrene group,

L has on each occurrence identically or differently one of the meanings given for $L^1$ in formula DRM, and is preferably, in case of multiple occurrence independently of one another, selected from F, Cl, CN or optionally halogenated alkyl, alkoxy, alkylcarbonyl, alkoxycarbonyl, alkylcarbonyloxy or alkoxycarbonyloxy with 1 to 5 C atoms,

r is 0, 1, 2, 3 or 4,

x and y are independently of each other 0 or identical or different integers from 1 to 12,

z is each and independently, 0 or 1, with z being 0 if the adjacent x or y is 0.

Especially preferred are compounds of formula DRMa1, DRMa2 and DRMa3, in particular those of formula DRMa1.

At least one monoreactive mesogenic compound in the polymerisable LC material is selected from formula MRM,

$P^1$-$Sp^1$-MG-R MRM

wherein $P^1$, $Sp^1$ and MG have the meanings given in formula DRM,

R F, Cl, Br, I, -CN, $-NO_2$, -NCO, -NCS, -OCN, -SCN,-C(=O)$NR^xR^y$, -C(=O)X, -C(=O)$OR^x$, -C(=O)$R^y$, $-NR^xR^y$, -OH,-SF5, optionally substituted silyl, straight chain or branched alkyl, alkoxy, alkylcarbonyl, alkoxycarbonyl, alkylcarbonyloxy or alkoxycarbonyloxy with 1 to 12, preferably 1 to 6 C atoms, wherein one or more H atoms are optionally replaced by F or Cl,

X is halogen, preferably F or Cl, and

$R^x$ and $R^y$ are independently of each other H or alkyl with 1 to 12 C-atoms.

Preferably, the monoreactive mesogenic compounds of formula MRM are selected from the following formulae.

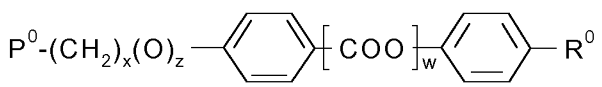
MRM1

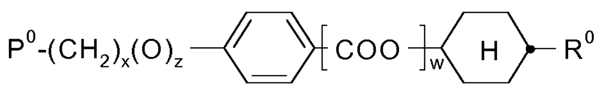
MRM2

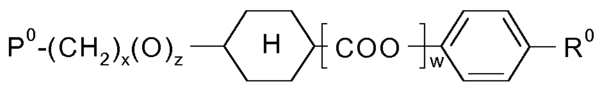
MRM3

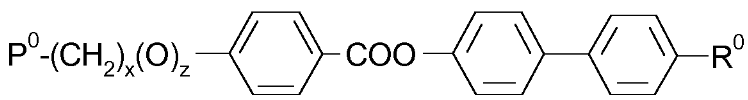
MRM4

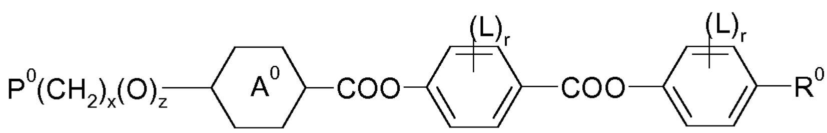
MRM5

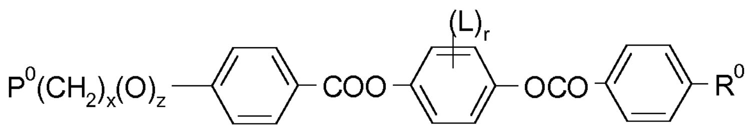
MRM6

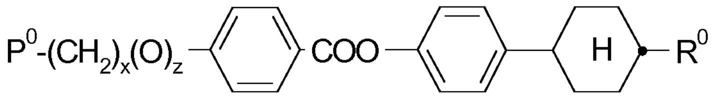

MRM7

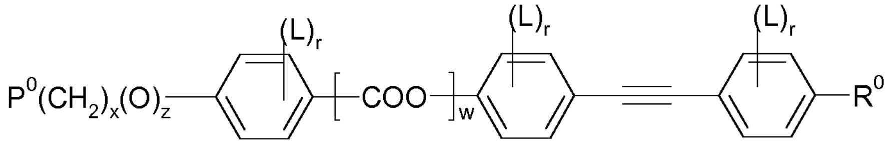

MRM8

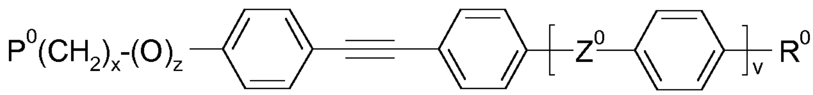

MRM9

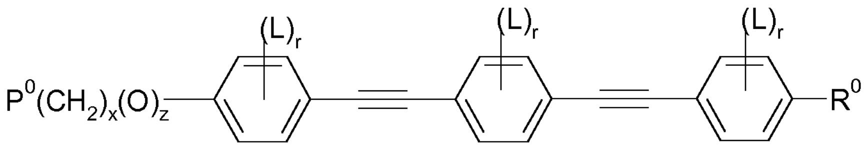

MRM10

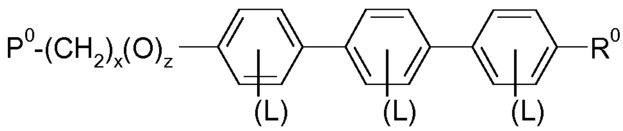

MRM11

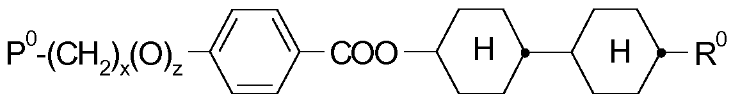

MRM12

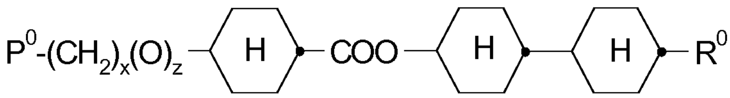

MRM13

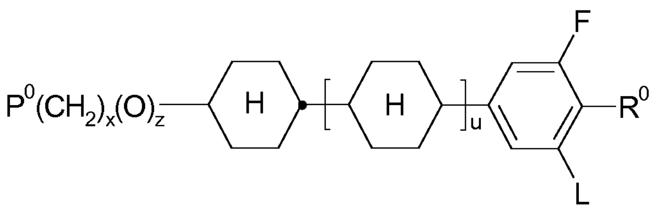

MRM14

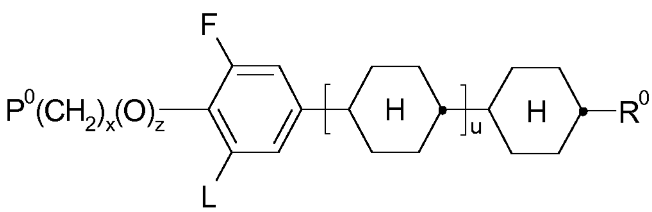

MRM15

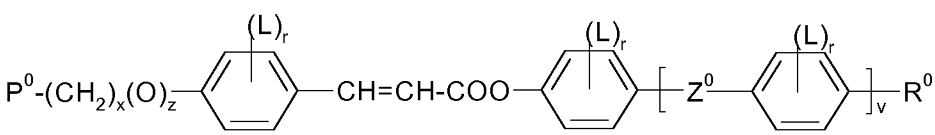

MRM16

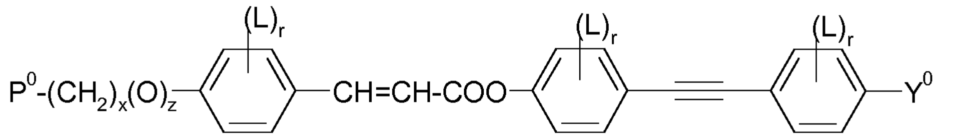

MRM17

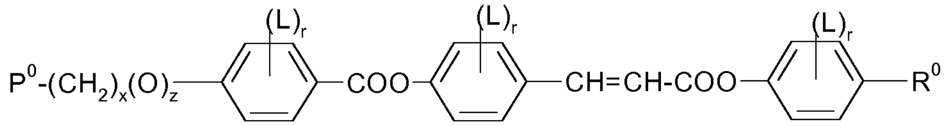

MRM18

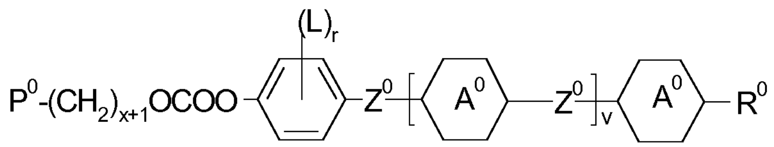

MRM19

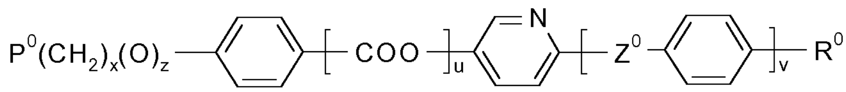

MRM20

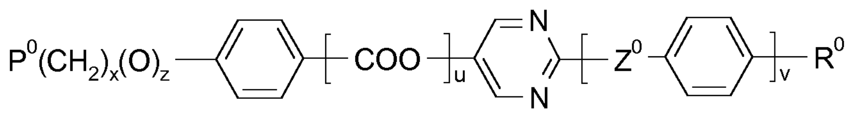

MRM21

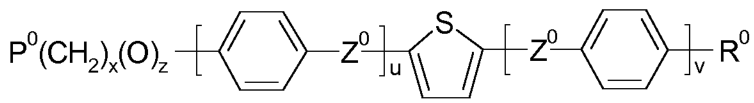

MRM22

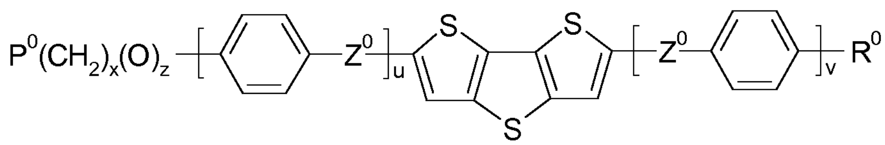

MRM23

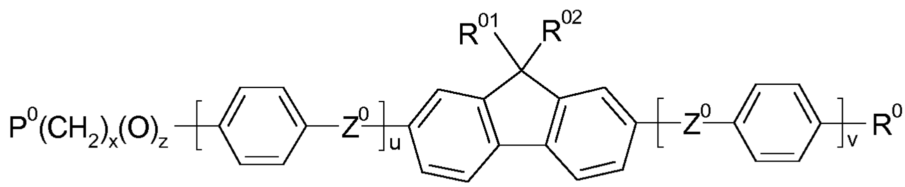

MRM24

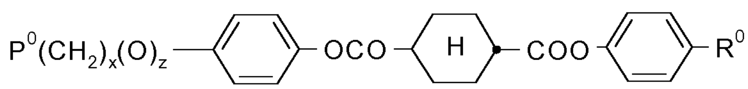

MRM25

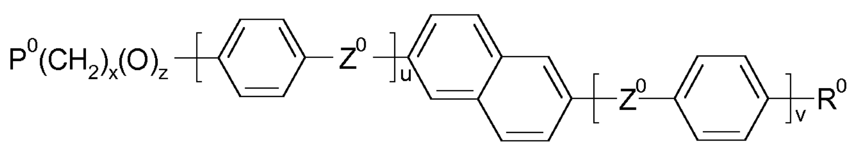

MRM26

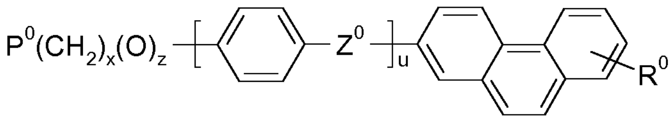

MRM27

wherein $P^0$, L, r, x, y and z are as defined in formula DRMa-1 to formula DRMe,

$R^0$ is alkyl, alkoxy, thioalkyl, alkylcarbonyl, alkoxycarbonyl, alkylcarbonyloxy or alkoxycarbonyloxy with 1 or more, preferably 1 to 15 C atoms or denotes $Y^0$,

$Y^0$ is F, Cl, CN, $NO_2$, $OCH_3$, OCN, SCN, $SF_5$, or mono- oligo- or polyfluorinated alkyl or alkoxy with 1 to 4 C atoms,

$Z^0$ is -COO-, -OCO-, $-CH_2CH_2-$, $-CF_2O-$, $-OCF_2-$, -CH=CH-,-OCO-CH=CH-, -CH=CH-COO-, or a single bond,

$A^0$ is, in case of multiple occurrence independently of one another, 1,4-phenylene that is unsubstituted or substituted with 1, 2, 3 or 4 groups L, or trans-1,4-cyclohexylene,

u and v are independently of each other 0, 1 or 2,

w is 0 or 1,

and wherein the benzene and naphthalene rings can additionally be substituted with one or more identical or different groups L.

Further preferred are compounds of formula MRM1, MRM2, MRM3, MRM4, MRM5, MRM6, MRM7, MRM9 and MRM10, especially those of formula MRM1, MRM4, MRM6, and MRM7, and in particular those of formulae MRM1 and MRM7.

The compounds of the formulae DRM, MRM, and sub-formulae thereof can be pre-pared analogously to processes known to the person skilled in the art and described in standard works of organic chemistry, such as, for example, in Houben-Weyl, Methoden der organischen Chemie [Methods of Organic Chemistry], Thieme-Verlag, Stuttgart.

The proportion of said mono-, di- or multireactive liquid-crystalline compounds in a polymerisable liquid-crystalline material according to the present invention as a whole, is preferably in the range from 30 to 99.9 % by weight, more preferably in the range from 40 to 99.9 % by weight and even more preferably in the range from 50 to 99.9% by weight.

In a preferred embodiment, the proportion of the monoreactive polymerisable mesogenic compounds in a polymerisable liquid-crystalline material according to the present invention as a whole, is preferably in the range from 5 to 80% by weight, more preferably in the range from 10 to 75 % by weight and even more preferably in the range from 15 to 70 % by weight.

In another preferred embodiment, the proportion of the direactive polymerisable mesogenic compounds in a polymerisable liquid-crystalline material according to the present invention as a whole, is preferably in the range from 5 to 80 % by weight, more preferably in the range from 10 to 75 % by weight and even more preferably in the range from 15 to 70% by weight.

In another preferred embodiment, the proportion of the multireactive polymerizable mesogenic compounds in a polymerisable liquid-crystalline material according to the present invention as a whole is preferably in the range from 0 to 30 % by weight, more preferably in the range from 0 to 20 % by weight and even more preferably in the range from 0 to 10% by weight.

In another preferred embodiment the polymerisable LC material does not contain compounds having more than two polymerisable groups.

In another preferred embodiment the polymerisable LC material is an achiral material, i.e. it does not contain any chiral compounds.

In a further preferred embodiment, the polymerisable LC material comprises at least one monoreactive mesogenic compound selected from formulae MRM-1, at least one direactive mesogenic compound selected from a compound of formula DRMa-1, and pentaerythritol tetrakis(3,5-di-tert-butyl-4-hydroxyhydrocinnamate).

In a further preferred embodiment, the polymerisable LC material comprises at least one monoreactive mesogenic compound selected from formula MRM-7, at least one direactive mesogenic compound selected from formula DRMa-1, and pentaerythritol tetrakis(3,5-di-tert-butyl-4-hydroxyhydrocinnamate).

In a further preferred embodiment, the polymerisable LC material comprises at least two monoreactive mesogenic compound selected from compounds of formulae MRM-1 and/or MRM-7, at least one direactive mesogenic compound selected from formula DRMa-1, and pentaerythritol tetrakis(3,5-di-tert-butyl-4-hydroxyhydrocinnamate).

In a further preferred embodiment, the polymerisable LC material comprises at least two monoreactive mesogenic compound selected from compounds of formulae MRM-1 and/or MRM-7, at least two direactive mesogenic compound selected from compounds of formula DRMa-1, and pentaerythritol tetrakis(3,5-di-tert-butyl-4-hydroxyhydrocinnamate).

In a preferred embodiment the polymerisable LC material comprises optionally one or more additives selected from the group consisting of polymerisation initiators, surfactants, further stabilisers, catalysts, sensitizers, inhibitors, chain-transfer agents, co-reacting monomers, reactive thinners, surface-active compounds, lubricating agents, wetting agents, dispersing agents, hydrophobing agents, adhesive agents, flow improvers, degassing or defoaming agents, deaerators, diluents, reactive diluents, auxiliaries, colourants, dyes, pigments and nanoparticles.

In another preferred embodiment, the polymerisable LC material optionally comprises one or more additives selected from polymerisable non-mesogenic compounds (reactive thinners). The amount of these additives in the polymerisable LC material is preferably from 0 to 30 %, very preferably from 0 to 25 %.

The reactive thinners used are not only substances which are referred to in the actual sense as reactive thinners, but also auxiliary compounds already mentioned above which contain one or more complementary reactive units, for example hydroxyl, thiol-, or amino groups, via which a reaction with the polymerisable units of the liquid-crystalline compounds can take place.

The substances, which are usually capable of photopolymerisation, include, for example, mono-, bi- and polyfunctional compounds containing at least one olefinic double bond. Examples thereof are vinyl esters of carboxylic acids, for example of lauric, myristic, palmitic and stearic acid, and of dicarboxylic acids, for example of succinic acid, adipic acid, allyl and vinyl ethers and methacrylic and acrylic esters of monofunctional alcohols, for example of lauryl, myristyl, palmityl and stearyl alcohol, and diallyl and divinyl ethers of bifunctional alcohols, for example ethylene glycol and 1,4-butanediol.

Also suitable are, for example, methacrylic and acrylic esters of polyfunctional alcohols, in particular those which contain no further functional groups, or at most ether groups, besides the hydroxyl groups. Examples of such alcohols are bifunctional alcohols, such as ethylene glycol, propylene glycol and their more highly condensed representatives, for example diethylene glycol, triethylene glycol, dipropylene glycol, tripropylene glycol etc., butanediol, pentanediol, hexanediol, neopentyl glycol, alkoxylated phenolic compounds, such as ethoxylated and propoxylated bisphenols, cyclohexanedimethanol, trifunctional and polyfunctional alcohols, such as glycerol, trimethylolpropane, butanetriol, trimethylolethane, pentaerythritol, ditrimethylolpropane, dipentaerythritol, sorbitol, mannitol, and the corresponding alkoxylated, in particular ethoxylated and propoxylated alcohols.

Other suitable reactive thinners are polyester (meth)acrylates, which are the (meth)acrylic ester of polyesterols.

Examples of suitable polyesterols are those which can be prepared by esterification of polycarboxylic acids, preferably dicarboxylic acids, using polyols, preferably diols. The starting materials for such hydroxyl-containing polyesters are known to the person skilled in the art. Dicarboxylic acids which can be employed are succinic, glutaric acid, adipic acid, sebacic acid, o-phthalic acid and isomers and hydrogenation products thereof, and esterifiable and transesterifiable derivatives of said acids, for example anhydrides and dialkyl esters. Suitable polyols are the abovementioned alcohols, preferably ethyleneglycol, 1,2- and 1,3-propylene glycol, 1,4-butanediol, 1,6-hexanediol, neopentyl glycol, cyclohexanedimethanol and polyglycols of the ethylene glycol and propylene glycol type.

Suitable reactive thinners are furthermore 1,4-divinylbenzene, triallyl cyanurate, acrylic esters of tricyclodecenyl alcohol of the following formula

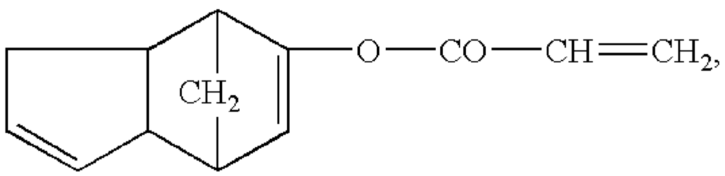

also known under the name dihydrodicyclopentadienyl acrylate, and the allyl esters of acrylic acid, methacrylic acid and cyanoacrylic acid.

Of the reactive thinners, which are mentioned by way of example, those containing photopolymerizable groups are used in particular and in view of the abovementioned preferred compositions.

This group includes, for example, dihydric and polyhydric alcohols, for example ethylene glycol, propylene glycol and more highly condensed representatives thereof, for example diethylene glycol, triethylene glycol, dipropylene glycol, tripropylene glycol etc., butanediol, pentanediol, hexanediol, neopentyl glycol, cyclohexanedimethanol, glycerol, trimethylolpropane, butanetriol, trimethylolethane, pentaerythritol, ditrimethylolpropane, dipentaerythritol, sorbitol, mannitol and the corresponding alkoxylated, in particular ethoxylated and propoxylated alcohols.

The group furthermore also includes, for example, alkoxylated phenolic compounds, for example ethoxylated and propoxylated bisphenols.

These reactive thinners may furthermore be, for example, epoxide or urethane (meth)acrylates.

Epoxide (meth)acrylates are, for example, those as obtainable by the reaction, known to the person skilled in the art, of epoxidized olefins or poly- or diglycidyl ether, such as bisphenol A diglycidyl ether, with (meth)acrylic acid.

Urethane (meth)acrylates are, in particular, the products of a reaction, likewise known to the person skilled in the art, of hydroxylalkyl (meth)acrylates with poly- or diisocyanates.

Such epoxide and urethane (meth)acrylates are included amongst the compounds listed above as "mixed forms".

If reactive thinners are used, their amount and properties must be matched to the respective conditions in such a way that, on the one hand, a satisfactory desired effect, for example the desired colour of the composition according to the invention, is achieved, but, on the other hand, the phase behaviour of the liquid-crystalline composition is not excessively impaired. The low-crosslinking (high-crosslinking) liquid-crystalline compositions can be prepared, for example, using corresponding reactive thinners, which have a relatively low (high) number of reactive units per molecule.

The group of diluents include, for example:

C1-C4-alcohols, for example methanol, ethanol, n-propanol, isopropanol, butanol, isobutanol, sec-butanol and, in particular, the C5-C12-alcohols n-pentanol, n-hexanol, n-heptanol, n-octanol, n-nonanol, n-decanol, n-undecanol and n-dodecanol, and isomers thereof, glycols, for example 1,2-ethylene glycol, 1,2- and 1,3-propylene glycol, 1,2-, 2,3- and 1,4-butylene glycol, di- and triethylene glycol and di- and tripropylene glycol, ethers, for example methyl tert-butyl ether, 1,2-ethylene glycol mono- and dimethyl ether, 1,2-ethylene glycol mono- and -diethylether, 3-methoxypropanol, 3-isopropoxypropanol, tetrahydrofuran and dioxane, ketones, for example acetone, methyl ethyl ketone, methyl isobutyl ketone and diacetone alcohol (4-hydroxy-4-methyl-2-pentanone), C1-C5-alkyl esters, for example methyl acetate, ethyl acetate, propyl acetate, butyl acetate and amyl acetate, aliphatic and aromatic hydrocarbons, for example pentane, hexane, heptane, octane, isooctane, petroleum ether, toluene, xylene, ethylbenzene, tetralin, decalin, dimethylnaphthalene, white spirit, Shellsol® and Solvesso® mineral oils, for example gasoline, kerosine, diesel oil and heating oil, but also natural oils, for example olive oil, soya oil, rapeseed oil, linseed oil and sunflower oil.

It is of course also possible to use mixtures of these diluents in the compositions according to the invention.

So long as there is at least partial miscibility, these diluents can also be mixed with water. Examples of suitable diluents here are C1-C4-alcohols, for example methanol, ethanol, n-propanol, isopropanol, butanol, isobutanol and sec-butanol, glycols, for example 1,2-ethylene glycol, 1,2- and 1,3-propylene glycol, 1,2-, 2,3- and 1,4-butylene glycol, di- and triethylene glycol, and di- and tripropylene glycol, ethers, for example tetrahydrofuran and dioxane, ketones, for example acetone, methyl ethyl ketone and diacetone alcohol (4-hydroxy-4-methyl-2-pentanone), and C1-C4-alkyl esters, for example methyl, ethyl, propyl and butyl acetate.

The diluents are optionally employed in a proportion of from about 0 to 10.0% by weight, preferably from about 0 to 5.0% by weight, based on the total weight of the polymerisable LC material.

The antifoams and deaerators (c1)), lubricants and flow auxiliaries (c2)), thermally curing or radiation-curing auxiliaries (c3)), substrate wetting auxiliaries (c4)), wetting and dispersion auxiliaries (c5)), hydrophobicizing agents (c6)), adhesion promoters (c7)) and auxiliaries for promoting scratch resistance (c8)) cannot strictly be delimited from one another in their action.

For example, lubricants and flow auxiliaries often also act as antifoams and/or deaerators and/or as auxiliaries for improving scratch resistance. Radiation-curing auxiliaries can also act as lubricants and flow auxiliaries and/or deaerators and/or as substrate wetting auxiliaries. In individual cases, some of these auxiliaries can also fulfil the function of an adhesion promoter (c8)).

Corresponding to the above-said, a certain additive can therefore be classified in a number of the groups c1) to c8) described below.

The antifoams in group c1) include silicon-free and silicon-containing polymers. The silicon-containing polymers are, for example, unmodified or modified polydialkylsiloxanes or branched copolymers, comb or block copolymers comprising polydialkylsiloxane and polyether units, the latter being obtainable from ethylene oxide or propylene oxide.

The deaerators in group c1) include, for example, organic polymers, for example polyethers and polyacrylates, dialkylpolysiloxanes, in particular dimethylpolysiloxanes, organically modified polysiloxanes, for example arylalkyl-modified polysiloxanes, and fluorosilicones.

The action of the antifoams is essentially based on preventing foam formation or destroying foam that has already formed. Antifoams essentially work by promoting coalescence of finely divided gas or air bubbles to give larger bubbles in the medium to be deaerated, for example the compositions according to the invention, and thus accelerate escape of the gas (of the air). Since antifoams can frequently also be employed as deaerators and vice versa, these additives have been included together under group c1).

Such auxiliaries are, for example, commercially available from Tego as TEGO® Foamex 800, TEGO® Foamex 805, TEGO® Foamex 810, TEGO® Foamex 815, TEGO® Foamex 825, TEGO® Foamex 835, TEGO® Foamex 840, TEGO® Foamex 842, TEGO® Foamex 1435, TEGO® Foamex 1488, TEGO® Foamex 1495, TEGO® Foamex 3062, TEGO® Foamex 7447, TEGO® Foamex 8020, Tego® Foamex N, TEGO® Foamex K 3, TEGO® Antifoam 2-18,TEGO®

Antifoam 2-18, TEGO® Antifoam 2-57, TEGO® Antifoam 2-80, TEGO® Antifoam 2-82, TEGO® Antifoam 2-89, TEGO® Antifoam 2-92, TEGO® Antifoam 14, TEGO® Antifoam 28, TEGO® Antifoam 81, TEGO® Antifoam D 90, TEGO® Antifoam 93, TEGO® Antifoam 200, TEGO® Antifoam 201, TEGO® Antifoam 202, TEGO® Antifoam 793, TEGO® Antifoam 1488, TEGO® Antifoam 3062, TEGOPREN® 5803, TEGOPREN® 5852, TEGOPREN® 5863, TEGOPREN® 7008, TEGO® Antifoam 1-60, TEGO® Antifoam 1-62, TEGO® Antifoam 1-85, TEGO® Antifoam 2-67, TEGO® Antifoam WM 20, TEGO® Antifoam 50, TEGO® Antifoam 105, TEGO® Antifoam 730, TEGO® Antifoam MR 1015, TEGO® Antifoam MR 1016, TEGO® Antifoam 1435, TEGO® Antifoam N, TEGO® Antifoam KS 6, TEGO® Antifoam KS 10, TEGO® Antifoam KS 53, TEGO® Antifoam KS 95, TEGO® Antifoam KS 100, TEGO® Antifoam KE 600, TEGO® Antifoam KS 911, TEGO® Antifoam MR 1000, TEGO® Antifoam KS 1100, Tego® Airex 900, Tego® Airex 910, Tego® Airex 931, Tego® Airex 935, Tego® Airex 936, Tego® Airex 960, Tego® Airex 970, Tego® Airex 980 and Tego® Airex 985 and from BYK as BYK®-011, BYK®-019, BYK®-020, BYK®-021, BYK®-022, BYK®-023, BYK®-024, BYK®-025, BYK®-027, BYK®-031, BYK®-032, BYK®-033, BYK®-034, BYK®-035, BYK®-036, BYK®-037, BYK®-045, BYK®-051, BYK®-052, BYK®-053, BYK®-055, BYK®-057, BYK®-065, BYK®-066, BYK®-070, BYK®-080, BYK®-088, BYK®-141 and BYK®-A 530.

The auxiliaries in group c1) are optionally employed in a proportion of from about 0 to 3.0% by weight, preferably from about 0 to 2.0% by weight, based on the total weight of the polymerisable LC material.

In group c2), the lubricants and flow auxiliaries typically include silicon-free, but also silicon-containing polymers, for example polyacrylates or modifiers, low-molecular-weight polydialkylsiloxanes. The modification consists in some of the alkyl groups having been replaced by a wide variety of organic radicals. These organic radicals are, for example, polyethers, polyesters or even long-chain alkyl radicals, the former being used the most frequently.

The polyether radicals in the correspondingly modified polysiloxanes are usually built up from ethylene oxide and/or propylene oxide units. Generally, the higher the proportion of these alkylene oxide units in the modified polysiloxane, the more hydrophilic is the resultant product.

Such auxiliaries are, for example, commercially available from Tego as TEGO® Glide 100, TEGO® Glide ZG 400, TEGO® Glide 406, TEGO® Glide 410, TEGO® Glide 411, TEGO® Glide 415, TEGO® Glide 420, TEGO® Glide 435, TEGO® Glide 440, TEGO® Glide 450, TEGO® Glide A 115, TEGO® Glide B 1484 (can also be used as antifoam and deaerator), TEGO® Flow ATF, TEGO® Flow 300, TEGO® Flow 460, TEGO® Flow 425 and TEGO® Flow ZFS 460. Suitable radiation-curable lubricants and flow auxiliaries, which can also be used to improve the scratch resistance, are the products TEGO® Rad 2100, TEGO® Rad 2200, TEGO® Rad 2500, TEGO® Rad 2600 and TEGO® Rad 2700, which are likewise obtainable from TEGO.

Such-auxiliaries are also available, for example, from BYK as BYK®-300 BYK®-306, BYK®-307, BYK®-310, BYK®-320, BYK®-333, BYK®-341, Byk® 354, Byk®361, Byk®361N, BYK®388.

Such-auxiliaries are also available, for example, from Merck KGaA as Tivida® FL 2300 and Tivida® FL 2500 The auxiliaries in group c2) are optionally employed in a proportion of from about 0 to 3.0% by weight, preferably from about 0 to 2.0% by weight, based on the total weight of the polymerisable LC material.

In group c3), the radiation-curing auxiliaries include, in particular, polysiloxanes having terminal double bonds which are, for example, a constituent of an acrylate group. Such auxiliaries can be crosslinked by actinic or, for example, electron radiation. These auxiliaries generally combine a number of properties together. In the uncrosslinked state, they can act as antifoams, deaerators, lubricants and flow auxiliaries and/or substrate wetting auxiliaries, while, in the crosslinked state, they increase, in particular, the scratch resistance, for example of coatings or films which can be produced using the compositions according to the invention. The improvement in the gloss properties, for example of precisely those coatings or films, is regarded essentially as a consequence of the action of these auxiliaries as antifoams, deaerators and/or lubricants and flow auxiliaries (in the uncrosslinked state).

Examples of suitable radiation-curing auxiliaries are the products TEGO® Rad 2100, TEGO® Rad 2200, TEGO® Rad 2500, TEGO® Rad 2600 and TEGO® Rad 2700 available from TEGO and the product BYK®-371 available from BYK.

Thermally curing auxiliaries in group c3) contain, for example, primary OH groups, which are able to react with isocyanate groups, for example of the binder.

Examples of thermally curing auxiliaries, which can be used, are the products BYK®-370, BYK®-373 and BYK®-375 available from BYK.

The auxiliaries in group c3) are optionally employed in a proportion of from about 0 to 5.0% by weight, preferably from about 0 to 3.0% by weight, based on the total weight of the polymerisable LC material.

The substrate wetting auxiliaries in group c4) serve, in particular, to increase the wettability of the substrate to be printed or coated, for example, by printing inks or coating compositions, for example compositions according to the invention. The generally attendant improvement in the lubricant and flow behaviour of such printing inks or coating compositions has an effect on the appearance of the finished (for example crosslinked) print or coating.

A wide variety of such auxiliaries are commercially available, for example from Tego as TEGO® Wet KL 245, TEGO® Wet 250, TEGO® Wet 260 and TEGO® Wet ZFS 453 and from BYK as BYK®-306, BYK®-307, BYK®-310, BYK®-333, BYK®-344, BYK®-345, BYK®-346 and Byk®-348.

The auxiliaries in group c4) are optionally employed in a proportion of from about 0 to 3.0% by weight, preferably from about 0 to 1.5% by weight, based on the total weight of the liquid-crystalline composition.

The wetting and dispersion auxiliaries in group c5) serve, in particular, to prevent the flooding and floating and the sedimentation of pigments and are therefore, if necessary, suitable in particular in pigmented compositions.

These auxiliaries stabilize pigment dispersions essentially through electrostatic repulsion and/or steric hindrance of the pigment particles containing these additives, where, in the latter case, the interaction of the auxiliary with the ambient medium (for example binder) plays a major role.

Since the use of such wetting and dispersion auxiliaries is common practice, for example in the technical area of printing inks and paints, the selection of a suitable auxiliary of this type generally does not present the person skilled in the art with any difficulties, if they are used.

Such wetting and dispersion auxiliaries are commercially available, for example from Tego, as TEGO® Dispers 610, TEGO® Dispers 610 S, TEGO® Dispers 630, TEGO® Dispers 700, TEGO® Dispers 705, TEGO® Dispers 710, TEGO® Dispers 720 W, TEGO® Dispers 725 W, TEGO® Dispers 730 W, TEGO® Dispers 735 W and TEGO® Dispers 740 W and from BYK as Disperbyk®, Disperbyk®-107, Disperbyk®-108, Disperbyk®-110, Disperbyk®-111, Disperbyk®-115, Disperbyk®-130, Disperbyk®-160, Disperbyk®-161, Disperbyk®-162, Disperbyk®-163, Disperbyk®-164, Disperbyk®-165, Disperbyk®-166, Disperbyk®-167, Disperbyk®-170, Disperbyk®-174, Disperbyk®-180, Disperbyk®-181, Disperbyk®-182, Disperbyk®-183, Disperbyk®-184, Disperbyk®-185, Disperbyk®-190, Anti-Terra®-U, Anti-Terra®-U 80, Anti-Terra®-P, Anti-Terra®-203, Anti-Terra®-204, Anti-Terra®-206, BYK®-151, BYK®-154, BYK®-155, BYK®-P 104 S, BYK®-P 105, Lactimon®, Lactimon®-WS and Bykumen®.

The amount of the auxiliaries in group c5) used on the mean molecular weight of the auxiliary. In any case, a preliminary experiment is therefore advisable, but this can be accomplished simply by the person skilled in the art.

The hydrophobicizing agents in group c6) can be used to give water-repellent properties to prints or coatings produced, for example, using compositions according to the invention. This prevents or at least greatly suppresses swelling due to water absorption and thus a change in, for example, the optical properties of such prints or coatings. In addition, when the composition is used, for example, as a printing ink in offset printing, water absorption can thereby be prevented or at least greatly reduced.

Such hydrophobicizing agents are commercially available, for example, from Tego as Tego® Phobe WF, Tego® Phobe 1000, Tego® Phobe 1000 S, Tego® Phobe 1010, Tego® Phobe 1030, Tego® Phobe 1010, Tego® Phobe 1010, Tego® Phobe 1030, Tego® Phobe 1040, Tego® Phobe 1050, Tego® Phobe 1200, Tego® Phobe 1300, Tego® Phobe 1310 and Tego® Phobe 1400.

The auxiliaries in group c6) are optionally employed in a proportion of from about 0 to 5.0% by weight, preferably from about 0 to 3.0% by weight, based on the total weight of the polymerisable LC material.

Further adhesion promoters from group c7) serve to improve the adhesion of two interfaces in contact. It is directly evident from this that essentially the only fraction of the adhesion promoter that is effective is that located at one or the other or at both interfaces. If, for example, it is desired to apply liquid or pasty printing inks, coating compositions or paints to a solid substrate, this generally means that the adhesion promoter must be added directly to the latter or the substrate must be pre-treated with the adhesion promoters (also known as priming), i.e. this substrate is given modified chemical and/or physical surface properties.

If the substrate has previously been primed with a primer, this means that the interfaces in contact are that of the primer on the one hand and of the printing ink or coating composition or paint on the other hand. In this case, not only the adhesion properties between the substrate and the primer, but also between the substrate and the printing ink or coating composition or paint play a part in adhesion of the overall multilayer structure on the substrate.

Adhesion promoters in the broader sense which may be mentioned are also the substrate wetting auxiliaries already listed under group c4), but these generally do not have the same adhesion promotion capacity.

In view of the widely varying physical and chemical natures of substrates and of printing inks, coating compositions and paints intended, for example, for their printing or coating, the multiplicity of adhesion promoter systems is not surprising.

Adhesion promoters based on silanes are, for example, 3-aminopropyltrimethoxysilane, 3-aminopropyltriethoxysilane, 3-aminopropylmethyldiethoxysilane, N-aminoethyl-3-aminopropyltrimethoxysilane, N-aminoethyl-3-aminopropylmethyldimethoxysilane, N-methyl-3-aminopropyltrimethoxysilane, 3-ureidopropyltriethoxysilane, 3-methacryloyloxypropyltrimethoxysilane, 3-glycidyloxypropyltrimethoxysilane, 3-mercaptopropyltrimethoxysilane, 3-chloropropyltrimethoxysilane and vinyltrimethoxysilane. These and other silanes are commercially available from Hüls, for example under the tradename DYNASILAN®.

Corresponding technical information from the manufacturers of such additives should generally be used or the person skilled in the art can obtain this information in a simple manner through corresponding preliminary experiments.

However, if these additives are to be added as auxiliaries from group c7) to the polymerisable LC materials according to the invention, their proportion optionally corresponds to from about 0 to 5.0% by weight, based on the total weight of the polymerisable LC material. These concentration data serve merely as guidance, since the amount and

identity of the additive are determined in each individual case by the nature of the substrate and of the printing/coating composition. Corresponding technical information is usually available from the manufacturers of such additives for this case or can be determined in a simple manner by the person skilled in the art through corresponding preliminary experiments.

The auxiliaries for improving the scratch resistance in group c8) include, for example, the abovementioned products TEGO® Rad 2100, TEGO® Rad 2200, TEGO® Rad 2500, TEGO® Rad 2600 and TEGO® Rad 2700, which are available from Tego.

For these auxiliaries, the amount data given for group c3) are likewise suitable, i.e. these additives are optionally employed in a proportion of from about 0 to 5.0% by weight, preferably from about 0 to 3.0% by weight, based on the total weight of the liquid-crystalline composition.

Examples that may be mentioned of light, heat and/or further oxidation stabilizers are the following:

alkylated monophenols, such as 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which have a linear or branched side chain, for example 2,6-dinonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures of these compounds, alkylthiomethylphenols, such as 2,4-dioctylthiomethyl-6-tert-butylphenol, 2,4-dioctylthiomethyl-6-methylphenol, 2,4-dioctylthiomethyl-6-ethylphenol and 2,6-didodecylthiomethyl-4-nonylphenol,

Hydroquinones and alkylated hydroquinones, such as 2,6-di-tert-butyl-4-methoxyphenol, 2,5-di-tert-butylhydroquinone, 2,5-di-tert-amylhydrocrainone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate and bis(3,5-di-tert-butyl-4-hydroxyphenyl)adipate,

Tocopherols, such as α-tocopherol, β-tocopherol, γ-tocopherol, δ-tocopherol and mixtures of these compounds, and tocopherol derivatives, such as tocopheryl acetate, succinate, nicotinate and polyoxyethylenesuccinate ("tocofersolate"),

hydroxylated diphenyl thioethers, such as 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol) and 4,4'-bis(2,6-dimethyl-4-hydroxyphenyl)disulfide,

Alkylidenebisphenols, such as 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecyl-mercaptobutane, ethylene glycol bis[3,3-bis(3'-tert-butyl-4'-hydroxyphenyl)butyrate], bis(3-tert-butyl-4-hydroxy-5-methylphenyl)dicyclopentadiene, bis[2-(3'-tert-butyl-2'-hydroxy-5'-methylbenzyl)-6-tert-butyl-4-methylphenyl]terephthalate, 1,1-bis(3,5-dimethyl-2-hydroxyphenyl)butane, 2,2-bis(3,5-di-tert-butyl-4-hydroxyphenyl)propane, 2,2-bis(5-tert-butyl-4-hydroxy-2-methylphenyl)-4-n-dodecyl-mercaptobutane and 1,1,5,5-tetrakis(5-tert-butyl-4-hydroxy-2-methylphenyl)pentane,

O-, N- and S-benzyl compounds, such as 3,5,3',5'-tetra-tert-butyl-4,4'-dihydroxydibenzyl ether, octadecyl 4-hydroxy-3,5-dimethylbenzylmercaptoacetate, tridecyl 4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide and isooctyl-3,5-di-tert-butyl-4-hydroxybenzylmercaptoacetate,

aromatic hydroxybenzyl compounds, such as 1,3,5-tris(3,5-di-tert-butyl-4-hydroxybenzyl)-2,4,6-trimethyl-benzene, 1,4-bis(3,5-di-tert-butyl-4-hydroxybenzyl)-2,3,5,6-tetramethyl-benzene and 2,4,6-tris(3,5-di-tert-butyl-4-hydroxybenzyl)phenol,

Triazine compounds, such as 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris(3,5-di-tert-butyl-4-hydroxyphenylethyl)-1,3,5-triazine, 1,3,5-tris-(3,5-di-tert-butyl-4-hydroxyphenylpropionyl)hexahydro-1,3,5-triazine, 1,3,5-tris(3,5-dicyclohexyl-4-hydroxybenzyl)isocyanurate and 1,3,5-tris(2-hydroxyethyl)isocyanurate,

Benzylphosphonates, such as dimethyl 2,5-di-tert-butyl-4-hydroxybenzylphosphonate, diethyl 3,5-di-tert-butyl-4-hydroxybenzylphosphonate, dioctadecyl 3,5-di-tert-butyl-4-hydroxybenzylphosphonate and dioctadecyl 5-tert-butyl-4-hydroxy-3-methylbenzylphosphonate,

Acylaminophenols, such as 4-hydroxylauroylanilide, 4-hydroxystearoylanilide and octyl N-(3,5-di-tert-butyl-4-hydroxyphenyl)carbamate,

Propionic and acetic esters, for example of monohydric or polyhydric alcohols, such as methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxalamide, 3-thiaundecanol, 3-thiapentadecanol, trimethylhexanediol, trimethylolpropane and 4-hydroxymethyl-1-phospha-2,6,7-trioxabicyclo[2.2.2]-octane,

Propionamides based on amine derivatives, such as N,N'-bis(3,5-di-tert-butyl-4-hydroxyphenylpropionyl)hexamethylenediamine, N,N'-bis(3,5-di-tert-butyl-4-hydroxyphenylpropionyl)trimethylenediamine and N,N'-bis(3,5-di-tert-butyl-4-hydroxyphenylpropionyl)hydrazine,

Ascorbic acid (Vitamin C) and ascorbic acid derivatives, such as ascorbyl palmitate, laurate and stearate, and ascorbyl sulfate and phosphate,

Antioxidants based on amine compounds, such as N,N'-diisopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octyl-substituted diphenylamine, such as p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis[4-methoxyphenyl)amine, 2,6-di-tert-butyl-4-dimethylaminomethylphenol, 2,4-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octyl-substituted N-phenyl-1-naphthylamine, a mixture of mono- and dialkylated tert-butyl/tert-octyldiphenylamine, a mixture of mono- and dialkylated nonyldiphenylamine, a mixture of mono- and dialkylated dodecyldiphenylamine, a mixture of mono- and dialkylated isopropyl/isohexyldiphenylamine, a mixture of mono- and dialkylated tert-butyldiphenylamine, 2,3-dihydro-3,3-dimethyl-4H-1,4-benzothiazine, phenothiazine, a mixture of mono- and dialkylated tert-butyl/tert-octylphenothiazine, a mixture of mono- and dialkylated tert-octylphenothiazine, N-allylphenothiazine, N,N,N',N'-tetraphenyl-1,4-diaminobut-2-ene, N,N-bis(2,2,6,6-tetramethylpiperidin-4-yl)hexamethylenediamine, bis(2,2,6,6-tetramethylpiperidin-4-yl)sebacate, 2,2,6,6-tetramethylpiperidin-4-one and 2,2,6,6-tetramethylpiperidin-4-ol,

Phosphines,Phosphites and phosphonites, such as triphenylphosnine triphenylphosphite, diphenyl alkyl phosphite, phenyl dialkyl phosphite, tris(nonylphenyl)phosphite, trilauryl phosphite, trioctadecyl phosphite, distearyl pentaerythritol diphosphite, tris(2,4-di-tert-butylphenyl)phosphite, diisodecyl pentaerythritol diphosphite, bis(2,4-di-tert-butylphenyl)pentaerythritol diphosphite, bis(2,6-di-tert-butyl-4-methylphenyl)pentaerythritol diphosphite, diisodecyloxy pentaerythritol diphosphite, bis(2,4-di-tert-butyl-6-methylphenyl)pentaerythritol diphosphite, bis(2,4,6-tris(tert-butylphenyl))pentaerythritol diphosphite, tristearyl sorbitol triphosphite, tetrakis(2,4-di-tert-butylphenyl)4,4'-biphenylenediphosphonite, 6-isooctyloxy-2,4,8,10-tetra-tert-butyl-12H-dibenz[d,g]-1,3,2-dioxaphosphocine, 6-fluoro-2,4,8,10-tetra-tert-butyl-12-methyl-dibenz[d,g]-1,3,2-dioxaphosphocine, bis(2,4-di-tert-butyl-6-methylphenyl)methyl phosphite and bis(2,4-di-tert-butyl-6-methylphenyl)ethyl phosphite,

2-(2'-Hydroxyphenyl)benzotriazoles, such as 2-(2'-hydroxy-5'-methylphenyl)benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3,5'-bis-(α,α-dimethylbenzyl)-2'-hydroxyphenyl)benzotriazole, a mixture of 2-(3'-tert-butyl-2'-hydroxy-5'-(2-octyloxycarbonylethyl)phenyl)-5-chlorobenzotriazole, 2-(3'-tert-butyl-5'-[2-(2-ethylhexyloxy)carbonylethyl]-2'-hydroxy phenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxy phenyl)benzotriazole, 2-(3'-dodecyl-2'-hydroxy-5'-methylphenyl)benzotriazole and 2-(3'-tert-butyl-2'-hydroxy-5'-(2-isooctyloxycarbonylethyl)phenyl benzotriazole, 2,2'-methylenebis[4-(1,1,3,3-tetramethylbutyl)-6-benzotriazol-2-ylphenol]; the product of complete esterification of 2-[3'-tert-butyl-5'-(2-methoxycarbonylethyl)-2'-hydroxyphenyl]-2H-benzotriazole with polyethylene glycol 300; [R-CH2CH2-COO(CH2)3□2, where R=3'-tert-butyl-4'-hydroxy-5'-2H-benzotriazol-2-ylphenyl],

sulfur-containing peroxide scavengers and sulfur-containing antioxidants, such as esters of 3,3'-thiodipropionic acid, for example the lauryl, stearyl, myristyl and tridecyl esters, mercaptobenzimidazole and the zinc salt of 2-mercaptobenzimidazole, dibutylzinc dithiocarbamates, dioctadecyl disulfide and pentaerythritol tetrakis(β-dodecylmercapto)propionate,

2-hydroxybenzophenones, such as the 4-hydroxy, 4-methoxy, 4-octyloxy, 4-decycloxy, 4-dodecyloxy, 4-benzyloxy, 4,2',4'-trihydroxy and 2'-hydroxy-4,4'-dimethoxy derivatives,

Esters of unsubstituted and substituted benzoic acids, such as 4-tert-butylphenyl salicylate, phenyl salicylate, octylphenyl salicylate, dibenzoylresorcinol, bis(4-tert-butylbenzoyl)resorcinol, benzoylresorcinol, 2,4-di-tert-butylphenyl 3,5-di-tert-butyl-4-hydroxybenzoate, hexadecyl-3,5-di-tert-butyl-4-hydroxybenzoate, octadecyl-3,5-di-tert-butyl-4-hydroxybenzoate and 2-methyl-4,6-di-tert-butylphenyl-3,5-di-tert-butyl-4-hydroxybenzoate,

Acrylates, such as ethyl α-cyano-β,β-diphenylacrylate, isooctyl α-cyano-β,β-diphenylacrylate, methyl α-methoxycarbonylcinnamate, methyl α-cyano-p-methyl-p-methoxycinnamate, butyl-α-cyano-β-methyl-p-methoxycinnamate and methyl-α-methoxycarbonyl-p-methoxycinnamate, sterically hindered amines, such as bis(2,2,6,6-tetramethylpiperidin-4-yl)sebacate, bis(2,2,6,6-tetramethylpiperidin-4-yl)succinate, bis(1,2,2,6,6-pentamethylpiperidin-4-yl)sebacate, bis(1-octyloxy-2,2,6,6-tetramethylpiperidin-4-yl)sebacate, bis(1,2,2,6,6-pentamethylpiperidin-4-yl)-n-butyl-3,5-di-tert-butyl-4-hydroxybenzylmalonate, the condensation product of 1-(2-hydroxyethyl)-2,2,6,6-tetramethyl-4-hydroxypiperidine and succinic acid, the condensation product of N,N'-bis(2,2,6,6-tetramethylpiperidin-4-yl)hexamethylenediamine and 4-tert-octylamino-2,6-dichloro-1,3,5-triazine, tris(2,2,6,6-tetramethylpiperidin-4-yl)nitrilotriacetate, tetrakis(2,2,6,6-tetramethylpiperidin-4-yl)1,2,3,4-butanetetracarboxylate, 1,1'-(1,2-ethylene)bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidin-4-yl)2-n-butyl-2-(2-hydroxy-3,5-di-tert-butylbenzyl)malonate, 3-n-octyl-7,7,9,9-tetramethyl-1,3,8-triazaspiro[4.5]decane-2,4-dione, bis(1-octyloxy-2,2,6,6-tetramethylpiperidin-4-yl)sebacate, bis(1-octyloxy-2,2,6,6-tetramethylpiperidin-4-yl)succinate, the condensation product of N,N'-bis(2,2,6,6-tetramethylpiperidin-4-yl)hexamethylenediamine and 4-morpholino-2,6-dichloro-1,3,5-triazine, the condensation product of 2-chloro-4,6-bis(4-n-butylamino-2,2,6,6-tetramethylpiperidin-4-yl)-1,3,5-triazine and 1,2-bis(3-aminopropylamino)ethane, the condensation product of 2-chloro-4,6-di(4-n-butylamino-1,2,2,6,6-pentamethylpiperidin-4-yl)-1,3,5-triazine and 1,2-bis(3-aminopropylamino)ethane, 8-acetyl-3-dodecyl-7,7,9,9-tetramethyl-1,3,8-triazaspiro[4.5]-decane-2,4-dione, 3-dodecyl-1-(2,2,6,6-tetramethylpiperidin-4-yl)pyrrolidine-2,5-dione, 3-dodecyl-1-(1,2,2,6,6-pentamethylpiperidin-4-yl)pyrrolidine-2,5-dione, a mixture of 4-hexadecyloxy- and 4-stearyloxy-2,2,6,6-tetramethylpiperidine, the condensation product of N,N'-bis(2,2,6,6-tetramethylpiperidin-4-yl)hexamethylenediamine and 4-cyclohexylamino-2,6-dichloro-1,3,5-triazine, the condensation product of 1,2-bis(3-aminopropylamino)ethane and 2,4,6-trichloro-1,3,5-triazine, 4-butylamino-2,2,6,6-tetramethylpiperidine, N-(2,2,6,6-tetramethylpiperidin-4-yl)-n-dodecylsuccinimide, N-(1,2,2,6,6-pentamethylpiperidin-4-yl)-n-dodecylsuccinimide, 2-undecyl-7,7,9,9-tetramethyl-1-oxa-3,8-diaza-4-oxo-spiro[4.5]-decane, the condensation product of 7,7,9,9-tetramethyl-2-cycloundecyl-1-oxa-3,8-diaza-4-oxospiro-[4.5]decane and epichlorohydrin, the condensation products of 4-amino-2,2,6,6-tetramethylpiperidine with tetramethylolacetylenediureas and poly(methoxypropyl-3-oxy)-[4(2,2,6,6-tetramethyl)piperidinyl]-siloxane,

Oxalamides, such as 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxalamide, 2-ethoxy-5-tert-butyl-2'-ethoxanilide and its mixture with 2-ethoxy-2'-ethyl-5,4'-di-tert-butoxanilide, and mixtures of ortho-, para-methoxy-disubstituted oxanilides and mixtures of ortho- and para-ethoxy-disubstituted oxanilides, and

2-(2-hydroxyphenyl)-1,3,5-triazines, such as 2,4,6-tris-(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropoxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis-(2,4-dimethylphenyl)-1,3,5-triazine, 2-(2-hydroxy-4-hexyloxyphenyl)-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine and 2-(2-hydroxyphenyl)-4-(4-methoxyphenyl)-6-phenyl-1,3,5-triazine.

In another preferred embodiment the polymerisable LC material comprises one or more specific antioxidant additives, preferably selected from sterically hindered phenolic antioxidants, in particular Octadecyl-3-(3,5-di-tert.butyl-4-hydroxyphenyl)-propionate, which is commercially available as Irganox®1076, from Ciba, Switzerland.

Polymerisation of the RMs is preferably carried out in the presence of an initiator absorbing at the wavelength of the actinic radiation. For this purpose, preferably the polymerisable LC material contains one or more polymerisation initiators.

For example, when polymerising by means of UV light, a photoinitiator can be used that decomposes under UV irradiation to produce free radicals or ions that start the polymerisation reaction. For polymerising acrylate or methacrylate groups preferably, a radical photoinitiator is used. For polymerising vinyl, epoxide or oxetane groups preferably, a cationic photoinitiator is used. It is also possible to use a thermal polymerisation initiator that decomposes when heated to produce free radicals or ions that start the polymerisation. Typical radical photoinitiators are for example the commercially available Irgacure® or Darocure® (Ciba AG). for example Irgacure 127, Irgacure 184, Irgacure 369, Irgacure 651, Irgacure 817, Irgacure 907, Irgacure 1300, Irgacure, Irgacure 2022, Irgacure 2100, Irgacure 2959, or Darcure TPO. In another preferred embodiment, the polymerisable LC material comprises a combination of one or more, more preferably of two or more of such photoinitiators.

A typical cationic photoinitiator is for example UVI 6974 (Union Carbide).

The concentration of the polymerisation initiator(s) as a whole in the polymerisable LC material is preferably from 0.1 to 10%, very preferably from 0.5 to 8%, more preferably 2 to 6%.

Preferably, the polymerisable LC material comprises besides pentaerythritol tetrakis(3,5-di-tert-butyl-4-hydroxyhydrocinnamate),

a) one or more mono-, di- or multireactive polymerisable mesogenic compounds,
b) one or more di- or multireactive polymerisable mesogenic compounds,
c) one or more further antioxidative additives,
d) one or more photoinitiators,
e) optionally one or more adhesion promotors,
f) optionally one or more surfactants,
g) optionally one or more stabilizers,
h) optionally one or more mono-, di- or multireactive polymerisable non-mesogenic compounds,
i) optionally one or more dyes showing an absorption maximum at the wavelength used to initiate photo polymerisation,
j) optionally one or more chain transfer agents,
k) optionally one or more stabilizers,
l) optionally one or more lubricants and flow auxiliaries, and
m) optionally one or more diluents.

More preferably, the polymerisable LC material comprises besides pentaerythritol tetrakis(3,5-di-tert-butyl-4-hydroxyhydrocinnamate),

a) one or more, preferably two or more, monoreactive polymerisable mesogenic compounds, preferably in an amount of 10 to 95 % by weight, very preferably 25 to 85 %, preferably selected from compounds of formulae MRM-1 and/or MRM-7,

b) one or more, preferably two or more, direactive polymerisable mesogenic compounds, preferably in an amount of 10 to 90 % by weight, very preferably 15 to 75 % by weight, preferably selected from the compounds of formula DRMa-1,

c) optionally one or more antioxidative additives, preferably selected from esters of unsubstituted and substituted benzoic acids, in particular Irganox®1076, and if present, preferably in an amount of 0.01 to 2 % by weight, very preferably 0.05 to 1 % by weight,

d) one or more photoinitiators, preferably selected from Irgacure®651, and/or Irgacure®907, preferably in an amount of 0.1 to 10 % by weight, very preferably 0.5 to 8 % by weight,

e) optionally one or more lubricants and flow auxiliaries, preferably selected from BYK®388, and if present, preferably in an amount of 0 to 5 % by weight, very preferably 0.1 to 3 % by weight, and

f) optionally one or more diluents, preferably selected from n-dodecanol, in if present, preferably in an amount of 0 to 5 % by weight, very preferably 0.1 to 3 % by weight, and.

The invention further relates to a method of preparing a polymer film by

- providing a layer of a polymerisable LC material as described above and below onto a substrate,
- polymerising the polymerisable LC material, and
- optionally removing the polymerised LC material from the substrate and/or optionally providing it onto another substrate.

It is also possible to dissolve the polymerisable LC material in a suitable solvent.

In another preferred embodiment, the polymerisable LC material comprises one or more solvents, which are preferably selected from organic solvents. The solvents are preferably selected from ketones such as acetone, methyl ethyl ketone, methyl propyl ketone, methyl isobutyl ketone or cyclohexanone; acetates such as methyl, ethyl or butyl acetate or methyl acetoacetate; alcohols such as methanol, ethanol or isopropyl alcohol; aromatic solvents such as toluene or xylene; alicyclic hydrocarbons such as cyclopentane or cyclohexane; halogenated hydrocarbons such as di- or trichloromethane; glycols or their esters such as PGMEA (propyl glycol monomethyl ether acetate), γ-butyrolactone. It is also possible to use binary, ternary or higher mixtures of the above solvents.

In case the polymerisable LC material contains one or more solvents, the total concentration of all solids, including the RMs, in the solvent(s) is preferably from 10 to 60%.

This solution is then coated or printed onto the substrate, for example by spin-coating, printing, or other known techniques, and the solvent is evaporated off before polymerisation. In most cases, it is suitable to heat the mixture in order to facilitate the evaporation of the solvent.

The polymerisable LC material can be applied onto a substrate by conventional coating techniques like spin coating, bar coating or blade coating. It can also be applied to the substrate by conventional printing techniques which are known to the expert, like for example screen printing, offset printing, reel-to-reel printing, letter press printing, gravure printing, rotogravure printing, flexographic printing, intaglio printing, pad printing, heat-seal printing, ink-jet printing or printing by means of a stamp or printing plate.

Suitable plastic substrates are known to the expert and described in the literature, as for example conventional substrates used in the optical films industry. Especially suitable and preferred substrates for polymerisation are polyester such as polyethyleneterephthalate (PET) or polyethylenenaphthalate (PEN), polyvinylalcohol (PVA), polycarbonate (PC) triacetylcellulose (TAC), or cyclo olefin polymers (COP), or commonly known color filter materials, in particular triacetylcellulose (TAC), cyclo olefin polymers (COP), or commonly known colour filter materials.

The polymerisable LC material preferably exhibits a uniform alignment throughout the whole layer. Preferably the polymerisable LC material exhibits planar or a homeotropic alignment. The Friedel-Creagh-Kmetz rule can be used to predict whether a mixture will adopt planar or homeotropic alignment, by comparing the surface energies of the RM layer and the substrate:

*If $\gamma_{RM} > \gamma_S$ RMs will display homeotropic alignment*
*If $\gamma_{RM} < \gamma_S$ RMs will display planar alignment*

When the surface energy of a substrate is relatively low, the intermolecular forces between the reactive mesogens are stronger than the forces across the RM-substrate interface. Therefore, reactive mesogens align perpendicular to the substrate (homeotropic alignment) in order to maximise the intermolecular forces.

Homeotropic alignment can also be achieved by using amphiphilic materials; they can be added directly to the polymerisable LC material, or the substrate can be treated with these materials in the form of a homeotropic alignment layer. The polar head of the amphiphilic material chemically bonds to the substrate, and the hydrocarbon tail points perpendicular to the substrate. Intermolecular interactions between the amphiphilic material and the RMs promote homeotropic alignment. Commonly used amphiphilic surfactants are described above.

Another method used to promote homeotropic alignment is to apply corona discharge treatment to plastic substrates, generating alcohol or ketone functional groups on the substrate surface. These polar groups can interact with the polar groups present in RMs or surfactants to promote homeotropic alignment.

When the surface tension of the substrate is greater than the surface tension of the RMs, the force across the interface dominates. The interface energy is minimised if the reactive mesogens align parallel with the substrate, so the long axis of the RM can interact with the substrate. One way planar alignment can be promoted is by coating the substrate with a polyimide layer, and then rubbing the alignment layer with a velvet cloth.

Other suitable alignment layers are known in the art, like for example rubbed polyimide or alignment layers prepared by photoalignment as described in US 5,602,661, US 5,389,698 or US 6,717,644.

In general, reviews of alignment techniques are given for example by I. Sage in "Thermotropic Liquid Crystals", edited by G. W. Gray, John Wiley & Sons, 1987, pages 75-77; and by T. Uchida and H. Seki in "Liquid Crystals - Applications and Uses Vol. 3", edited by B. Bahadur, World Scientific Publishing, Singapore 1992, pages 1-63. A further review of alignment materials and techniques is given by J. Cognard, Mol. Cryst. Liq. Cryst. 78, Supplement 1 (1981), pages 1-77.

For the production of the polymer films according to the invention, the polymerisable compounds in the polymerisable LC material are polymerised or crosslinked (if one compound contains two or more polymerisable groups) by in-situ polymerisation.

The polymerisation can be carried out in one step. It is also possible to polymerise or crosslink the compounds in a second step, which have not reacted in the first step ("end curing").

In a preferred method of preparation the polymerisable LC material is coated onto a substrate and subsequently polymerised for example by exposure to heat or actinic radiation as described for example in WO 01/20394, GB 2,315,072 or WO 98/04651.

Polymerisation of the LC material is preferably achieved by exposing it to actinic radiation. Actinic radiation means irradiation with light, like UV light, IR light or visible light, irradiation with X-rays or gamma rays, or irradiation with high-energy particles, such as ions or electrons. Preferably, polymerisation is carried out by photo irradiation, in particular with UV light. As a source for actinic radiation, for example a single UV lamp or a set of UV lamps can be used. When using a high lamp power the curing time can be reduced. Another possible source for photo radiation is a laser, like e.g. a UV laser, an IR laser, or a visible laser.

The curing time is dependent, inter alia, on the reactivity of the polymerisable LC material, the thickness of the coated layer, the type of polymerisation initiator and the power of the UV lamp. The curing time is preferably ≤ 5 minutes, very preferably ≤ 3 minutes, most preferably ≤ 1 minute. For mass production, short curing times of ≤ 30 seconds are preferred.

A suitable UV radiation power is preferably in the range from 5 to 200 mWcm-2, more preferably in the range from 50 to 175 $mWcm^{-2}$ and most preferably in the range from 100 to 150 $mWcm^{-2}$.

In connection with the applied UV radiation and as a function of time, a suitable UV dose is preferably in the range from 25 to 7200 $mJcm^{-2}$ more preferably in the range from 500 to 7200 $mJcm^{-2}$ and most preferably in the range from 3000 to 7200 $mJcm^{-2}$.

Polymerisation is preferably performed under an inert gas atmosphere, preferably in a heated nitrogen atmosphere, but also polymerisation in air is possible.

Polymerisation is preferably performed at a temperature from 1 to 70°C, more preferably 5 to 50°C, even more preferably 15 to 30°C.

The polymerised LC film according to the present invention has good adhesion to plastic substrates, in particular to TAC, COP, and colour filters. Accordingly, it can be used as adhesive or base coating for subsequent LC layers which otherwise would not well adhere to the substrates.

The preferred thickness of a polymerised LC film according to the present invention is determined by the optical properties desired from the film or the final product. For example, if the polymerised LC film does not mainly act as an optical layer, but e.g. as adhesive, aligning or protection layer, its thickness is preferably not greater than 1 μm, in particular not greater than 0.5 μm, very preferably not greater than 0.2 μm.

For example, uniformly homeotropic or planar aligned polymer films of the present invention can be used as retardation or compensation film for example in LCDs to improve the contrast and brightness at large viewing angles and reduce the chromaticity. They can be used outside the switchable liquid-crystalline cell in an LCD, or between the substrates, usually glass substrates, forming the switchable liquid-crystalline cell and containing the switchable liquid-crystalline medium (in cell application).

For optical applications of the polymer film, it preferably has a thickness of from 0.5 to 10 μm, very preferably from 0.5 to 5 μm, in particular from 0.5 to 3 μm.

The optical retardation ($\delta(\lambda)$) of a polymer film as a function of the wavelength of the incident beam ($\lambda$) is given by the following equation (7):

$$\delta(\lambda) = (2\pi\Delta n \cdot d)/\lambda \qquad (7)$$

wherein ($\Delta n$) is the birefringence of the film, (d) is the thickness of the film and $\lambda$ is the wavelength of the incident beam.

According to Snellius law, the birefringence as a function of the direction of the incident beam is defined as

$$\Delta n = \sin\Theta / \sin\Psi \qquad (8)$$

wherein $\sin\Theta$ is the incidence angle or the tilt angle of the optical axis in the film and $\sin\Psi$ is the corresponding reflection angle.

Based on these laws, the birefringence and accordingly optical retardation depends on the thickness of a film and the tilt angle of optical axis in the film (cf. Berek's compensator). Therefore, the skilled expert is aware that different optical retardations or different birefringence can be induced by adjusting the orientation of the liquid-crystalline molecules in the polymer film.

The birefringence ($\Delta n$) of the polymer film according to the present invention is preferably in the range from 0.01 to 0.30, more preferable in the range from 0.01 to 0.25 and even more preferable in the range from 0.01 to 0.16.

The optical retardation as a function of the thickness of the polymer film according to the present invention is less than 200 nm, preferable less than 180 nm and even more preferable less than 150 nm.

Especially with regard to the in cell application, the polymer films according to the present invention exhibit a high temperature stability. Thus, the polymer films exhibit temperature stability up to 300°C, preferably up to 250°C, more preferably up to 230°C.

The polymer film of the present invention can also be used as alignment film for other liquid-crystalline or RM materials. For example, they can be used in an LCD to induce or improve alignment of the switchable liquid-crystalline medium, or to align a subsequent layer of polymerisable LC material coated thereon. In this way, stacks of polymerised LC films can be prepared.

In summary, the polymerised LC films and polymerisable LC materials according to the present invention are useful in optical elements like polarisers, compensators, alignment layer, circular polarisers or colour filters in liquid crystal displays or projection systems, decorative images, for the preparation of liquid crystal or effect pigments, and especially in reflective films with spatially varying reflection colours, e.g. as multicolour image for decorative, information storage or security uses, such as non-forgeable documents like identity or credit cards, banknotes etc..

The polymerised LC films according to the present invention can be used in displays of the transmissive or reflective type. They can be used in conventional OLED displays or LCDs, in particular LCDs of the DAP (deformation of aligned phases) or VA (vertically aligned) mode, like e.g. ECB (electrically controlled birefringence), CSH (colour super homeotropic), VAN or VAC (vertically aligned nematic or cholesteric) displays, MVA (multi-domain vertically aligned) or PVA (patterned vertically aligned) displays, in displays of the bend mode or hybrid type displays, like e.g. OCB (optically compensated bend cell or optically compensated birefringence), R-OCB (reflective OCB), HAN (hybrid aligned nematic) or pi-cell ($\pi$-cell) displays, furthermore in displays of the TN (twisted nematic), HTN (highly twisted nematic) or STN (super twisted nematic) mode, in AMD-TN (active matrix driven TN) displays, or in displays of the IPS (in plane switching) mode which are also known as 'super TFT' displays. Especially preferred are VA, MVA, PVA, OCB, and pi-cell displays.

The polymerisable material and polymer films according to the present invention are especially useful for a 3D display as described in EP 0 829 744, EP 0 887 666 A2, EP 0 887 692, US 6,046,849, US 6,437,915 and in "Proceedings o the SID 20th International Display Research Conference, 2000", page 280. A 3D display of this type comprising a polymer film according to the invention is another object of the present invention.

The present invention is described above and below with particular reference to the preferred embodiments. It should be understood that various changes and modifications might be made therein without departing from the scope of the invention.

Many of the compounds or mixtures thereof mentioned above and below are commercially available. All of these compounds are either known or can be prepared by methods which are known per se, as described in the literature (for example in the standard works such as Houben-Weyl, Methoden der Organischen Chemie [Methods of Organic Chemistry], Georg-Thieme-Verlag, Stuttgart), to be precise under reaction conditions which are known and suitable for said reactions. Use may also be made here of variants which are known per se, but are not mentioned here. Unless the

context clearly indicates otherwise, as used herein plural forms of the terms herein are to be construed as including the singular form and vice versa.

Throughout this application, unless explicitly stated otherwise, all concentrations are given in weight percent and relate to the respective complete mixture, all temperatures are given in degrees centigrade (Celsius) and all differences of temperatures in degrees centigrade. All physical properties have been and are determined according to "Merck Liquid Crystals, Physical Properties of Liquid Crystals", Status Nov. 1997, Merck KGaA, Germany and are given for a temperature of 20 °C, unless explicitly stated otherwise. The optical anisotropy ($\Delta n$) is determined at a wavelength of 589.3 nm.

The invention will now be described in more detail by reference to the following working examples, which are illustrative only and do not limit the scope of the invention.

The examples below serve to illustrate the invention without limiting it.

## Examples

Utilized RMs

For the following mixtures, the following RMs are utilized:

| RM | No. |
|---|---|
| 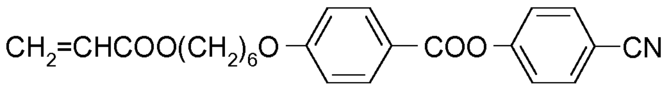 | 1 |
| 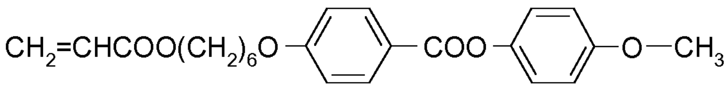 | 2 |
| 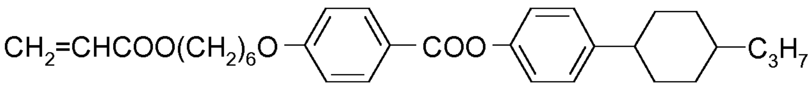 | 3 |
| 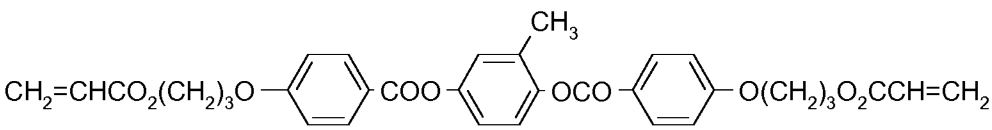 | 4 |
| 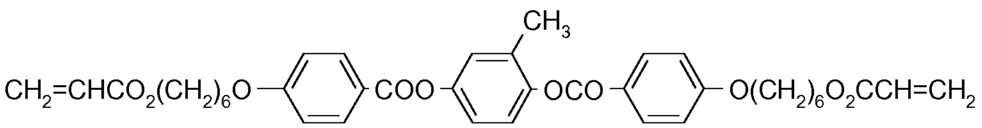 | 5 |

Unless stated explicitly otherwise, the following procedures are applied:

General coating and curing procedure of RM films

The polymerisable LC material is spin coated on raw glass as substrate with 1300 rpm for 30 sec. The coated RM film is then annealed to the substrate at an elevated temperature of 50°C for 1 minute.

Curing the polymerisable LC material is achieved via exposure of the polymerisable LC material to UV light under a nitrogen atmosphere. Typical cure conditions are curing in an Omnicure lamp with 365nm filter at 180mW for 1.1 sec.

Ellipsometry

To measure the retardation of cured films, a Carys-eclipse ellipsometer is used. Retardation is analysed between angles -60° to +40°, collected every 20° using a light source with a wavelength of 550nm. The raw data is then processed to calculate $R_{th}$ (for homeotropic aligned films) or $R_0$ (for planar aligned films).

Durability testing

To quantify the durability of RM films, the polymerisable LC material is coated and cured. The optical properties are analysed as given above under Section "Elipsometry". The film is then placed in an oven at 150°C for a total time of 24h. At 24h, the film is taken out of the oven and cooled to room temperature before recording the retardation profile again. The $R_{th}$ (for homeotropic aligned films) or $R_0$ (for planar aligned films) of each film is recorded and used to quantify percentage drop in $R_{th}$ (for homeotropic aligned films) or $R_0$ (for planar aligned films) after being subjected to high temperatures. Three films of each mixture are produced and treated in identical conditions during each experiment to pinpoint and minimise erroneous results. In each experiment, a baseline of a mixture without alterations is also included as a reference point to compare the altered mixtures. The baseline films would undergo exactly the same treatment and minimise differences between experiments.

Alignment and Adhesion on a COP Substrate

The quality of the alignment is checked by eye through crossed polarizers as well as via polarized optical microscopy.

The adhesion of the film to the substrate is tested using the Nichiban 305 tape test. The film is scored in a cross-hatched pattern of 100 squares. The 305 tape is thereby applied over the polymer film in the cross-hatched region and removed sharply. The adhesion is deemed to pass if the film was not removed.

Yellowing

In order to test the yellowing effect the polymerisable LC material is dissolved in cyclopentanone and methylethylketone (MEK) (2:1) and kept in dark conditions at room temperature for 75h. The solution is then measured via UV-Vis spectroscopy to quantify the degree of yellowing of the solution.

The results of each of the above described test, if applicable, are summarized in the following tables.

**Example 1:**

The following mixture RMM-1 is prepared.

| RMM-1 | |
|---|---|
| Compound | Conc. %-w/w |
| 1 | 19.78 |
| 3 | 34.64 |
| 4 | 22.25 |
| 5 | 22.25 |
| Irganox®1076 | 0.08 |
| Irgacure®651 | 1.00 |
| Irgacure651® is a photoinitiator, Irganox1076® a stabilizer, both being commercially available (Ciba AG, Basel, Switzerland). | |

Testing Mixtures were prepared by doping 1.0% of Irganox®1076 (comparative example), BHT (comparative example) and Irganox®1010 (according to the present invention) into a bulk of RMM-1. From each testing mixture, three films are prepared using the above-described method. In each case, the $R_{th}$ is recorded. The films are then placed in a dry oven at 150°C for 24 hours and the $R_{th}$ are measured again. The difference in $R_{th}$ is then calculated as a percentage of the original value to determine how much retardance the film has lost in the oven test. The results are summarized in the following table:

| Mixture | 0h Rth | 24h Rth | % Of initial | Average % Of Initial | % Error |
|---|---|---|---|---|---|
| RMM-1 | 205.49 | 171.01 | 83.22 | 84.15 | 1.63 |
| | 203.94 | 175.45 | 86.03 | | |
| | 208.02 | 173.07 | 83.2 | | |
| RMM-1 + 1% Irganox 1076 | 208.9 | 184.59 | 88.36 | 89.57 | 1.71 |
| | 208.7 | 189.46 | 90.78 | | |
| | 219.8 | Tilted Film | | | |
| RMM-1 + 1% BHT | 204.11 | 174.55 | 85.52 | 85.30 | 0.21 |
| | 203.97 | 173.57 | 85.09 | | |
| | 204.26 | 174.2 | 85.29 | | |
| RMM-1 + 1% Irganox 1010 (according to the present invention) | 203.43 | 189.28 | 93.04 | 92.89 | 0.16 |
| | 202.43 | 187.71 | 92.73 | | |
| | 201.87 | 187.54 | 92.9 | | |

**Example 2:**

The following mixture RMM-2 is prepared.

| RMM-2 | |
|---|---|
| Compound | Conc. %-w/w |
| 1 | 18.66 |
| 3 | 32.66 |
| 4 | 20.99 |
| 5 | 20.99 |
| Irganox®1076 | 0.08 |
| Irgacure®907 | 5.60 |
| n-dodecanol | 1.02 |
| Irgacure907® is a photoinitiator being commercially available (Ciba AG, Basel, Switzerland). | |

A testing Mixture is prepared by doping 1.0% of Irganox®1010 (according to the present invention) into a bulk of RMM-2. From the mixtures (either with or without Irganox®1010), three films are prepared using the above described method. In each case, the $R_{th}$ is recorded. The films are then placed in a dry oven at 150°C for 24 hours and the $R_{th}$ are measured again. The difference in $R_{th}$ is then calculated as a percentage of the original value to determine how much retardance the film has lost in the oven test. The results are summarized in the following table:

| Mixture | 0h Rth | 24h Rth | % Of initial | Average % Of Initial | % Error |
|---|---|---|---|---|---|
| RMM-2 | 134.03 | 109.46 | 81.67 | 82.31 | 0.91 |
| | 137.11 | 113.73 | 82.95 | | |
| | 145.92 | Tilted Film | | | |
| RMM-2 + 1% Irganox1010 | 157.60 | 132.36 | 83.98 | 83.74 | 0.70 |
| | 157.89 | 133.09 | 84.29 | | |
| | 154.00 | 127.75 | 82.95 | | |

**Example 3:**

The following mixture RMM-3 is prepared.

| RMM-3 | |
|---|---|
| Compound | Conc. %-w/w |
| 1 | 23.86 |
| 3 | 39.77 |
| 4 | 14.84 |
| 5 | 14.84 |
| Irganox®1076 | 0.08 |
| Irgacure®907 | 5.60 |
| n-dodecanol | 1.00 |

A testing Mixture is prepared by doping 1.0% of Irganox®1010 (according to the present invention) into a bulk of RMM-3. From the mixtures (either with or without Irganox®1010), three films are prepared using the above described method. In each case, the $R_{th}$ is recorded. The films are then placed in a dry oven at 150°C for 24 hours and the $R_{th}$ are measured again. The difference in $R_{th}$ is then calculated as a percentage of the original value to determine how much retardance the film has lost in the oven test. The results are summarized in the following table:

| Mixture | 0h Rth | 24h Rth | % Of initial | Average % Of Initial | % Error |
|---|---|---|---|---|---|
| RMM-3 | 148.10 | 107.73 | 72.74 | 72.11 | 1.15 |
| | 143.81 | 101.80 | 70.79 | | |
| | 139.65 | 101.67 | 72.81 | | |
| RMM-3 + 1% Irganox1010 | 140.54 | 106.07 | 75.47 | 76.00 | 0.98 |
| | 137.48 | 106.04 | 77.13 | | |
| | 138.76 | 104.61 | 75.39 | | |

**Example 4:**

The following mixture RMM-4 is prepared.

| RMM-4 | |
|---|---|
| Compound | Conc. %-w/w |
| 1 | 38.70 |
| 3 | 39.76 |
| 4 | 14.84 |
| Irganox®1076 | 0.08 |
| Irgacure®651 | 1.00 |
| n-dodecanol | 1.02 |

A testing mixture is prepared by doping 1.0% of Irganox®1010 (according to the present invention) into a bulk of RMM-4. From the mixtures (either with or without Irganox®1010), three films are prepared using the above described method. In each case, the $R_{th}$ is recorded. The films are then placed in a dry oven at 150°C for 24 hours and the $R_{th}$ are measured again. The difference in $R_{th}$ is then calculated as a percentage of the original value to determine how much retardance the film has lost in the oven test. The results are summarized in the following table:

| Mixture | 0h Rth | 24h Rth | % Of initial | Average % Of Initial | % Error |
|---|---|---|---|---|---|
| RMM-4 | 132.31 | Tilted Film | | 78.34 | 2.37 |
| | 131.87 | 101.09 | 76.66 | | |
| | 131.51 | 105.23 | 80.02 | | |
| RMM4 + 1% Irganox1010 | 129.37 | 107.09 | 82.78 | 84.14 | 1.18 |
| | 128.18 | 108.62 | 84.74 | | |
| | 127.96 | 108.62 | 84.89 | | |

**Example 5:**

The following mixture RMM-5 is prepared.

| RMM-5 | |
|---|---|
| Compound | Conc. %-w/w |
| 1 | 37.70 |
| 3 | 34.30 |
| 4 | 21.30 |
| Irganox®1076 | 0.08 |
| Irgacure®651 | 5.60 |
| n-dodecanol | 1.02 |

A testing mixture is prepared by doping 1.0% of Irganox®1010 (according to the present invention) into a bulk of RMM-5. From the mixtures (either with or without Irganox®1010), three films are prepared using the above described method. In each case, the $R_{th}$ is recorded. The films are then placed in a dry oven at 150°C for 24 hours and the $R_{th}$ are measured again. The difference in $R_{th}$ is then calculated as a percentage of the original value to determine how much retardance the film has lost in the oven test. The results are summarized in the following table:

| Mixture | 0h Rth | 24h Rth | % Of initial | Average % Of Initial | % Error |
|---|---|---|---|---|---|
| RMM-5 | 128.76 | 96.62 | 75.04 | 74.15 | 1.08 |
| | 129.84 | 96.68 | 74.46 | | |
| | 130.18 | 94.97 | 72.96 | | |
| RMM-5 + 1% Irganox1010 | 125.80 | 104.75 | 83.27 | 84.04 | 0.67 |
| | 127.19 | 107.42 | 84.46 | | |
| | 127.66 | 107.73 | 84.39 | | |

**Example 6:**

The following mixture RMM-6 is prepared.

| RMM-6 | |
|---|---|
| Compound | Conc. %-w/w |
| 1 | 38.64 |
| 3 | 34.64 |
| 4 | 21.11 |

(continued)

| RMM-6 | |
|---|---|
| Compound | Conc. %-w/w |
| Irganox®1076 | 0.08 |
| Irgacure®651 | 5.53 |

Testing mixtures are prepared by doping 1.0% Irgafos®168 (comparative example) being commercially available (Ciba AG, Basel, Switzerland), 1.0% of Irganox®1010 (according to the present invention) into a bulk of RMM-6, respectively. From each of the mixtures (either with or without further additives), three films are prepared using the above described method. In each case, the $R_{th}$ is recorded. The films are then placed in a dry oven at 150°C for 70 hours and the $R_{th}$ are measured again. The difference in $R_{th}$ is then calculated as a percentage of the original value to determine how much retardance the film has lost in the oven test. The results are summarized in the following table:

| Mixture | 0h $R_{th}$ | 70h $R_{th}$ | % of Initial | Average % Of Initial | % Error |
|---|---|---|---|---|---|
| RMM-6 | 170.68 | 126.50 | 74.12 | 74.65 | 0.51 |
| | 172.41 | 129.55 | 75.14 | | |
| | 173.59 | 129.66 | 74.70 | | |
| RMM-6 + 1% Irgafos 168 | 180.02 | 136.81 | 76.00 | 77.01 | 1.18 |
| | 171.61 | 131.66 | 76.72 | | |
| | 173.50 | 135.86 | 78.31 | | |
| RMM-6 + 1% Irganox 1010 | 160.26 | 135.24 | 84.39 | 85.58 | 1.08 |
| | 163.35 | 141.29 | 86.49 | | |
| | 162.18 | 139.25 | 85.87 | | |

**Example 7:**

The mixture RMM-6 is prepared.

Testing mixtures are prepared by doping 1.0% Irgafos®168 and 0.08% Irganox®1010 and 1.0% of Irganox®1010 and 0.08% Irganox®1076 into a bulk of RMM-6, respectively. From each of the mixtures (either with or without further additives), three films are prepared using the above described method. In each case, the $R_{th}$ is recorded. The films are then placed in a dry oven at 150°C for 70 hours and the $R_{th}$ are measured again. The difference in $R_{th}$ is then calculated as a percentage of the original value to determine how much retardance the film has lost in the oven test. The results are summarized in the following table:

| Mixture | 0h $R_{th}$ | 70h $R_{th}$ | % of Initial | Average % Of Initial | % Error |
|---|---|---|---|---|---|
| RMM-6 | 168,68 | 126,71 | 75,12 | 75,42 | 0,72 |
| | 169,25 | 129,05 | 76,25 | | |
| | 169,88 | 127,24 | 74,90 | | |
| RMM-6 + 1% Irgafos 168 +0.08 Irganox 1010 | 170,02 | 135,76 | 79,85 | 78,98 | 0,87 |
| | 170,98 | 135,04 | 78,98 | | |
| | 168,90 | 131,92 | 78,11 | | |
| RMM-6 + 1% Irganox 1010 + 0.08 Irganox 1076 | 165,43 | 144,12 | 87,12 | 87,22 | 0,40 |
| | 167,81 | 145,81 | 86,89 | | |
| | 166,67 | 146,10 | 87,66 | | |

**Example 8:**

The following mixture RMM-7 is prepared.

| RMM-7 | |
|---|---|
| Compound | Conc. %-w/w |
| 1 | 28.00 |
| 4 | 53.20 |
| 5 | 13.30 |
| BYK®388 | 0.50 |
| Irgacure®907 | 5.00 |
| BYK®388 is a commercially available levelling agent (BYK, Wesel, Germany). | |

Testing Mixtures were prepared by doping 1.0% of Irganox®1076 (comparative example), BHT (comparative example) and Irganox®1010 (according to the present invention) into a bulk of RMM-7. From each testing mixture, three films are prepared by spin coating the corresponding mixtures on raw glass at 3000 rpm for 30 sec, annealing at 50°C for 60 sec, and curing at 250 to 450 nm with an Omnicure lamp in air with 150 mW for 2 sec. In each case, the $R_0$ is recorded. The films are then placed in a dry oven at 150°C for 24 hours and the $R_0$ are measured again. The difference in $R_0$ is then calculated as a percentage of the original value to determine how much retardance the film has lost in the oven test. The results are summarized in the following table:

| Mixture | 0h $R_0$ | 24h $R_0$ | % Of initial | Average % Of Initial | % Error |
|---|---|---|---|---|---|
| RMM1290 | 167.99 | 90.84 | 54.07 | 54.46 | 0.43 |
| | 171.01 | 93.00 | 54.38 | | |
| | 175.88 | 96.60 | 54.92 | | |
| RMM1290 + 1% Irganox 1010 | 189.88 | 116.80 | 61.51 | 59.72 | 1.56 |
| | 188.16 | 110.98 | 58.98 | | |
| | 188.69 | 110.68 | 58.66 | | |
| RMM1290 + 1% BHT | 192.16 | 106.44 | 55.39 | 54.91 | 0.42 |
| | 191.53 | 104.91 | 54.77 | | |
| | 191.88 | 104.73 | 54.58 | | |
| RMM1290 + 1% Irganox 1076 | 198.06 | 108.11 | 54.58 | 54.24 | 0.32 |
| | 200.51 | 108.15 | 53.94 | | |
| | 203.48 | 110.31 | 54.21 | | |

**Example 8:**

The mixture RMM-7 is prepared.

A testing mixture is prepared by doping 1.0% of Irganox®1010 (according to the present invention) into a bulk of RMM-7. From the mixtures (either with or without Irganox®1010), three films are prepared using the above described general method. In each case, the $R_0$ is recorded. The films are then placed in a dry oven at 150°C for 24 hours and the $R_0$ are measured again. The difference in $R_0$ is then calculated as a percentage of the original value to determine how much retardance the film has lost in the oven test. The results are summarized in the following table:

| Mixture | 0h $R_0$ | 24h $R_0$ | % Of initial | Average % Of Initial | % Error |
|---|---|---|---|---|---|
| RMM-7 | 183.92 | 154.60 | 84.06 | 84.44 | 0.46 |
| | 184.00 | 155.13 | 84.31 | | |
| | 183.53 | 155.92 | 84.96 | | |
| RMM-7 + 1% Irganox 1010 | 185.58 | 171.62 | 92.48 | 92.71 | 0.23 |
| | 182.82 | 169.93 | 92.95 | | |
| | 184.12 | 170.67 | 92.70 | | |

**Example 9:**

The mixture RMM-8 is prepared.

| RMM-8 | |
|---|---|
| Compound | Conc. %-w/w |
| 1 | 7.00 |
| 2 | 21.00 |
| 4 | 66.50 |
| BYK®388 | 0.50 |
| Irgacure®907 | 5.00 |

A testing mixture is prepared by doping 1.0% of Irganox®1010 (according to the present invention) into a bulk of RMM-8. From the mixtures (either with or without Irganox®1010), three films are prepared using the above described general method. In each case, the $R_0$ is recorded. The films are then placed in a dry oven at 150°C for 24 hours and the $R_0$ are measured again. The difference in $R_0$ is then calculated as a percentage of the original value to determine how much retardance the film has lost in the oven test. The results are summarized in the following table:

| Mixture | 0h $R_0$ | 24h $R_0$ | % Of initial | Average % Of Initial | % Error |
|---|---|---|---|---|---|
| RMM-8 | 176.61 | 157.25 | 89.04 | 89.90 | 1.17 |
| | 176.89 | 161.37 | 91.23 | | |
| | 177.88 | 159.08 | 89.43 | | |
| RMM-8 + 1% Irganox 1010 | 177.38 | 167.77 | 94.58 | 94.07 | 0.45 |
| | 178.41 | 167.21 | 93.73 | | |
| | 180.15 | 169.19 | 93.91 | | |

## Claims

**1.** Polymerisable LC material comprising at least one monoreactive mesogenic compound selected from formula MRM,

$$P^1\text{-}Sp^1\text{-}MG\text{-}R \qquad MRM$$

wherein $P^1$, $Sp^1$ and MG have the meanings as given in formula DRM,

R is F, Cl, Br, I, -CN, $-NO_2$, -NCO, -NCS, -OCN, -SCN, $-C(=O)NR^xR^y$, -C(=O)X, $-C(=O)OR^x$, $-C(=O)R^y$, $-NR^xR^y$, -OH, $-SF_5$, optionally substituted silyl, straight chain or branched alkyl, alkoxy, alkylcarbonyl, alkoxycarbonyl, alkylcarbonyloxy or alkoxycarbonyloxy with 1 to 12 C atoms, wherein one or more H atoms are optionally replaced by F or Cl,
X is halogen,

$R^x$ and $R^y$ are independently of each other H or alkyl with 1 to 12 C-atoms,

at least one di- or multireactive mesogenic compound selected of formula DRM

$P^1$-$Sp^1$-MG-$Sp^2$-$P^2$ DRM

wherein

$P^1$ and $P^2$ independently of each other denote a polymerisable group,
$Sp^1$ and $Sp^2$ independently of each other are a spacer group or a single bond,
MG is a rod-shaped mesogenic group selected of formula MG,

$-(A^1-Z^1)_n-A^2-$ MG

Wherein,

$A^1$ and $A^2$ denote, in case of multiple occurrence independently of one another, an aromatic or alicyclic group, which optionally contains one or more heteroatoms selected from N, O and S, and is optionally mono- or polysubstituted by $L^1$,
$L^1$ is P-Sp-, F, Cl, Br, I, -CN, $-NO_2$, -NCO, -NCS, -OCN, -SCN, $-C(=O)NR^{00}R^{000}$, $-C(=O)OR^{00}$, $-C(=O)R^{00}$, $-NR^{00}R^{000}$, -OH, -SF5, optionally substituted silyl, aryl or heteroaryl with 1 to 12 C atoms, straight chain or branched alkyl, alkoxy, alkylcarbonyl, alkoxycarbonyl, alkylcarbonyloxy or alkoxycarbonyloxy with 1 to 12, C atoms, wherein one or more H atoms are optionally replaced by F or Cl,
$R^{00}$ and $R^{000}$ independently of each other denote H or alkyl with 1 to 12 C-atoms,
$Z^1$ denotes, in case of multiple occurrence independently of one another, -O-, -S-, -CO-, -COO-, -OCO-, -S-CO-, -CO-S-, -O-COO-, $-CO-NR^{00}-$, $-NR^{00}-CO-$, $-NR^{00}-CO-NR^{000}$, $-NR^{00}-CO-O-$, $-O-CO-NR^{00}-$, $-OCH_2-$, $-CH_2O-$, $-SCH_2-$, $-CH_2S-$, $-CF_2O-$, $-OCF_2-$, $-CF_2S-$, $-SCF_2-$, $-CH_2CH_2-$, $-(CH_2)_{n1}$, $-CF_2CH_2-$, $-CH_2CF_2-$, $-CF_2CF_2-$, -CH=N-, -N=CH-, -N=N-, $-CH=CR^{00}-$, $-CY^1=CY^2-$, -C≡C-, -CH=CH-COO-, -OCO-CH=CH- or a single bond,
$Y^1$ and $Y^2$ independently of each other denote H, F, Cl or CN,
n is 1, 2, 3 or 4, and
n1 is an integer from 1 to 10,

and pentaerythritol tetrakis(3,5-di-tert-butyl-4-hydroxyhydrocinnamate).

**2.** Polymerisable LC material according to claim 1, wherein at least one direactive mesogenic compound is selected from the following formulae,

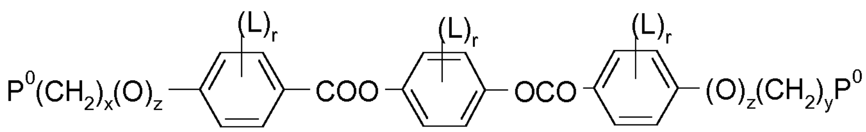
DRMa1

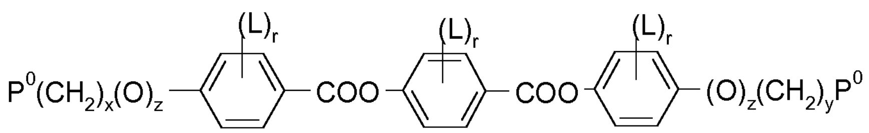
DRMa2

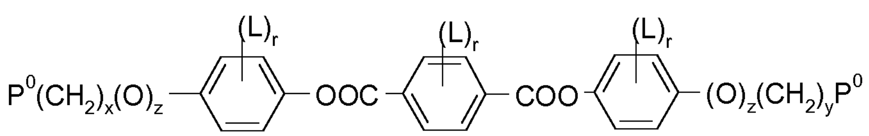
DRMa3

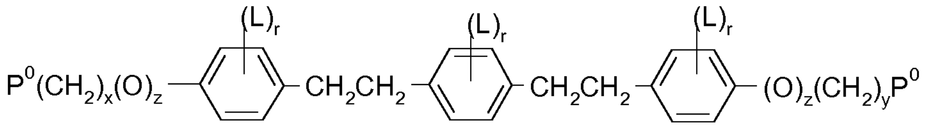

DRMa4

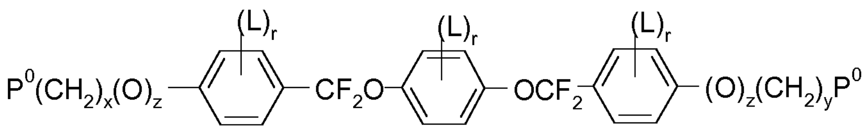

DRMa5

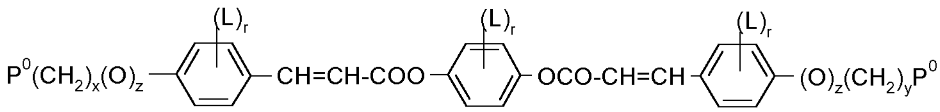

DRMa6

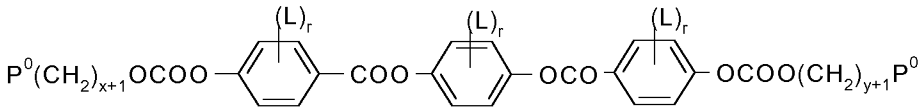

DRMa7

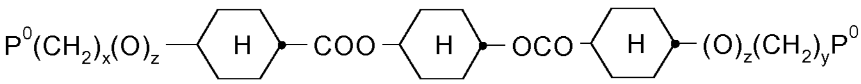

DRMb

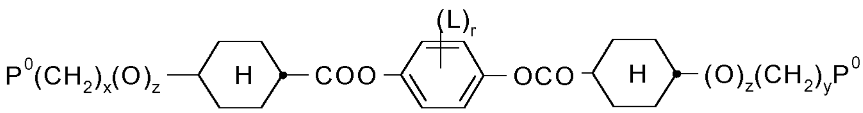

DRMc

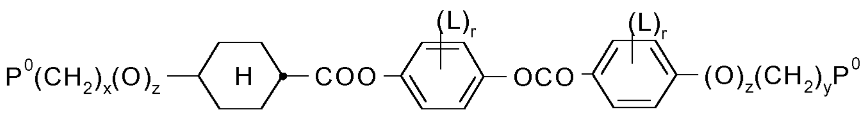

DRMd

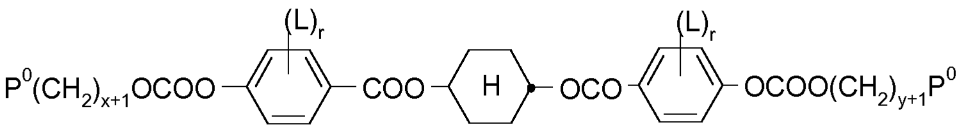

DRMe

wherein

$P^0$ is, in case of multiple occurrence independently of one another, an acryl, methacryl, oxetane, epoxy, vinyl, heptadiene, vinyloxy, propenyl ether or styrene group,
L has on each occurrence identically or differently one of the meanings given for $L^1$ in formula DRM,
r is 0, 1, 2, 3 or 4,
x and y are independently of each other 0 or identical or different integers from 1 to 12,
z is each and independently, 0 or 1, with z being 0 if the adjacent x or y is 0.

**3.** Polymerisable LC material according to one of claim 1 or 2, wherein at least one monoreactive mesogenic compound is selected from the following formulae,

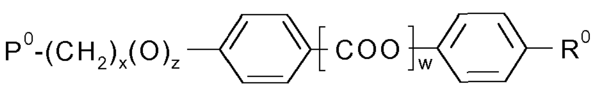

MRM1

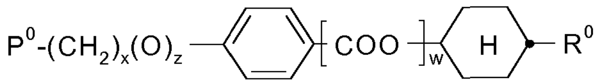

MRM2

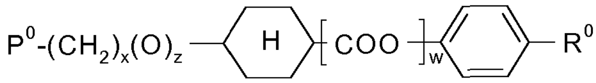

MRM3

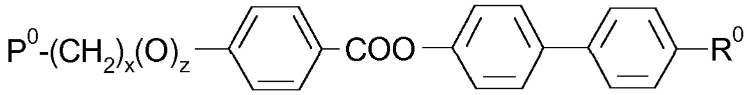

MRM4

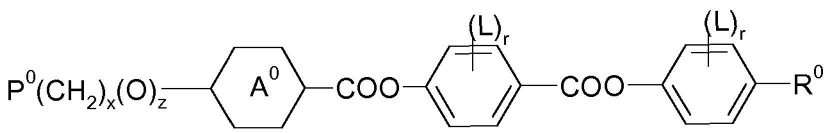

MRM5

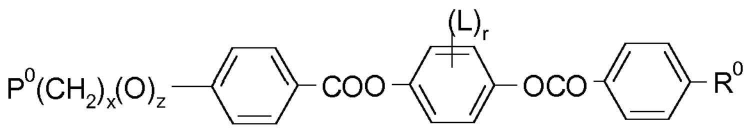

MRM6

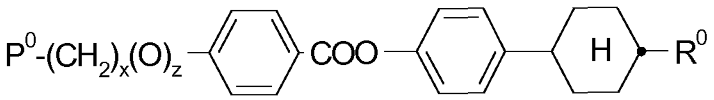

MRM7

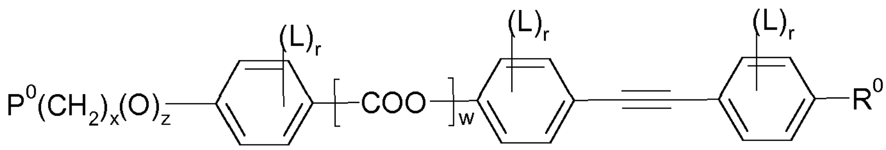

MRM8

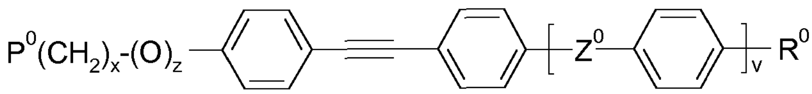

MRM9

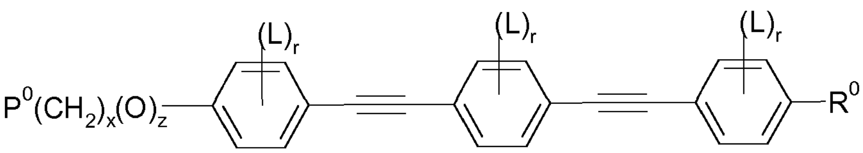

MRM10

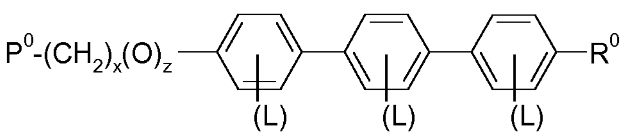

MRM11

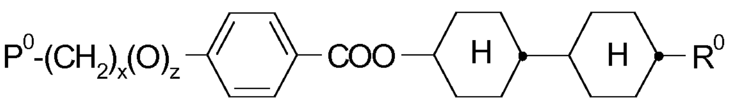

MRM12

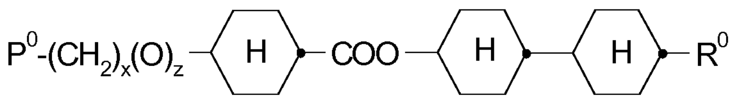

MRM13

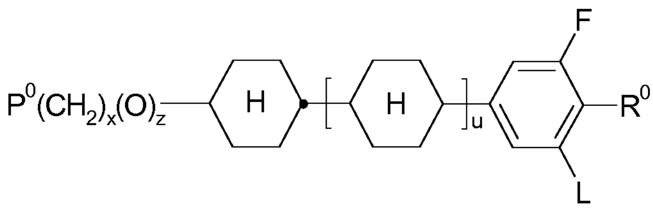

MRM14

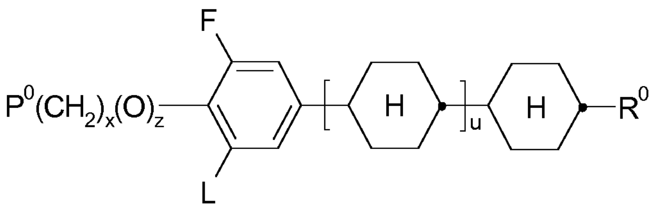

MRM15

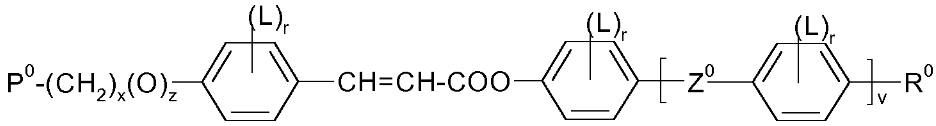

MRM16

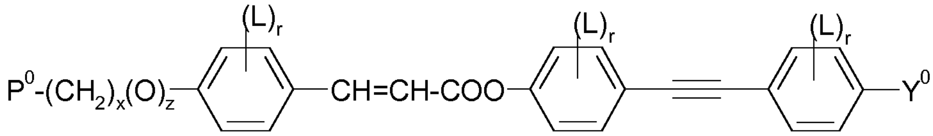

MRM17

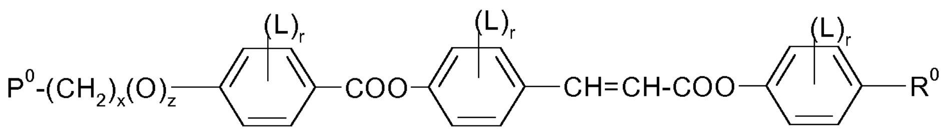

MRM18

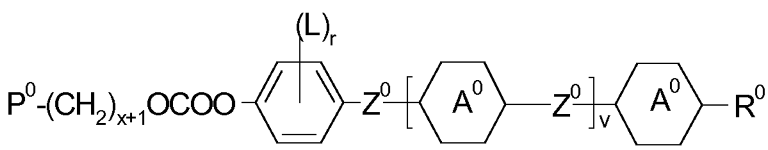

MRM19

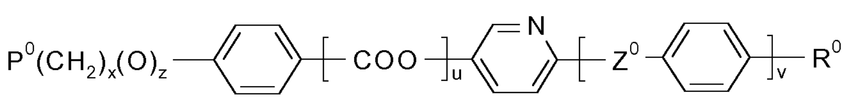

MRM20

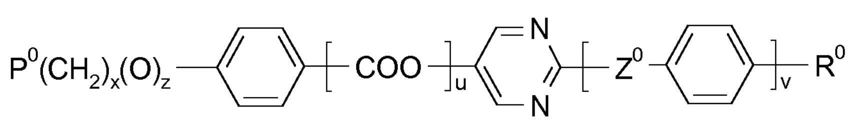

MRM21

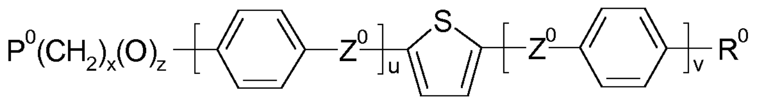

MRM22

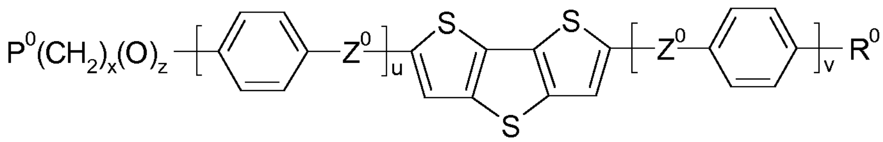

MRM23

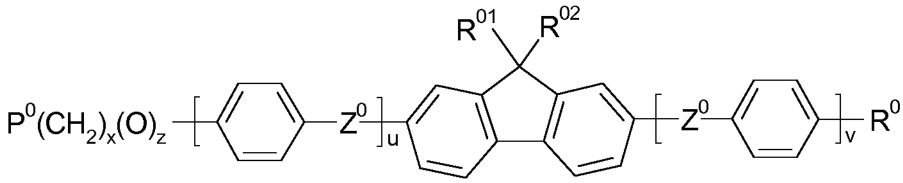

MRM24

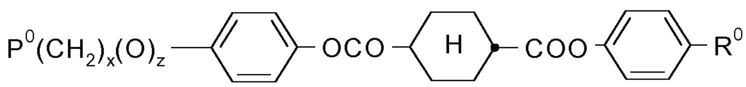

MRM25

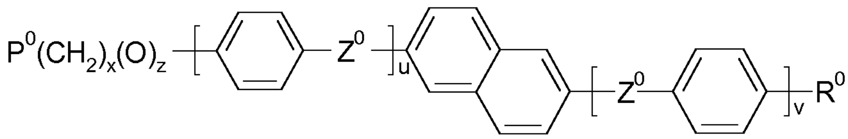

MRM26

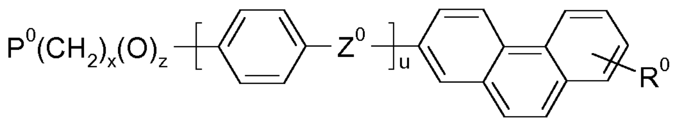

MRM27

wherein $P^0$, L, r, x, y and z are defined as given in claim 3,

$R^0$ is alkyl, alkoxy, thioalkyl, alkylcarbonyl, alkoxycarbonyl, alkylcarbonyloxy or alkoxycarbonyloxy with 1 or more, preferably 1 to 15 C atoms or denotes $Y^0$,
$Y^0$ is F, Cl, CN, $NO_2$, $OCH_3$, OCN, SCN, $SF_5$, or mono-oligo- or polyfluorinated alkyl or alkoxy with 1 to 4 C atoms,
$Z^0$ is -COO-, -OCO-, $-CH_2CH_2-$, $-CF_2O-$, $-OCF_2-$, -CH=CH-,-OCO-CH=CH-, -CH=CH-COO-, or a single bond,
$A^0$ is, in case of multiple occurrence independently of one another, 1,4-phenylene that is unsubstituted or substituted with 1, 2, 3 or 4 groups L, or trans-1,4-cyclohexylene,
u and v are independently of each other 0, 1 or 2,
w is 0 or 1, and

wherein the benzene and naphthalene rings can additionally be substituted with one or more identical or different groups L.

**4.** Polymerisable LC material according to one or more of claims 1 to 3, wherein the proportion of monoreactive polymerizable mesogenic compounds is in the range from 5 to 80% by weight.

**5.** Polymerisable LC material according to one or more of claims 1 to 4, wherein the proportion of direactive polymerizable mesogenic compounds is in the range from 5 to 80 % by weight.

**6.** Polymerisable LC material according to one or more of claims 1 to 5, comprising one or more further antioxidants selected from sterically hindered phenolic antioxidants.

**7.** Polymerisable LC material according to one or more of claims 1 to 6, comprising additionally octadecyl-3-(3,5-di-tert.butyl-4-hydroxyphenyl)-propionate.

**8.** Polymerisable LC material according to one or more of claims 1 to 7, comprising additionally one or more photoinitiators.

**9.** Polymerisable LC material according to one or more of claims 1 to 8, comprising optionally one or more additives selected from the group consisting of, surfactants, further stabilisers, catalysts, sensitizers, inhibitors, chain-transfer agents, co-reacting monomers, reactive thinners, surface-active compounds, lubricating agents, wetting agents, dispersing agents, hydrophobing agents, adhesive agents, flow improvers, degassing or defoaming agents, deaerators, diluents, reactive diluents, auxiliaries, colourants, dyes, pigments and nanoparticles.

**10.** Process for the preparation of the polymerisable LC material according to one or more of claims 1 to 9 comprising the steps of mixing pentaerythritol tetrakis(3,5-di-tert-butyl-4-hydroxyhydrocinnamate) with at least one monoreactive mesogenic compound and with at least one di- or multireactive mesogenic compound.

**11.** Process for the preparation of the of a polymer film by

- providing a layer of a polymerisable LC material according to one or more of claims 1 to 9 onto a substrate,
- polymerising the polymerisable LC material, and
- optionally removing the polymerised LC material from the substrate and/or optionally providing it onto another substrate.

**12.** Polymer film obtainable from a polymerisable LC material according to one or more of claims 1 to 9 by a process comprising the steps

- providing a layer of the polymerisable LC material onto a substrate,
- polymerising the LC material, and
- optionally, removing the polymerised LC material from the substrate and/or optionally providing it onto another substrate.

**13.** Polymer film according to claim 12, **characterized in that** the LC material is uniformly aligned.

**14.** Method of increasing the durability of a polymer film according to claim 12 or 13 obtained from a polymerisable LC material according to one or more of claims 1 to 9 comprising at least one monoreactive mesogenic compound and at least one di- or multireactive mesogenic compound, by adding at least pentaerythritol tetrakis(3,5-di-tert-butyl-4-hydroxyhydrocinnamate) to at least one monoreactive mesogenic compound and to at least one di- or multireactive mesogenic compound, before polymerisation.

**15.** Use of a polymer film according to claim 12 or 13 or a polymerisable LC material according to one or more of claims 1 to 9 in optical, electrooptical, information storage, decorative and security applications, like liquid crystal displays, 3D displays, projection systems, polarisers, compensators, alignment layers, circular polarisers, colour filters, decorative images, liquid crystal pigments, reflective films with spatially varying reflection colours, multicolour images, non-forgeable documents like identity or credit cards or banknotes.

**16.** Optical component or device, polariser, patterned retarder, compensator, alignment layer, circular polariser, colour filter, decorative image, liquid crystal lens, liquid crystal pigment, reflective film with spatially varying reflection colours, multicolour image for decorative or information storage, comprising at least one polymer film according to claim 12 or 13 or a polymerisable LC material according to one or more of claims 1 to 9.

**Patentansprüche**

**1.** Polymerisierbares FK-Material enthaltend mindestens eine monoreaktive mesogene Verbindung, die ausgewählt ist aus der Formel MRM

$$P^1\text{-}Sp^1\text{-}MG\text{-}R \qquad \text{MRM}$$

bei der $P^1$, $Sp^1$ und MG die wie in Formel DRM gegebenen Bedeutungen besitzen,

R F, Cl, Br, I, -CN, $-NO_2$, -NCO, -NCS, -OCN, -SCN, $-C(=O)NR^xR^y$, -C(=O)X, $-C(=O)OR^x$, $-C(=O)R^y$, $-NR^xR^y$,

-OH, $-SF_5$, gegebenenfalls substituiertes Silyl, geradkettiges oder verzweigtes Alkyl, Alkoxy, Alkylcarbonyl, Alkoxycarbonyl, Alkylcarbonyloxy oder Alkoxycarbonyloxy mit 1 bis 12 C-Atomen, bei dem gegebenenfalls ein oder mehrere H-Atome durch F oder Cl ersetzt sind, ist,
X Halogen ist,
$R^x$ und $R^y$ unabhängig voneinander H oder Alkyl mit 1 bis 12 C-Atomen sind,

mindestens eine di- oder multireaktive mesogene Verbindung, die ausgewählt ist aus der Formel DRM

$$P^1\text{-}Sp^1\text{-}MG\text{-}Sp^2\text{-}P^2 \qquad \text{DRM}$$

bei der

$P^1$ und $P^2$ unabhängig voneinander eine polymerisierbare Gruppe bedeuten,
$Sp^1$ und $Sp^2$ unabhängig voneinander eine Spacergruppe oder eine Einfachbindung sind,
MG eine stäbchenförmige mesogene Gruppe ist, die ausgewählt ist aus der Formel MG

$$-(A^1\text{-}Z^1)_n\text{-}A^2- \qquad \text{MG}$$

bei der

$A^1$ und $A^2$, bei mehrfachem Auftreten unabhängig voneinander, eine aromatische oder alicyclische Gruppe bedeuten, die gegebenenfalls ein oder mehrere aus N, O und S ausgewählte Heteroatome enthält und gegebenenfalls ein- oder mehrfach durch $L^1$ substituiert ist,
$L^1$ P-Sp-, F, Cl, Br, I, -CN, $-NO_2$, -NCO, -NCS, -OCN, -SCN, $-C(=O)NR^{00}R^{000}$, $-C(=O)OR^{00}$, $-C(=O)R^{00}$, $-NR^{00}R^{000}$, -OH, $-SF_5$, gegebenenfalls substituiertes Silyl, Aryl oder Heteroaryl mit 1 bis 12 C-Atomen, geradkettiges oder verzweigtes Alkyl, Alkoxy, Alkylcarbonyl, Alkoxycarbonyl, Alkylcarbonyloxy oder Alkoxycarbonyloxy mit 1 bis 12 C-Atomen, bei dem gegebenenfalls ein oder mehrere H-Atome durch F oder Cl ersetzt sind, ist,
$R^{00}$ und $R^{000}$ unabhängig voneinander H oder Alkyl mit 1 bis 12 C-Atomen bedeuten,
$Z^1$, bei mehrfachem Auftreten unabhängig voneinander, -O-, -S-, -CO-, -COO-, -OCO-, -S-CO-, -CO-S-, -O-COO-, $-CO-NR^{00}-$, $-NR^{00}-CO-$, $-NR^{00}-CO-NR^{000}$, $-NR^{00}-CO-O-$, $-O-CO-NR^{00}-$, $-OCH_2-$, $-CH_2O-$, $-SCH_2-$, $-CH_2S-$, $-CF_2O-$, $-OCF_2-$, $-CF_2S-$, $-SCF_2-$, $-CH_2CH_2-$, $-(CH_2)_{n1}$, $-CF_2CH_2-$, $-CH_2CF_2-$, $-CF_2CF_2-$, -CH=N-, -N=CH-, -N=N-, $-CH=CR^{00}-$, $-CY^1=CY^2-$, -C≡C-, -CH=CH-COO-, -OCO-CH=CH- oder eine Einfachbindung bedeutet,
$Y^1$ und $Y^2$ unabhängig voneinander H, F, Cl oder CN bedeuten,
n 1, 2, 3 oder 4 ist und
n1 eine ganze Zahl von 1 bis 10 ist,

und Pentaerythritol-tetrakis(3,5-di-tert-butyl-4-hydroxyhydrocinnamat).

**2.** Polymerisierbares FK-Material nach Anspruch 1, bei dem mindestens eine direaktive mesogene Verbindung ausgewählt ist aus den folgenden Formeln

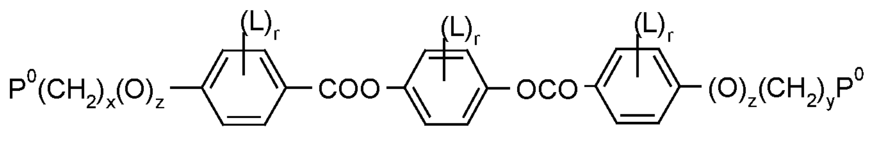

DRMa1

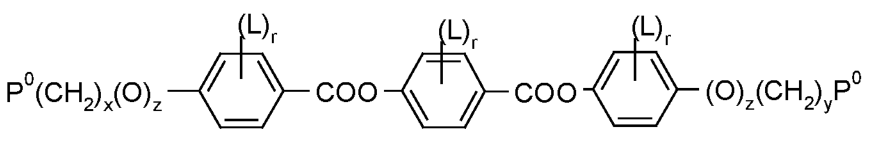

DRMa2

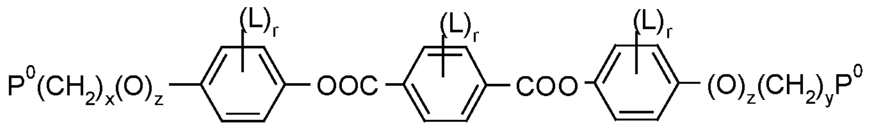
DRMa3

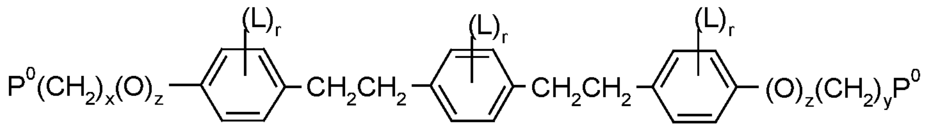
DRMa4

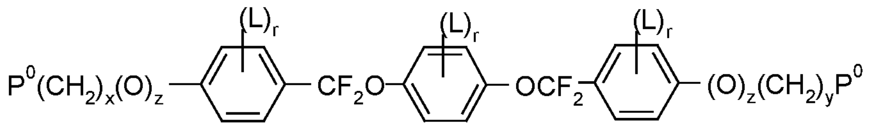
DRMa5

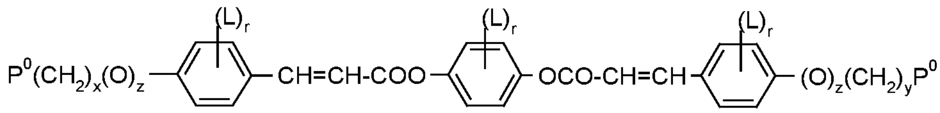
DRMa6

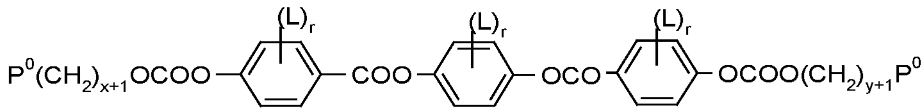
DRMa7

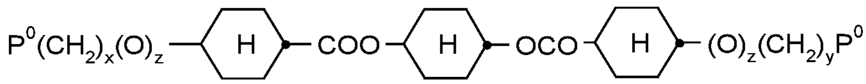
DRMb

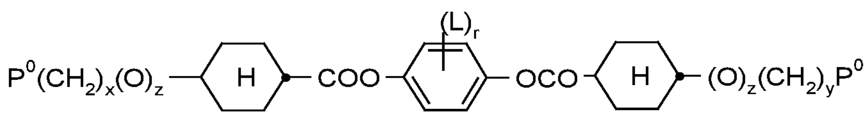
DRMc

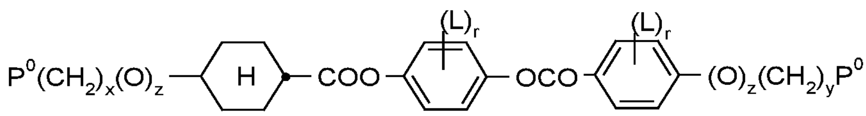
DRMd

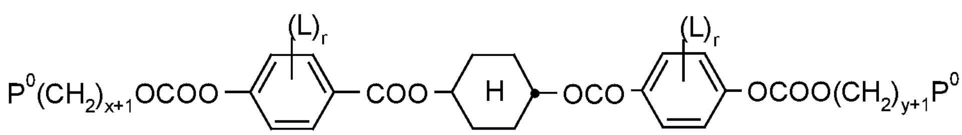
DRMe

bei denen

$P^0$, bei mehrfachem Auftreten unabhängig voneinander, eine Acryl-, Methacryl-, Oxetan-, Epoxy-, Vinyl-, Heptadien-, Vinyloxy-, Propenylether- oder Styrol-gruppe ist,
L bei jedem Auftreten gleich oder verschieden eine der für $L^1$ in Formel DRM gegebenen Bedeutungen besitzt,
r 0, 1, 2, 3 oder 4 ist,
x und y unabhängig voneinander 0 oder gleiche oder verschiedene ganze Zahlen von 1 bis 12 sind,
z jeweils und unabhängig 0 oder 1 ist, wobei z 0 ist, wenn das benachbarte x oder y 0 ist.

**3.** Polymerisierbares FK-Material nach einem von Anspruch 1 oder 2, bei dem mindestens eine monoreaktive mesogene Verbindung ausgewählt ist aus den folgenden Formeln

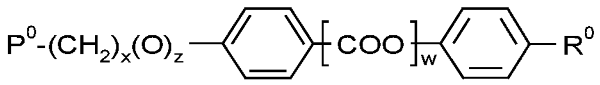

MRM1

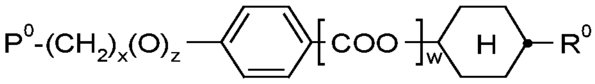

MRM2

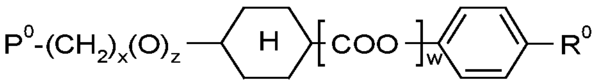

MRM3

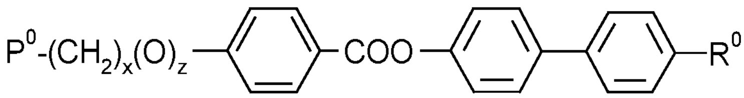

MRM4

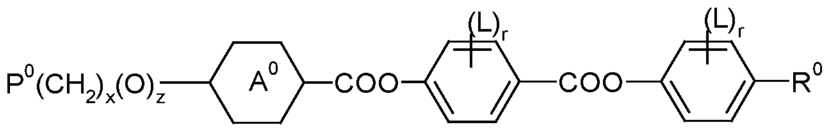

MRM5

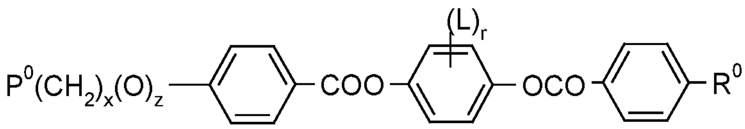

MRM6

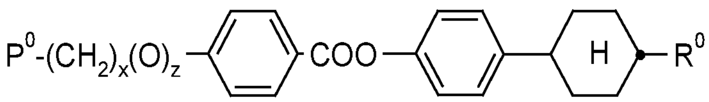

MRM7

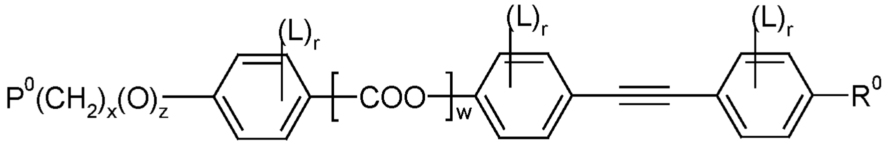

MRM8

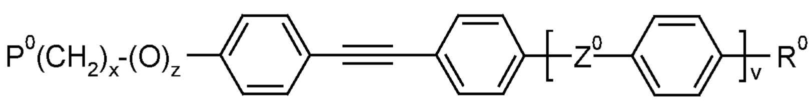

MRM9

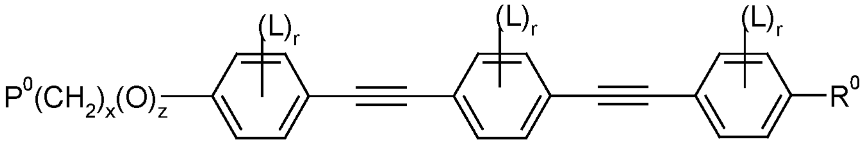

MRM10

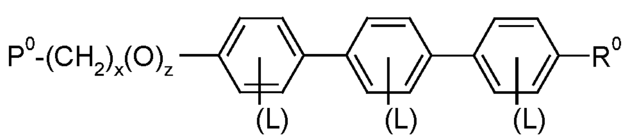

MRM11

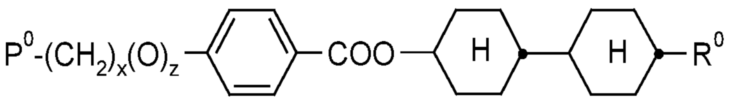

MRM12

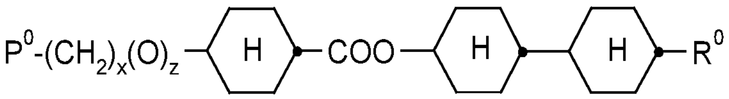

MRM13

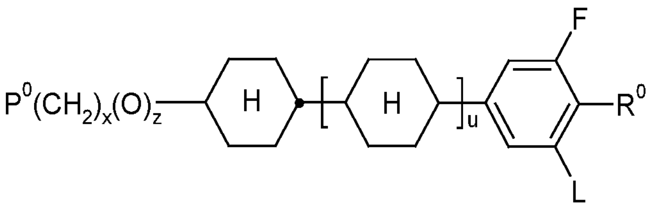

MRM14

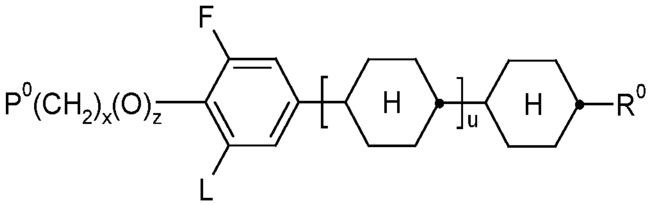

MRM15

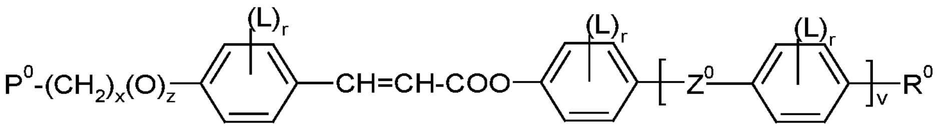

MRM16

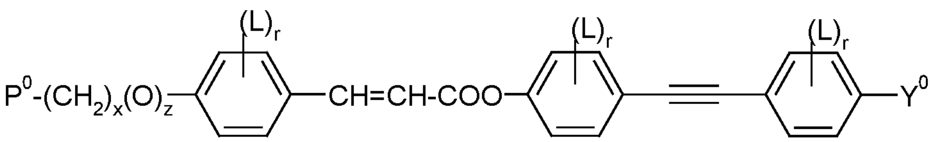

MRM17

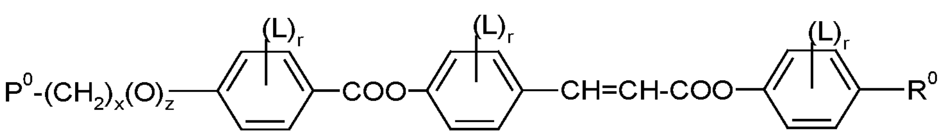

MRM18

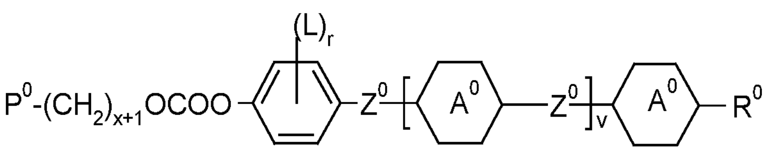

MRM19

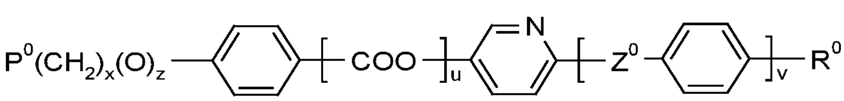

MRM20

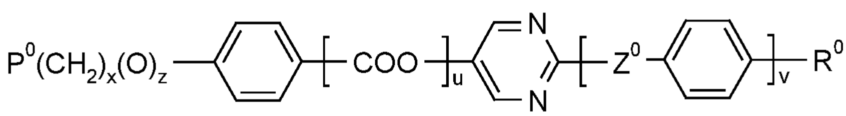

MRM21

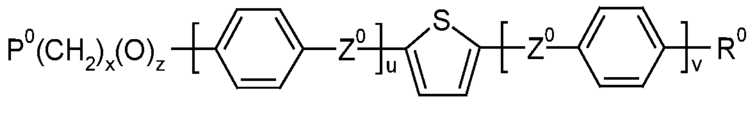

MRM22

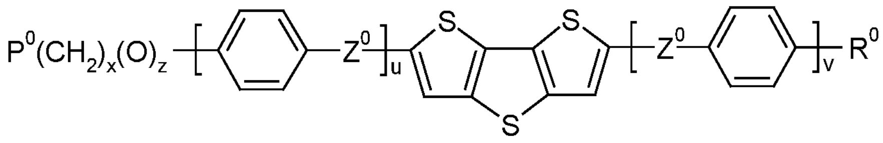

MRM23

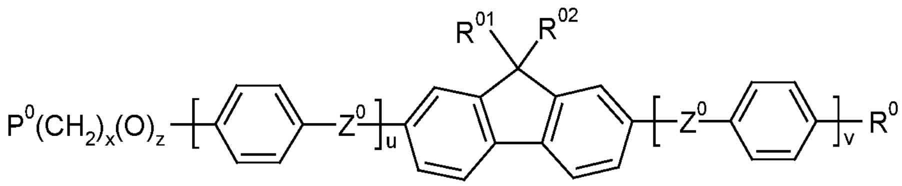

MRM24

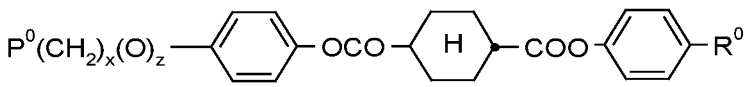

MRM25

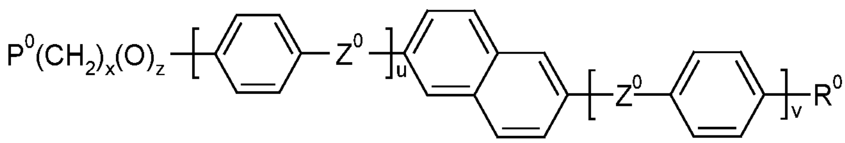

MRM26

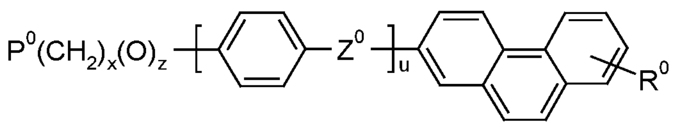

MRM27

bei denen $P^0$, L, r, x, y und z wie in Anspruch 3 gegeben definiert sind,

$R^0$ Alkyl, Alkoxy, Thioalkyl, Alkylcarbonyl, Alkoxycarbonyl, Alkylcarbonyloxy oder Alkoxycarbonyloxy mit 1 oder mehreren, vorzugsweise 1 bis 15 C-Atomen ist oder $Y^0$ bedeutet,
$Y^0$ F, Cl, CN, $NO_2$, $OCH_3$, OCN, SCN, $SF_5$ oder mono-, oligo- oder polyfluoriertes Alkyl oder Alkoxy mit 1 bis 4 C-Atomen ist,
$Z^0$ -COO-, -OCO-, $-CH_2CH_2-$, $-CF_2O-$, $-OCF_2-$, -CH=CH-, -OCO-CH=CH-, -CH=CH-COO- oder eine Einfachbindung ist,
$A^0$, bei mehrfachem Auftreten unabhängig voneinander, 1,4-Phenylen, das unsubstituiert oder mit 1, 2, 3 oder 4 Gruppen L substituiert ist, oder trans-1,4-Cyclohexylen ist,
u und v unabhängig voneinander 0, 1 oder 2 sind,
w 0 oder 1 ist und

bei denen die Benzol- und Naphthalinringe zusätzlich mit einer oder mehreren gleichen oder verschiedenen Gruppen L substituiert sein können.

**4.** Polymerisierbares FK-Material nach einem oder mehreren der Ansprüche 1 bis 3, bei dem der Anteil an monoreaktiven polymerisierbaren mesogenen Verbindungen im Bereich von 5 bis 80 Gew.-% liegt.

**5.** Polymerisierbares FK-Material nach einem oder mehreren der Ansprüche 1 bis 4, bei dem der Anteil an direaktiven polymerisierbaren mesogenen Verbindungen im Bereich von 5 bis 80 Gew.-% liegt.

**6.** Polymerisierbares FK-Material nach einem oder mehreren der Ansprüche 1 bis 5, enthaltend ein oder mehrere weitere Antioxidantien, die aus sterisch gehinderten phenolischen Antioxidantien ausgewählt sind.

**7.** Polymerisierbares FK-Material nach einem oder mehreren der Ansprüche 1 bis 6, zusätzlich enthaltend Octadecyl-3-(3,5-di-tert-butyl-4-hydroxyphenyl)-propionat.

**8.** Polymerisierbares FK-Material nach einem oder mehreren der Ansprüche 1 bis 7, zusätzlich enthaltend einen oder mehrere Photoinitiatoren.

**9.** Polymerisierbares FK-Material nach einem oder mehreren der Ansprüche 1 bis 8, gegebenenfalls enthaltend einen oder mehrere Zusatzstoffe, die ausgewählt sind aus der Gruppe bestehend aus Tensiden, weiteren Stabilisatoren, Katalysatoren, Sensibilisatoren, Hemmstoffen, Kettenüberträgern, co-reagierenden Monomeren, reaktiven Streckmitteln, oberflächenaktiven Verbindungen, Schmiermitteln, Netzmitteln, Dispergiermitteln, Hydrophobiermitteln, Haftmitteln, Fließverbesserern, Entgasungs- oder Entschäumungsmitteln, Entlüftern, Verdünnern, Reaktivverdünnern, Hilfsstoffen, Farbmitteln, Farbstoffen, Pigmenten und Nanoteilchen.

**10.** Verfahren zur Herstellung des polymerisierbaren FK-Materials nach einem oder mehreren der Ansprüche 1 bis 9, umfassend die Schritte des Mischens von Pentaerythritol-tetrakis(3,5-di-tert-butyl-4-hydroxyhydrocinnamat) mit mindestens einer monoreaktiven mesogenen Verbindung und mit mindestens einer di- oder multireaktiven mesogenen Verbindung.

**11.** Verfahren zur Herstellung einer Polymerfolie durch

- Bereitstellen einer Schicht eines polymerisierbaren FK-Materials nach einem oder mehreren der Ansprüche 1 bis 9 auf einem Substrat,
- Polymerisieren des polymerisierbaren FK-Materials und
- gegebenenfalls Entfernen des polymerisierten FK-Materials von dem Substrat und/oder gegebenenfalls Bereitstellen desselben auf einem anderen Substrat.

**12.** Polymerfolie erhältlich aus einem polymerisierbaren FK-Material nach einem oder mehreren der Ansprüche 1 bis 9 durch ein Verfahren umfassend die Schritte

- Bereitstellen einer Schicht des polymerisierbaren FK-Materials auf einem Substrat,
- Polymerisieren des FK-Materials und
- gegebenenfalls Entfernen des polymerisierten FK-Materials von dem Substrat und/oder gegebenenfalls Bereitstellen desselben auf einem anderen Substrat.

**13.** Polymerfolie nach Anspruch 12, **dadurch gekennzeichnet, dass** das FK-Material einheitlich orientiert ist.

**14.** Verfahren zur Erhöhung der Haltbarkeit einer Polymerfolie nach Anspruch 12 oder 13 erhalten aus einem polymerisierbaren FK-Material nach einem oder mehreren der Ansprüche 1 bis 9 enthaltend mindestens eine monoreaktive mesogene Verbindung und mindestens eine di- oder multireaktive mesogene Verbindung, durch Zugabe von mindestens Pentaerythritol-tetrakis(3,5-di-tert-butyl-4-hydroxyhydrocinnamat) zu mindestens einer monoreaktiven mesogenen Verbindung und zu mindestens einer di- oder multireaktiven mesogenen Verbindung vor der Polymerisation.

**15.** Verwendung einer Polymerfolie nach Anspruch 12 oder 13 oder eines polymerisierbaren FK-Materials nach einem oder mehreren der Ansprüche 1 bis 9 in optischen, elektrooptischen, Datenspeicher-, dekorativen und Sicherheitsanwendungen, wie Flüssigkristallanzeigen, 3D-Anzeigen, Projektionssystemen, Polarisatoren, Kompensatoren, Orientierungsschichten, Zirkularpolarisatoren, Farbfiltern, dekorativen Abbildungen, Flüssigkristallpigmenten, reflektierenden Folien mit räumlich variierenden Reflexionsfarben, mehrfarbigen Abbildungen, fälschungssicheren Dokumenten wie Ausweisen oder Kreditkarten oder Banknoten.

**16.** Optische Komponente oder Vorrichtung, Polarisator, strukturierter Verzögerer, Kompensator, Orientierungsschicht, Zirkularpolarisator, Farbfilter, dekorative Abbildung, Flüssigkristalllinse, Flüssigkristallpigment, reflektierende Folie mit räumlich variierenden Reflexionsfarben, mehrfarbige Abbildung für dekorative Anwendungen oder Informationsspeicherung, enthaltend mindestens eine Polymerfolie nach Anspruch 12 oder 13 oder ein polymerisierbares FK-Material nach einem oder mehreren der Ansprüche 1 bis 9.

## Revendications

1. Matériau LC polymérisable comprenant au moins un composé mésogène monoréactif qui est sélectionné à partir de la formule MRM,

$$P^1\text{-}Sp^1\text{-}MG\text{-}R \qquad MRM$$

dans laquelle $P^1$, $Sp^1$ et MG présentent les significations telles que données selon la formule DRM,

R est F, Cl, Br, I, -CN, $-NO_2$, -NCO, -NCS, -OCN, -SCN, $-C(=O)NR^xR^y$, -C(=O)X, $-C(=O)OR^x$, $-C(=O)R^y$, $-NR^xR^y$, -OH, $-SF_5$, silyle en option substitué, alkyle, alcoxy, alkylcarbonyle, alcoxycarbonyle, alkylcarbonyloxy ou alcoxycarbonyloxy en chaîne droite ou ramifié qui comporte de 1 à 12 atome(s) de C, dans lequel un ou plusieurs atome(s) de H est/sont en option remplacé(s) par F ou par Cl,
X est halogène,
$R^x$ et $R^y$ sont, de manière indépendante l'un de l'autre, H ou alkyle qui comporte de 1 à 12 atome(s) de C,

au moins un composé mésogène di- ou multiréactif qui est sélectionné à partir de la formule DRM

$$P^1\text{-}Sp^1\text{-}MG\text{-}Sp^2\text{-}P^2 \qquad DRM$$

dans laquelle

$P^1$ et $P^2$ représentent, de manière indépendante l'un de l'autre, un groupe polymérisable,
$Sp^1$ et $Sp^2$ sont, de manière indépendante l'un de l'autre, un groupe d'espaceur ou une liaison simple,
MG est un groupe mésogène en forme de tige qui est sélectionné à partir de la formule MG,

$$-(A^1\text{-}Z^1)_n\text{-}A^2\text{-} \qquad MG$$

dans laquelle

$A^1$ et $A^2$ représentent, dans le cas de multiples occurrences, de manière indépendante les unes des autres, un groupe aromatique ou alicyclique, lequel contient en option un ou plusieurs hétéroatome(s) qui est/sont sélectionné(s) parmi N, O et S, et est en option mono- ou polysubstitué par $L^1$,
$L^1$ est P-Sp-, F, Cl, Br, I, -CN, $-NO_2$, -NCO, -NCS, -OCN, -SCN, $-C(=O)NR^{00}R^{000}$, $-C(=O)OR^{00}$, $-C(=O)R^{00}$, $-NR^{00}R^{000}$, -OH, $-SF_5$, silyle, aryle ou hétéroaryle en option substitué qui comporte de 1 à 12 atome(s) de C, alkyle, alcoxy, alkylcarbonyle, alcoxycarbonyle, alkylcarbonyloxy ou alcoxycarbonyloxy en chaîne droite ou ramifié qui comporte de 1 à 12 atome(s) de C, où un ou plusieurs atome(s) de H est/sont en option remplacé(s) par F ou par Cl,
$R^{00}$ et $R^{000}$ représentent, de manière indépendante l'un de l'autre, H ou alkyle qui comporte de 1 à 12 atome(s) de C,
$Z^1$ représente, dans le cas de multiples occurrences, de manière indépendante les unes des autres, -O-, -S-, -CO-, -COO-, -OCO-, -S-CO-, -CO-S-, -O-COO-, $-CO-NR^{00}-$, $-NR^{00}-CO-$, $-NR^{00}-CO-NR^{000}$, $-NR^{00}-CO-O-$, $-O-CO-NR^{00}-$, $-OCH_2-$, $-CH_2O-$, $-SCH_2-$, $-CH_2S-$, $-CF_2O-$, $-OCF_2-$, $-CF_2S-$, $-SCF_2-$, $-CH_2CH_2-$, $-(CH_2)_{n1}$, $-CF_2CH_2-$, $-CH_2CF_2-$, $-CF_2CF_2-$, -CH=N-, -N=CH-, -N=N-, $-CH=CR^{00}-$, $-CY^1=CY^2-$, $-C\equiv C-$, -CH=CH-COO-, -OCO-CH=CH- ou une liaison simple,
$Y^1$ et $Y^2$ représentent, de manière indépendante l'un de l'autre, H, F, Cl ou CN,
n est 1, 2, 3 ou 4, et
n1 est un entier de 1 à 10,

et du tétrakis(3,5-di-tert-butyl-4-hydroxyhydrocinnamate) de pentaérythritol.

2. Matériau LC polymérisable selon la revendication 1, dans lequel au moins un composé mésogène diréactif est sélectionné parmi les formules qui suivent,

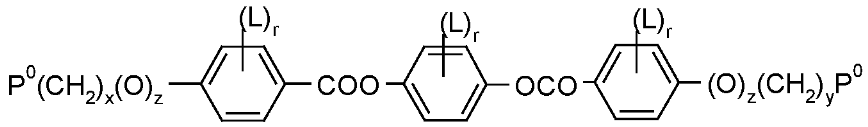
DRMa1

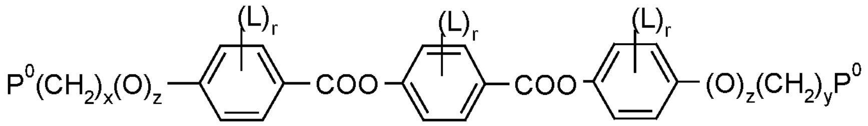
DRMa2

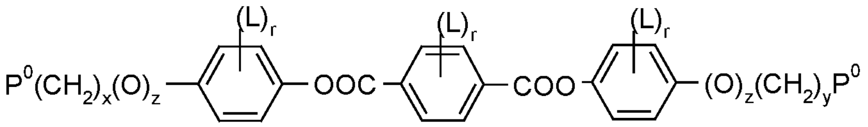
DRMa3

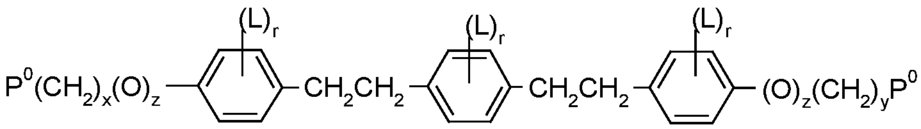
DRMa4

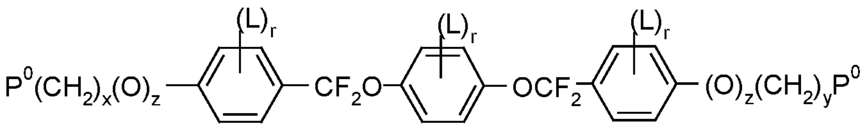
DRMa5

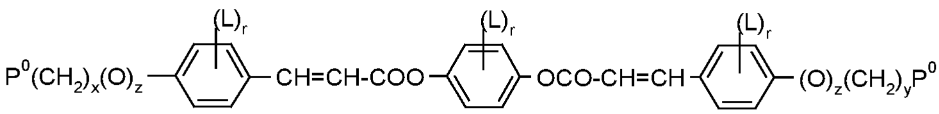
DRMa6

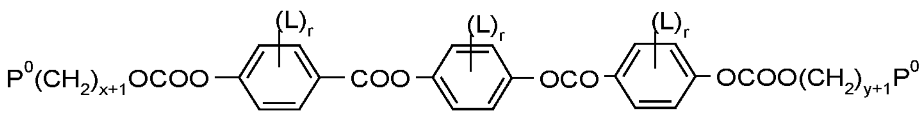
DRMa7

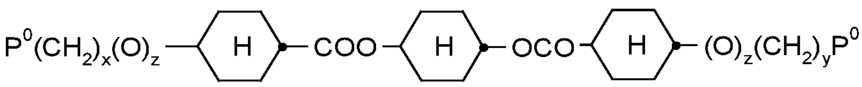
DRMb

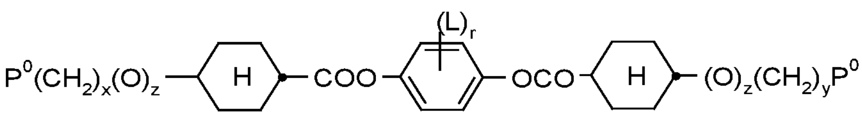
DRMc

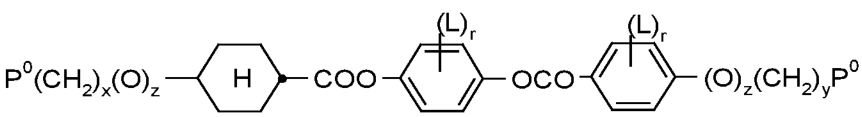
DRMd

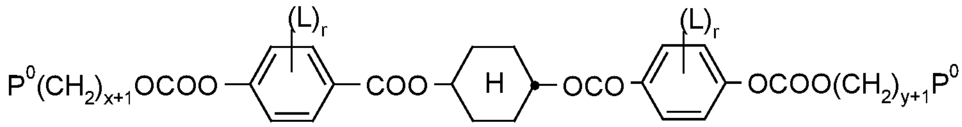 DRMe

dans lesquelles

$P^0$ est, dans le cas de multiples occurrences, de manière indépendante les unes des autres, un groupe acryle, méthacryle, oxétane, époxy, vinyle, heptadiène, vinyloxy, éther de propényle ou styrène,
L présente pour chaque occurrence, de manière identique ou différente, l'une des significations qui ont été données pour $L^1$ selon la formule DRM,
r est 0, 1, 2, 3 ou 4,
x et y sont, de manière indépendante l'un de l'autre, 0 ou sont des entiers identiques ou différents de 1 à 12,
z est, dans chaque cas et de manière indépendante, 0 ou 1, z étant 0 si le x ou y adjacent est 0.

**3.** Matériau LC polymérisable selon l'une des revendications 1 ou 2, dans lequel au moins un composé mésogène monoréactif est sélectionné parmi les formules qui suivent,

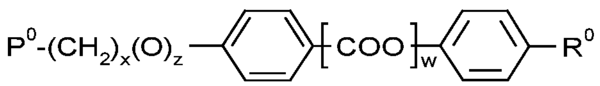 MRM1

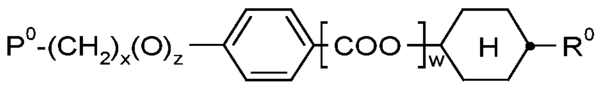 MRM2

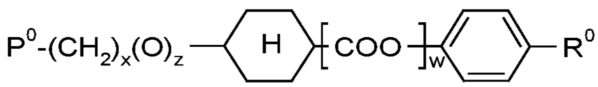 MRM3

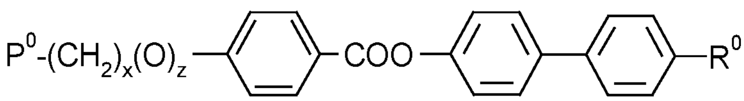 MRM4

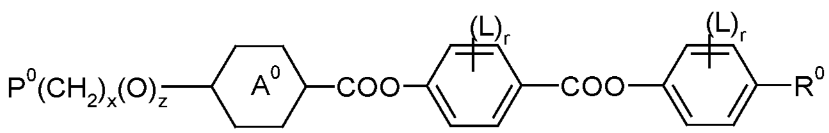 MRM5

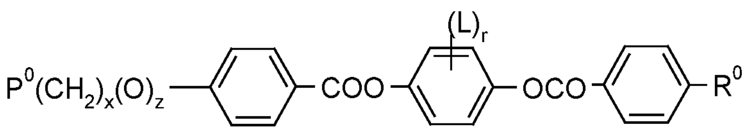 MRM6

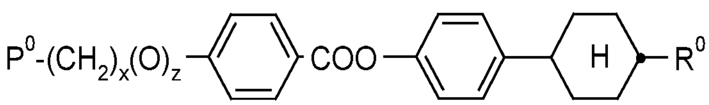 MRM7

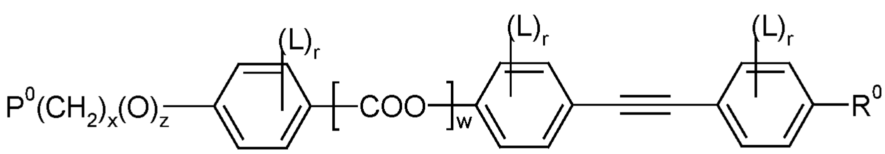 MRM8

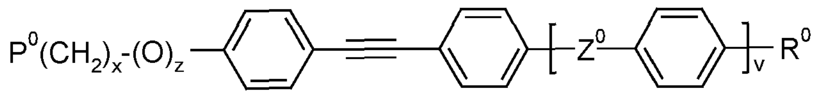

MRM9

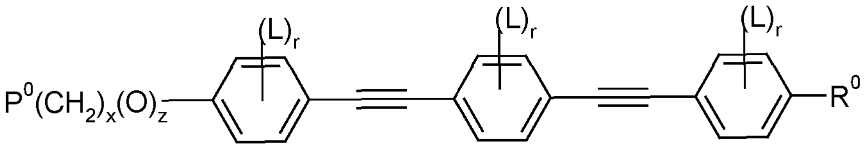

MRM10

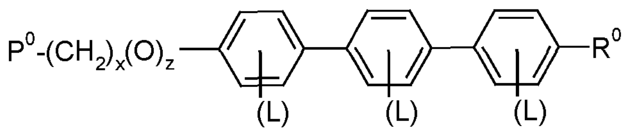

MRM11

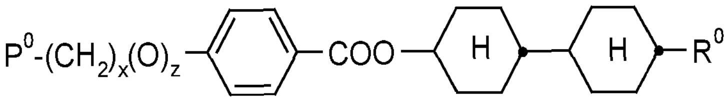

MRM12

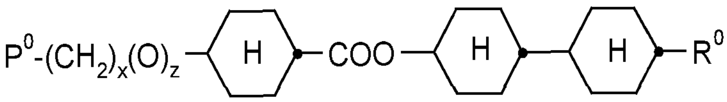

MRM13

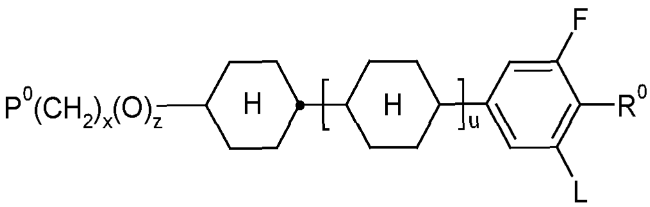

MRM14

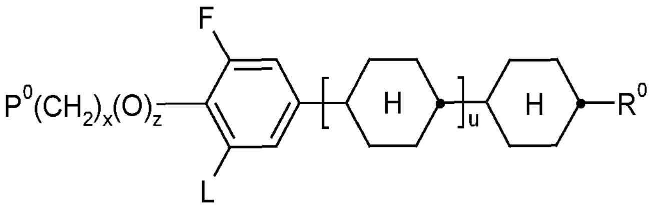

MRM15

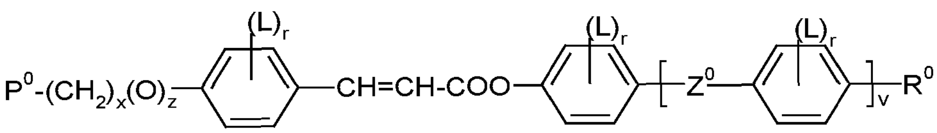

MRM16

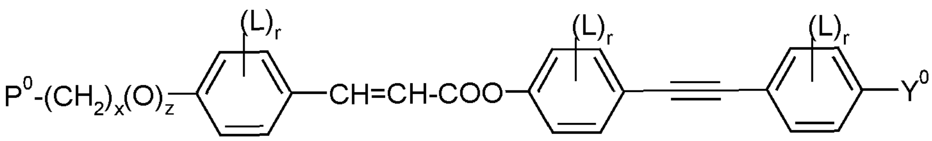

MRM17

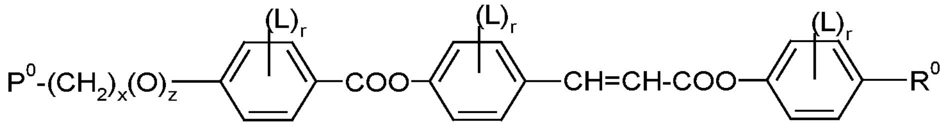

MRM18

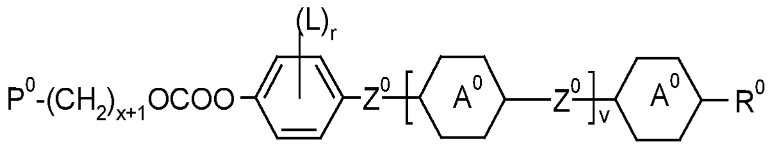

MRM19

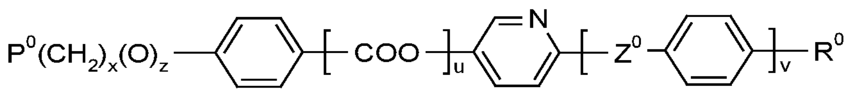

MRM20

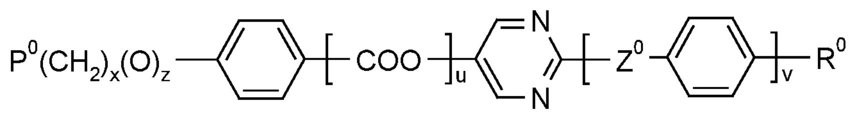

MRM21

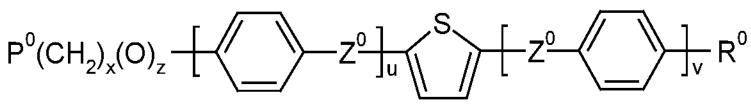

MRM22

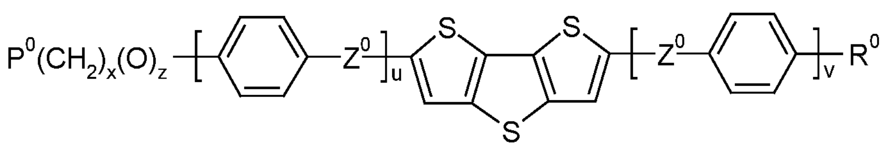

MRM23

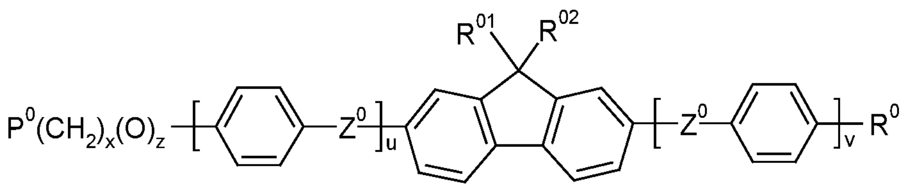

MRM24

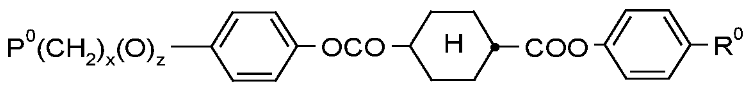

MRM25

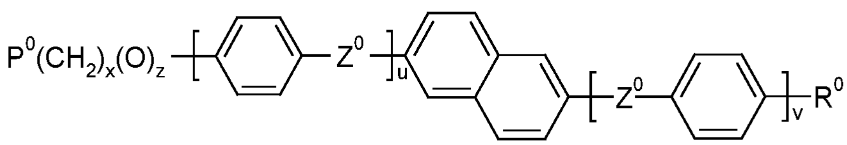

MRM26

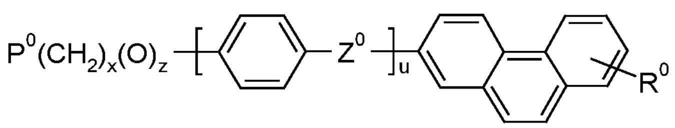

MRM27

dans lesquelles $P^0$, L, r, x, y et z sont définis comme il a été déterminé selon la revendication 3,

$R^0$ est alkyle, alcoxy, thioalkyle, alkylcarbonyle, alcoxycarbonyle, alkylcarbonyloxy ou alcoxycarbonyloxy qui comporte 1 atome de C ou plusieurs atomes de C, de préférence de 1 à 15 atome(s) de C ou représente $Y^0$,

$Y^0$ est F, Cl, CN, $NO_2$, $OCH_3$, OCN, SCN, $SF_5$, ou alkyle ou alcoxy mono- oligo- ou polyfluoré qui comporte de 1 à 4 atome(s) de C,
$Z^0$ est -COO-, -OCO-, $-CH_2CH_2-$, $-CF_2O-$, $-OCF_2-$, -CH=CH-,-OCO-CH=CH-, -CH=CH-COO-, ou une liaison simple,
$A^0$ est, dans le cas de multiples occurrences, de manière indépendante les unes des autres, 1,4-phénylène qui est non substitué ou substitué par 1, 2, 3 ou 4 groupe(s) L, ou trans-1,4-cyclohexylène,
u et v sont, de manière indépendante l'un de l'autre, 0, 1 ou 2,
w est 0 ou 1, et

dans lequel les cycles benzène et naphtalène peuvent de façon additionnelle être substitués par un ou plusieurs groupes L identiques ou différents.

**4.** Matériau LC polymérisable selon une ou plusieurs des revendications 1 à 3, dans lequel la proportion de composés mésogènes polymérisables monoréactifs s'inscrit à l'intérieur de la plage qui va de 5 % à 80 % en poids.

**5.** Matériau LC polymérisable selon une ou plusieurs des revendications 1 à 4, dans lequel la proportion de composés mésogènes polymérisables diréactifs s'inscrit à l'intérieur de la plage qui va de 5 % à 80 % en poids.

**6.** Matériau LC polymérisable selon une ou plusieurs des revendications 1 à 5, comprenant un ou plusieurs autre(s) antioxydant(s) qui est/sont sélectionné(s) parmi les antioxydants phénoliques stériquement encombrés.

**7.** Matériau LC polymérisable selon une ou plusieurs des revendications 1 à 6, comprenant de façon additionnelle de l'octadécyl-3-(3,5-di-tert.butyl-4-hydroxyphényl)-propionate.

**8.** Matériau LC polymérisable selon une ou plusieurs des revendications 1 à 7, comprenant de façon additionnelle un ou plusieurs photoinitiateur(s).

**9.** Matériau LC polymérisable selon une ou plusieurs des revendications 1 à 8, comprenant en option un ou plusieurs additif(s) qui est/sont sélectionné(s) parmi le groupe qui est constitué par les agents tensioactifs, d'autres stabilisateurs, les catalyseurs, les agents de sensibilisation, les inhibiteurs, les agents de transfert de chaîne, les monomères de co-réaction, les amincisseurs réactifs, les composés actifs en surface, les agents de lubrification, les agents d'humidification, les agents de dispersion, les agents hydrophobes, les agents adhésifs, les agents améliorant le fluage, les agents de dégazage ou de démoussage, les agents de désaération, les diluants, les diluants réactifs, les agents auxiliaires, les colorants, les agents de coloration, les pigments et les nanoparticules.

**10.** Procédé pour la préparation du matériau LC polymérisable selon une ou plusieurs des revendications 1 à 9, comprenant les étapes constituées par le mélange de tétrakis(3,5-di-tert-butyl-4-hydroxyhydrocinnamate) de pentaérythritol avec au moins un composé mésogène monoréactif et avec au moins un composé mésogène di- ou multiréactif.

**11.** Procédé pour la préparation d'un film en polymère au moyen des étapes constituées par

- l'application d'une couche en un matériau LC polymérisable selon une ou plusieurs des revendications 1 à 9 sur un substrat,
- la polymérisation du matériau LC polymérisable, et
- en option, l'enlèvement du matériau LC polymérisé hors du substrat et/ou en option, son application sur un autre substrat.

**12.** Film en polymère pouvant être obtenu à partir d'un matériau LC polymérisable selon une ou plusieurs des revendications 1 à 9 au moyen d'un procédé qui comprend les étapes constituées par

- l'application d'une couche du matériau LC polymérisable sur un substrat,
- la polymérisation du matériau LC, et
- en option, l'enlèvement du matériau LC polymérisé hors du substrat et/ou en option, son application sur un autre substrat.

**13.** Film en polymère selon la revendication 12, **caractérisé en ce que** le matériau LC est aligné de manière uniforme.

14. Procédé d'augmentation de la durée de vie d'un film en polymère selon la revendication 12 ou 13, lequel est obtenu à partir d'un matériau LC polymérisable selon une ou plusieurs des revendications 1 à 9, lequel comprend au moins un composé mésogène monoréactif et au moins un composé mésogène di- ou multiréactif, par ajout au moins de tétrakis(3,5-di-tert-butyl-4-hydroxyhydrocinnamate) de pentaérythritol à au moins un composé mésogène monoréactif et à au moins un composé mésogène di- ou multiréactif, avant polymérisation.

15. Utilisation d'un film en polymère selon la revendication 12 ou 13 ou d'un matériau LC polymérisable selon une ou plusieurs des revendications 1 à 9 dans les applications optiques, électrooptiques, de stockage d'informations, décoratives et de sécurité, telles que les affichages à cristaux liquides, les affichages 3D, les systèmes de projection, les polariseurs, les compensateurs, les couches d'alignement, les polariseurs circulaires, les filtres couleur, les images décoratives, les pigments de cristaux liquides, les films réfléchissants présentant des couleurs de réflexion qui varient spatialement, les images à multiples couleurs, les documents non falsifiables tels que les cartes d'identité ou les cartes de crédit ou les billets de banque.

16. Composant ou dispositif optique, polariseur, retardateur structuré à motif(s), compensateur, couche d'alignement, polariseur circulaire, filtre couleur, image décorative, lentille à cristaux liquides, pigment à cristaux liquides, film réfléchissant présentant des couleurs de réflexion qui varient spatialement, image à multiples couleurs pour les applications décoratives ou le stockage d'informations, comprenant au moins un film en polymère selon la revendication 12 ou 13 ou un matériau LC polymérisable selon une ou plusieurs des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0940707 B1
- EP 0888565 B1
- GB 2329393 B1
- WO 200986911 A1
- JP 5354238 B
- JP 2008044989 A
- US 7060200 B1
- US 20060172090 A1
- WO 9322397 A
- EP 0261712 A
- DE 19504224
- WO 9522586 A
- WO 9700600 A
- US 5518652 A
- US 5750051 A
- US 5770107 A
- US 6514578 B
- US 5602661 A
- US 5389698 A
- US 6717644 B
- WO 0120394 A
- GB 2315072 A
- WO 9804651 A
- EP 0829744 A
- EP 0887666 A2
- EP 0887692 A
- US 6046849 A
- US 6437915 B


### Non-patent literature cited in the description


- **C. TSCHIERSKE ; G. PELZL ; S. DIELE.** *Angew. Chem.,* 2004, vol. 116, 6340-6368
- **I. SAGE.** Thermotropic Liquid Crystals. John Wiley & Sons, 1987, 75-77
- **T. UCHIDA ; H. SEKI.** Liquid Crystals - Applications and Uses. World Scientific Publishing, 1992, vol. 3, 1-63
- **J. COGNARD.** *Mol. Cryst. Liq. Cryst,* 1981, vol. 78 (1), 1-77
- *Proceedings o the SID 20th International Display Research Conference,* 2000, 280
- **HOUBEN-WEYL.** Methoden der Organischen Chemie [Methods of Organic Chemistry. Georg-Thieme-Verlag
- Merck Liquid Crystals, Physical Properties of Liquid Crystals. Merck KGaA, November 1997